# EUROPEAN PATENT SPECIFICATION

(11) **EP 3 960 365 B1**
(45) Date of publication and mention of the grant of the patent: **05.11.2025**
(21) Application number: 19926583.6
(22) Date of filing: 24.04.2019
(51) Int. Cl.: B23K 26/00, B23K 26/03, B23K 26/06, B23K 26/0622, B23K 26/082, B23K 26/352, B23K 31/12, B23K 101/00, B23K 101/34, B23K 103/00

(54) **PROCESSING SYSTEM AND INSPECTION SYSTEM**
VERARBEITUNGSSYSTEM UND INSPEKTIONSSYSTEM
SYSTÈME DE TRAITEMENT ET SYSTÈME D'INSPECTION

(43) Date of publication of application: 02.03.2022
(73) Proprietor: NIKON CORPORATION, Tokyo 140-8601 (JP)
(72) Inventor: SATO, Shinji, Tokyo 108-6290 (JP)
(74) Representative: Hoffmann Eitle
(86) International application number: PCT/JP2019/017402
(87) International publication number: WO 2020/217338

(56) References cited:
- DE-C1- 19 636 458
- JP-A- 2005 030 822
- JP-A- 2009 195 968
- JP-A- 2011 530 443
- JP-A- 2015 093 305
- JP-A- S63 130 289
- US-A1- 2010 246 931
- US-A1- 2017 144 255

## Description

The present invention relates to an inspection device, an inspection method, and a processing system that is configured to process an object with processing light and an inspection system that inspects an object, see claims 1, 18, 13 and 19 respectively.

### Background Art

A US4,994,639B (Patent Literature 1) discloses, as a processing system that is configured to process an object, a processing system that forms a structure by irradiating a surface of an object with processing light. This type of processing system is required to properly process the object.

Each of US 2010/246931 A1 (describing the preamble of claims 1, 18, 13 and 19) and US 2017/144255 A1 form part of the state of the art relative to the present disclosure.

### Summary of Invention

A first aspect of the present invention provides an inspection system as recited in claim 1 below.

A second aspect provides a processing system as recited in claim 13 below.

A third aspect provides an inspection method as recited in claim 18 below.

A fourth aspect provides a processing method as recited in claim 19 below.

The dependent claims are directed to embodiments and implementations of each respective aspect.

### Brief Description of Drawings

[FIG. 1] FIG. 1 is a cross-sectional view that schematically illustrates an entire structure of a processing system in a first embodiment.
[FIG. 2] Each of FIG. 2A and FIG. 2B is a cross-sectional view that schematically illustrates an aspect of a processing of a coat of paint formed on a surface of a processing target object.
[FIG. 3] FIG. 3A is a cross-sectional view that schematically illustrates a light irradiation apparatus of the processing system in the first embodiment, and each of FIG 3B and FIG. 3C is a cross-sectional view that illustrates a structure of a light source system of the light irradiation apparatus.
[FIG. 4] FIG. 4 is a cross-sectional view that illustrates an imaging apparatus of an extraneous substance measurement apparatus.
[FIG. 5] FIG. 5 is a cross-sectional view that illustrates an optical reception apparatus of an extraneous substance measurement apparatus.
[FIG. 6] FIG. 6A is a cross-sectional view that illustrates a cross-sectional surface of a riblet structure formed by the processing apparatus in the first embodiment and FIG. 6B is a perspective view that illustrates the riblet structure formed by the processing apparatus in the first embodiment.
[FIG. 7] Each of FIG. 7A and FIG. 7B is a front view that illustrates an airplane that is one example of the processing target object at which the riblet structure is formed and FIG. 7C is a side view that illustrates the airplane that is one example of the processing target object at which the riblet structure is formed.
[FIG. 8] FIG. 8 is a plan view that illustrates a plurality of processing shot areas that are set on a surface of the coat of paint.
[FIG. 9] FIG. 9 is a cross-sectional view that illustrates the processing apparatus that performs one step of a processing operation for forming the riblet structure.
[FIG. 10] FIG. 10A is a cross-sectional view that illustrates the processing apparatus that performs one step of the processing operation for forming the riblet structure and FIG. 10B is a plan view that illustrates the surface of the coat of paint on which one step of the processing operation illustrated in FIG. 10A is performed.
[FIG. 11] FIG. 11 is a plan view that illustrates a sweeping path of the processing light (namely, a moving path of a target irradiation area) during a period when a scan operation and a step operation are repeated.
[FIG. 12] FIG. 12 is a cross-sectional view that illustrates the processing apparatus that performs one step of the processing operation for forming the riblet structure.
[FIG. 13] FIG. 13A is a cross-sectional view that illustrates the processing apparatus that performs one step of the processing operation for forming the riblet structure and FIG. 13B is a plan view that illustrates the surface of the coat of paint on which one step of the processing operation illustrated in FIG. 13 A is performed.
[FIG. 14] FIG. 14 is a cross-sectional view that illustrates the processing apparatus that performs one step of the processing operation for forming the riblet structure.
[FIG. 15] FIG. 15 is a cross-sectional view that illustrates the processing apparatus that performs one step of the processing operation for forming the riblet structure.
[FIG. 16] FIG. 16 is a cross-sectional view that illustrates the processing apparatus that performs one step of the processing operation for forming the riblet structure.
[FIG. 17] FIG. 17 is a cross-sectional view that illustrates the processing apparatus that performs one step of the processing operation for forming the riblet structure.
[FIG. 18] FIG. 18 is a cross-sectional view that illustrates the processing apparatus that performs one step of the processing operation for forming the riblet structure.
[FIG. 19] FIG. 19 is a cross-sectional view that illustrates the processing apparatus that performs one step of the processing operation for forming the riblet structure.
[FIG. 20] FIG. 20 is a plan view that illustrates two processing shot areas that are set on the coat of paint.
[FIG. 21] FIG. 21 is a plan view that illustrate the moving path of the target irradiation area by the processing operation that is performed in a certain processing shot area.
[FIG. 22] FIG. 22 is a cross-sectional view that schematically illustrates an entire structure of a processing system in a second embodiment.
[FIG. 23] FIG. 23 is a plan view that illustrates three processing shot areas that are set on the coat of paint.
[FIG. 24] FIG. 24 is a plan view that illustrate the moving path of the target irradiation area by the processing operation that is performed in a certain processing shot area.
[FIG. 25] FIG. 25 is a cross-sectional view that schematically illustrates an entire structure of a processing system in a third embodiment.
[FIG. 26] FIG. 26 is a plan view that illustrates a processed area on the surface of the coat of paint.
[FIG. 27] FIG. 27 is a plan view that illustrates the surface of the coat of paint on which eight processing shot areas are set.
[FIG. 28] FIG. 28 is a plan view that enlarges and illustrates the eight processing shot areas illustrated in FIG. 27.
[FIG. 29] FIG. 29 is a plan view that illustrates a positional relationship between a position measurement apparatus and the light irradiation apparatus.
[FIG. 30] FIG. 30 is a plan view that illustrates the coat of paint on which a plurality of processed areas are formed.
[FIG. 31] FIG. 31 is a cross-sectional view that illustrates a structure of a processing system including a position measurement apparatus for performing a third measurement operation.
[FIG. 32] FIG. 32A is a plan view that illustrates measurement light that sweeps the riblet structure along a direction that is perpendicular to a direction in which a concave structure and a convex structure that constitute the riblet structure extend, and FIG. 32B is a plan view that illustrates the measurement light that sweeps the riblet structure along a direction that is not perpendicular to but intersects with the direction in which the concave structure and the convex structure that constitute the riblet structure extend.

### Description of Embodiments

Next, with reference to drawings, embodiments of a processing system, an inspection system, a processing method, an inspection method, a control apparatus and a computer program will be described. In the below described description, the embodiments of the processing system, the inspection system, the processing method, the inspection method, the control apparatus and the computer program will be described by using a processing system SYS that performs a processing operation for processing a coat SF of paint formed on a surface of a processing target object S by using processing light EL. However, the present invention is not limited to the below described embodiments.

Moreover, in the below described description, a positional relationship of various components that constitute the processing system SYS will be described by using an XYZ rectangular coordinate system that is defined by a X axis, a Y axis and a Z axis that are perpendicular to one another. Note that each of an X axis direction and a Y axis direction is assumed to be a horizontal direction (namely, a predetermined direction in a horizontal plane) and a Z axis direction is assumed to be a vertical direction (namely, a direction that is perpendicular to the horizontal plane, and substantially an up-down direction) in the below described description, for convenience of the description. Moreover, rotational directions (in other words, inclination directions) around the X axis, the Y axis and the Z axis are referred to as a θX direction, a θY direction and a θZ direction, respectively. Here, the Z axis direction may be a gravity direction. Moreover, an XY plane may be a horizontal direction.

### (1) Processing SYSa in First Embodiment

Firstly, a processing system SYS in a first embodiment (in the below described description, the processing system SYS in the first embodiment is referred to as a "processing system SYSa") will be described.

### (1-1) Structure of Processing SYSa

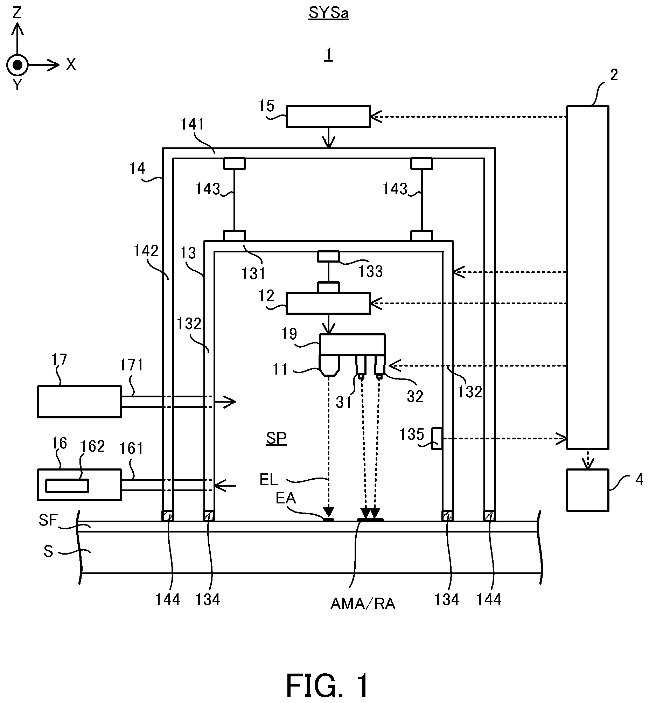

Firstly, with reference to FIG. 1, a structure of the processing system SYSa in the first embodiment will be described. FIG. 1 is a cross-sectional view that schematically illustrates the structure of the processing system SYSa in the first embodiment.

As illustrated in FIG. 1, the processing system SYS processes the coat SF of paint that is formed (for example, coated) on the surface of the processing target object S. The processing target object S may be a metal, may be an alloy (for example, a duralumin and the like), may be a resin (for example, CFRP (Carbon Fiber Reinforced Plastic) and the like), may be a glass or may be an object that is made from any other material, for example. The coat SF of paint is a film of a painting material that covers the surface of the processing target object S. Thus, the coat SF of the paint may be referred to as a paint layer. The processing target object S is a base member for the coat SF of paint. A thickness of the coat SF of paint is several tens of microns to several hundreds of microns, for example, however, may be any other size. The painting material that constitutes the coat SF of paint may include a resin painting material or may include any other type of painting material, for example. The resin painting material may include at least one of an acrylic type of painting material (for example, a painting material including an acrylic polyol), a polyurethane type of painting material (for example, a painting material including a polyurethane polyol), a polyester type of painting material (for example, a painting material including a polyester polyol), a vinyl type of painting material, a fluorine type of painting material (for example, a painting material including a fluorine polyol), a silicon type of painting material and an epoxy type of painting material, for example.

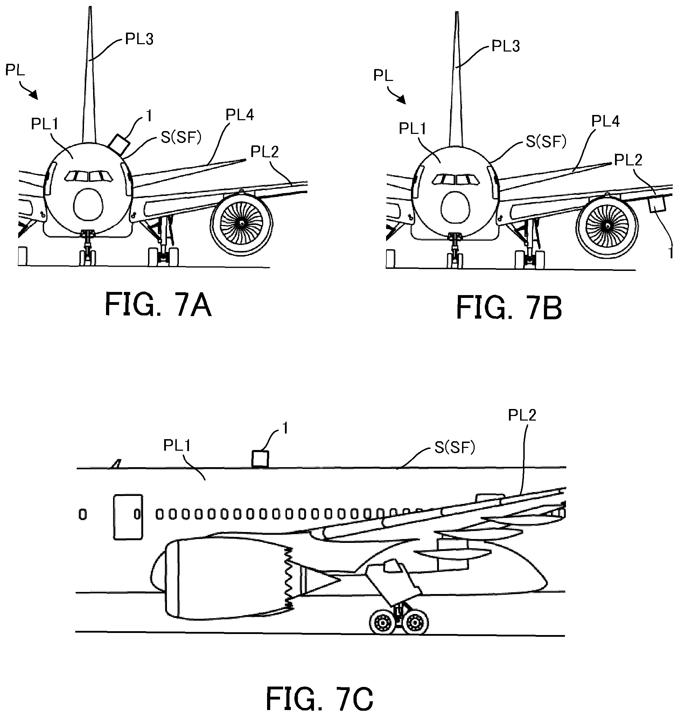

FIG. 1 illustrates an example in which the processing system SYSa (especially, a below described processing apparatus 1 of the processing system SYSa) is disposed on the processing target object S having the surface that is along the horizontal plane (namely, the XY plane). However, the processing system SYSa is not always disposed on the processing target object S having the surface that is along the horizontal plane. For example, as described in later with reference to FIG. 7 and so on, the processing system SYSa may be disposed on the processing target object S having the surface that intersects with the horizontal plane. The processing system SYSa may be disposed to be suspended from the processing target object S. In this case, the X axis direction and the Y axis direction may be defined as directions along (typically, parallel to) the surface of the processing target object S and Z axis direction may be defined as a direction that intersects with (typically, a direction perpendicular to) the surface of the processing target object S.

The processing system SYSa irradiates the coat SF of paint with the processing light EL in order to process the coat SF of paint. The processing light EL may be any type of light, as long as the coat SF of paint is processed by irradiating the coat SF of paint with it. As one example, the processing light EL may be a laser light. Moreover, the processing light EL may be a light having any wavelength, as long as the coat SF of paint is processed by irradiating the coat SF of paint with it. The first embodiment will be described by using an example in which the processing light EL is invisible light (for example, at least one of infrared light, ultraviolet light and the like). Namely, the first embodiment will be described by using an example in which the processing light EL is at least one of light a wavelength of which is included in a wavelength band that is shorter than a wavelength of visible light and light a wavelength of which is included in a wavelength band that is longer than the wavelength of the visible light. However, the processing light EL may be a visible light.

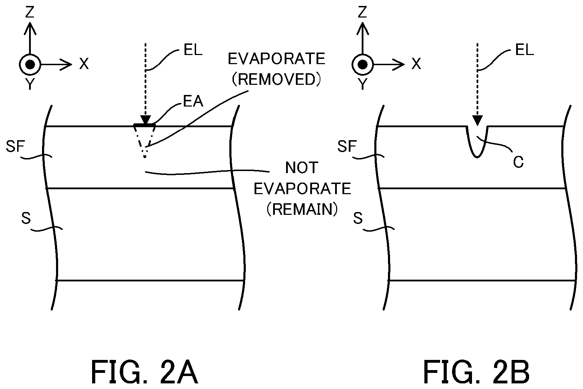

Here, with reference to FIG. 2A and FIG. 2B, an aspect of a processing of the coat SF of paint by using the processing light EL will be described. Each of FIG. 2A and FIG. 2B is a cross-sectional view that schematically illustrates the aspect of the processing of the coat SF of paint formed on the surface of the processing target object S.

As illustrated in FIG. 2A, the processing system SYSa irradiates a target irradiation area EA that is set on the surface of the coat SF of paint with the processing light EL. Note that the target irradiation area EA is an area that is expected to be irradiated with the processing light EL by the processing system SYSa. As illustrated in FIG. 2A, when the target irradiation area EA is irradiated with the processing light EL, a part of the coat SF of paint that overlaps with the target irradiation area EA (namely, the coat of paint that is located at an -Z side of the target irradiation area EA) evaporates by the processing light EL. Here, all of the coat SF of paint that overlaps with the target irradiation area EA does not evaporate along a thickness direction of the coat SF of paint. Namely, a part of the coat SF of paint that overlaps with the target irradiation area EA (specifically, a part of the coat SF of paint that is relatively close to the target irradiation area EA) evaporates and other part of the coat SF of paint that overlaps with the target irradiation area EA (specifically, a part of the coat SF of paint that is relatively far away from the target irradiation area EA) does not evaporate along the thickness direction of the coat SF of paint. In other words, the coat SF of paint evaporates so that the processing target object S is not exposed from the coat SF of paint. Thus, a characteristic of the processing light EL may be set to a desired characteristic that allows the coat SF of paint to evaporate so that the processing target object S is not exposed from the coat SF of paint. The characteristic of the processing light EL may be set to a desired characteristic that does not allow the irradiation of the processing light EL to affect the processing target object S. The characteristic of the processing light EL may be set to a desired characteristic that allows the irradiation of the processing light EL to affect only the coat SF of paint. Note that the characteristic of the processing light EL may include at least one of the wavelength of the processing light EL, an amount of energy that is transmitted from the processing light EL to the surface of the coat SF of paint per unit time and / or per unit area, a distribution of an intensity of the processing light EL on the surface of the coat SF of paint, an irradiation time of the processing light EL on the surface of the coat SF of paint and a size (as one example, a spot diameter and an area size) of the processing light EL on the surface of the coat SF of paint.

In this case, the energy (namely, the intensity) of the processing light EL with which the coat SF of paint is irradiated is set so that the irradiation of the processing light EL does not affect the processing target object S. The energy of the processing light EL is set so that the processing light EL does not penetrate the coat SF of paint and does not reach the processing target object S. In other words, the energy of the processing light EL is set so that the irradiation of the processing light EL affects only the coat SF of paint.

As a result, the coat SF of paint is removed at a part at which the coat SF of paint evaporates. On the other hand, the coat SF of paint remains as it is at a part at which the coat SF of paint does not evaporate. Namely, as illustrated in FIG. 2B, the coat SF of paint is partially removed at a part that is irradiated with the processing light EL. As a result, as illustrated in FIG. 2B, the thickness of the coat SF of paint is thinner at the part that is irradiated with the processing light EL, compared to a part that is not irradiated with the processing light EL. In other words, as illustrated in FIG. 2B, there are the coat SF of paint that is relatively thick because it is not irradiated with the processing light EL and the coat SF of paint that is relatively thin because it is irradiated with the processing light EL on the surface of the processing target object S. Namely, the thickness of the coat SF of paint is adjusted at least partially by the irradiation of the processing light EL. A part of the coat SF of paint is removed in the thickness direction (the Z axis direction in the example illustrated in FIG. 2B) by the irradiation of the processing light EL. As a result, a concave part (in other words, a groove part) C corresponding to the part at which the coat SF of paint is relatively thin is formed on the surface of the coat SF of paint. Therefore, "an operation for processing the coat SF of paint" in the first embodiment includes at least one of an operation for adjusting the thickness of the coat SF of paint, an operation for removing a part of the coat SF of paint and an operation for forming the concave part C at the coat SF of paint.

The coat SF of paint evaporates by absorbing the processing light EL. Namely, the coat SF of paint is decomposed photochemically, for example, and removed by means of the energy of the processing light EL being transmitted to the coat SF of paint. Incidentally, when the processing light EL is the laser light, a phenomenon in which the coat SF of paint is decomposed photochemically and removed by means of the energy of the processing light EL being transmitted to the coat SF of paint is sometimes referred to as a laser ablation. Thus, the coat SF of paint includes a material that is allowed to absorb the processing light EL. Specifically, the coat SF of paint may include a material in which an absorptance relating to the processing light EL (for example, an absorptance relating to a light in a wavelength band including a wavelength that is different from the wavelength of the visible light, when the processing light EL is the invisible light) is equal to or higher than a first absorption threshold value, for example. Conversely speaking, a light in a wavelength band that allows an absorptance relative to the coat SF of paint to be equal to or higher than the first absorption threshold value may be used as the processing light EL.

The material of the coat SF of paint may include a coloring matter (specifically, at least one of pigment and dye). When the coat SF of paint includes the coloring matter, the coloring matter may be a coloring matter that takes on a predetermined color when it is irradiated with the visible light. As a result, the coat SF of paint including this coloring matter takes on the predetermined color. In this case, the coloring matter may have a characteristic that the absorptance of light in a first wavelength band including a wavelength that is allowed to be recognized by a human as the predetermined colored light when it is reflected by the coat SF of paint among a wavelength band of the visible light is different from the absorptance of light in a second wavelength band of the visible light that is different from the first wavelength band so that the coat SF of paint takes on the predetermined color. For example, the coloring matter may have a characteristic that the absorptance of the light in the first wavelength band is lower than the absorptance of the light in the second wavelength band. For example, the coloring matter may have a characteristic that the absorptance of the light in the first wavelength band is equal to or lower than a predetermined second absorption threshold value (note that the second absorption threshold value is lower than the first absorption threshold value) and the absorptance of the light in the second wavelength band is equal to or higher than a predetermined third absorption threshold value (note that the third absorption threshold value is higher than the second absorption threshold value). As one example of the coloring matter that is allowed to absorb the processing light EL that is the invisible light to a certain degree and that takes on the predetermined color, there is a near infrared absorption coloring matter manufactured by Spectrum Info Ltd located in Kiev in Ukraine (as one example, a tetrafluoro boronated 4 - ((E) - 2 - {(3E) - 2 - chloro - 3 - [2 - (2,6 - diphenyl - 4H - thiopyran - 4 - ylidene) ethylidene] cyclohexa - 1 - yen - 1 - yl} vinyl) - 2,6 - diphenylthiopyrylium), for example. Incidentally, when the coat SF of paint is transparent, the coat SF of paint does not include the coloring matter.

When the coat SF of paint includes the coloring matter, the coloring matter may be a coloring matter that is transparent to the visible light. As a result, the coat SF of paint including this coloring matter is a transparent film (what we call a clear coat). Incidentally, the "transparent film" here may mean a film through which light in a wavelength band that is a part of the wavelength band of the visible light passes. In this case, the coloring matter may have a characteristic that it does not absorb the visible light much (namely, reflects to a certain degree) so that the coat SF of paint is transparent. For example, the coloring matter may have a characteristic that the absorptance of the visible light is lower than a predetermined fourth absorption threshold value. As one example of the coloring matter that is allowed to absorb the processing light EL that is the invisible light to a certain degree and that is transparent to the visible light, there is a near infrared absorption coloring matter manufactured by Spectrum Info Ltd located in Kiev in Ukraine (as one example, a tetrafluoro boronated 6 - chloro - 2 - [(E) - 2 - (3 - {(E) - 2 - [6 - chloro - 1 - ethylbenzo [cd] indole - 2(1H) - ylidene] ethylidene} - 2 - phenyl - 1 -cyclopentene - 1 - yl) ethenyl] - 1 - ethylbenzo [cd] - indolium), for example.

Again in FIG. 1, in order to process the coat SF of paint, the processing system SYSa is provided with a processing apparatus 1, a control apparatus 2, an extraneous substance measurement apparatus 31, an extraneous substance removal apparatus 32 and a display 4. Furthermore, the processing apparatus 1 is provided with a light irradiation apparatus 11, a driving system 12, a housing apparatus 13, a support apparatus 14, a driving system 15, an exhaust apparatus 16 and a gas supply apparatus 17.

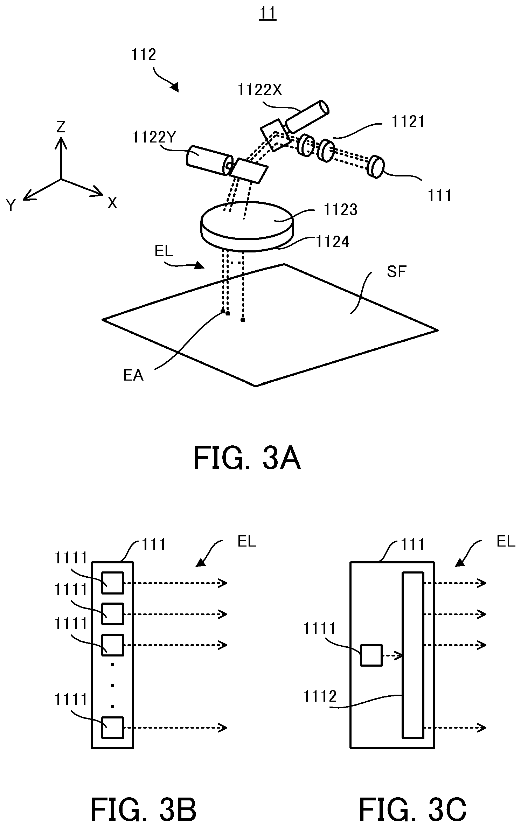

The light irradiation apparatus 11 is configured to irradiate the coat SF of paint with the processing light EL under the control of the control apparatus 2. In order to irradiate the coat SF of paint with the processing light EL, the light irradiation apparatus 11 is provided with a light source system 111 that is configured to emit the processing light EL and an optical system 112 that guides the processing light EL emitted from the light source system 111 to the coat SF of paint, as illustrated in FIG. 3A that is a cross-sectional view that schematically illustrates a structure of the light irradiation apparatus 11.

The light source system 111 emits a plurality of processing lights EL at the same time, for example. However, the light source system 111 may emit single processing light EL. In this case, the light irradiation apparatus 11 may emit single processing light EL. In order to emit the plurality of processing lights EL, the light source system 111 is provided with a plurality of light sources 1111, as illustrated in FIG. 3B that is a cross-sectional view that illustrates one example of a structure of the light source system 111. The plurality of light sources 1111 are arranged in a line at regular intervals. Each light source 1111 emits a pulsed light as the processing light EL. When a light emitting time width (hereinafter, it is referred to as a "pulse width") of the pulsed light is shorter, a processing accuracy (for example, a forming accuracy of a riblet structure described later) improves. Therefore, each light source 1111 may emit the pulsed light having a relatively short pulse width as the processing light EL. For example, each light source 1111 may emit the pulsed light having the pulse width that is equal to or shorter than 1000 nanoseconds as the processing light EL. For example, each light source 1111 may emit the pulsed light having the pulse width that is in an order of pico-second as the processing light EL, and may emit the pulsed light having the pulse width that is in an order of femto-second as the processing light EL. Alternatively, the light source system 111 may be provided with single light source 1111 and a divide device 1112 that divides the light from the single light source 1111 into the plurality of processing lights EL, as illustrated in FIG. 3C that is a cross-sectional view that illustrates another example of a structure of the light source system 111. A plurality of emitting ports from which the plurality of processing lights EL divided by the divide device 1112, respectively, are arranged in a line at regular intervals. At least one of an optical fiber coupler, a waveguide splitter, a lens array, a diffractive optical element, a spatial light modulator and so on is one example of the divide device 1112.

The optical system 112 is provided with a focusing lens 1121, a Galvano mirror 1122 and a fθ lens 1123. The coat SF of paint is irradiated with the plurality of processing lights EL through the focusing lens 1121, the Galvano mirror 1122 and the fθ lens 1123.

The focusing lens 1121 is an optical element that is constructed from one or more lens and that is for adjusting converged positions BF of the plurality of processing lights EL (in other words, light concentration positions or irradiation positions in an optical axis direction, namely, a focus position of the optical system 112) by adjusting a position of at least one lens thereof along the optical axis direction. The Galvano mirror 1122 deflects the plurality of processing lights EL so that the surface of the coat SF of paint is scanned with the plurality of processing lights EL (namely, the plurality of target irradiation areas EA that are irradiated with the plurality of processing lights EL, respectively, moves on the surface of the coat SF of paint). Namely, the Galvano mirror 1122 may be configured to serve as an irradiation position change apparatus that changes the irradiation positions of the plurality of processing lights EL on the coat SF of paint relative to the light irradiation apparatus 11. Note that the surface of the coat SF of paint may be swept with the plurality of processing lights EL emitted from the optical system 112 by the Galvano mirror 1122. The Galvano mirror 112 is provided with a X scanning mirror 1122X and a Y scanning mirror 1122Y. The X scanning mirror 1122X reflects the plurality of processing lights EL to the Y scanning mirror 1122Y. The X scanning mirror 1122X is configured to swing or rotate in the θY direction (namely, in a rotational direction around the Y axis). Due to the swing or the rotation of the X scanning mirror 1122X, the surface of the coat SF of paint is swept with the plurality of processing lights EL along the X axis direction. Due to the swing or the rotation of the X scanning mirror 1122X, the plurality of target irradiation areas EA moves on the coat SF of paint along the X axis direction. The X scanning mirror 1122X changes a relative positional relationship between the plurality of target irradiation areas EA and the coat SF of paint along the X axis direction. The Y scanning mirror 1122Y reflects the plurality of processing lights EL to the fθ lens 1123. The Y scanning mirror 1122Y is configured to swing or rotate in the θX direction (namely, in a rotational direction around the X axis). Due to the swing or the rotation of the Y scanning mirror 1122Y, the surface of the coat SF of paint is swept with the plurality of processing lights EL along the Y axis direction. Due to the swing or the rotation of the Y scanning mirror 1122Y, the plurality of target irradiation areas EA moves on the coat SF of paint along the Y axis direction. The Y scanning mirror 1122Y changes a relative positional relationship between the plurality of target irradiation areas EA and the coat SF of paint along the Y axis direction. The fθ lens 1123 is an optical element for condensing the plurality of processing lights EL from the Galvano mirror 1122 on the coat SF of paint.

The fθ lens 1123 is a terminal optical element that is disposed at the most light emitting side of the optical system 112 (in other word, that is closest to the coat SF of paint or that is disposed at an end of an optical path of the plurality of processing lights EL) among the optical element(s) of the optical system 112. However, the optical system 112 may be provided with an optical element (for example, a cover lens and the like) that is disposed at more light emitting side than the fθ lens 1123. The fθ lens 1123 may be configured to be attachable to and detachable from the optical system 112. As a result, new fθ lens 1123 is allowed to be attached to the optical system 112 after old fθ lens 1123 is detached from the optical system 112. However, when the optical system 112 is provided with the optical element (for example, the cover lens and the like) that is disposed at more emitting side than the fθ lens 1123, this optical element may be the terminal optical element and this optical element may be configured to be attachable to and detachable from the optical system 112.

Traveling directions of the plurality of processing lights EL from the optical system 112 is parallel to each other, for example. As a result, in the first embodiment, the coat SF of paint is irradiated with the plurality of processing lights EL traveling directions of which are parallel to each other at the same time. Namely, the plurality of target irradiation areas EA are set on the coat SF of paint at the same time. Thus, a throughput relating to the processing of the coats SF of paint improves compared to the case where the coat SF of paint is irradiated with the single processing light EL. Note that the traveling directions of the plurality of processing lights EL from the optical system 112 may not be parallel to each other.

Again in FIG. 1, the driving system 12 moves the light irradiation apparatus 11 relative to the coat SF of paint (namely, relative to the processing target object S on the surface of which the coat SF of paint is formed) under the control of the control apparatus 2. Namely, the driving system 12 moves the light irradiation apparatus 11 relative to the coat SF of paint so as to change a relative positional relationship between the light irradiation apparatus 11 and the coat SF of paint. When the relative positional relationship between the light irradiation apparatus 11 and the coat SF of paint is changed, a relative positional relationship between the plurality of target irradiation areas EA that are irradiated with the plurality of processing lights EL, respectively, and the coat SF of paint is also changed. Thus, it can be said that the driving system 12 moves the light irradiation apparatus 11 relative to the coat SF of paint so as to change the relative positional relationship between the plurality of target irradiation areas EA and the coat SF of paint.

The driving system 12 may move the light irradiation apparatus 11 along the surface of the coat SF of paint. In an example illustrated in FIG. 1, the surface of the coat SF of paint is a plane that is parallel to at least one of the X axis and the Y axis, and thus, the driving system 12 may move the light irradiation apparatus 11 along at least one of the X axis and the Y axis. As a result, the target irradiation areas EA move on the coat SF of paint along at least one of the X axis and the Y axis. Namely, a range which the irradiation apparatus 11 is allowed to irradiate with the processing light EL is changed. The driving system 12 may move the light irradiation apparatus 11 along the thickness direction of the coat SF of paint (namely, a direction that intersects with the surface of the coat SF of paint). In the example illustrated in FIG. 1, the thickness direction of the coat SF of paint is a direction along the Z axis, and thus, the driving system 12 may move the light irradiation apparatus 11 along the Z axis direction. The driving system 12 may move the light irradiation apparatus 11 along a rotational direction that is at least one of the θX direction, the θY direction and the θZ direction in addition to at least one of the X axis, the Y axis and the Z axis.

The light irradiation apparatus 11 is attached to the driving system 12 through an attachment member 19. The driving system 12 supports the light irradiation apparatus 11 through the attachment member 19. The driving system 12 moves the light irradiation apparatus 11 that is attached to the attachment member 19. Namely, the driving system 12 moves the light irradiation apparatus 11 with the attachment member 19. However, the light irradiation apparatus 11 may be attached to the driving system 12 without attachment member 19.

The housing apparatus 13 is provided with a top member 131 and a partition member 132. The top member 131 is disposed at +Z side than the light irradiation apparatus 11. The top member 131 is a plate-like member along the XY plane. The top member 131 supports the driving system 12 through a support member 133. The partition member 132 is disposed at (or near) an outer rim of a surface at the -Z side of the top member 131. The partition member 132 is a pipe-like (for example, a cylinder-like or rectangular pipe-like) member that extends from the top member 131 toward the -Z side. A space surrounded by the top member 131 and the partition member 132 is a containing space SP in which the light irradiation apparatus 11 and the driving system 12 are housed. Therefore, the above described driving system 12 moves the light irradiation apparatus 11 in the containing space SP. Moreover, the containing space SP includes a space between the light irradiation apparatus 11 and the coat SF of paint (especially, a space including the optical path of the processing lights EL). More specifically, the containing space SP includes a space between the terminal optical element (for example, fθ lens 1123) of the light irradiation apparatus 11 and the coat SF of paint (especially, the space including the optical path of the processing lights EL).

Each of the top member 131 and the partition member 132 is a member that is configured to shield the processing light EL. Namely, each of the top member 131 and the partition member 132 is opaque to the wavelength of the processing light EL. As a result, the processing light EL propagating in the containing space SP does not leak outside the containing space SP (namely, outside the housing apparatus 13). Note that each of the top member 131 and the partition member 132 may be a member that is configured to fade the processing light EL. Namely, each of the top member 131 and the partition member 132 is translucent to the wavelength of the processing light EL. Moreover, each of the top member 131 and the partition member 132 is a member that does not allow unnecessary substance that is generated by the irradiation of the processing light EL to pass therethrough (namely, that is configured to shield). At least one of vapor and fume of the coat SF of paint is one example of the unnecessary substance. As a result, the unnecessary substance that is generated in the containing space SP does not leak outside the containing space SP (namely, outside the housing apparatus 13).

An end part (specifically, an end part at the coat SF of paint side and an end part at the -Z side in the example illustrated in FIG. 1) 134 of the partition member 132 is allowed to contact with the surface of the coat SF of paint. When the end part 134 contacts with the coat SF of paint, the housing apparatus 13 (namely, the top member 131 and the partition member 132) maintains a sealability of the containing space SP with the coat SF of paint. The end part 134 is configured to change a shape thereof (especially, a shape of a contact surface (the surface at the -Z side in the example illustrated in FIG. 1) of the end part 134 that contacts with the coat SF of paint, the same applies to the below described description) in accordance with a shape of the surface of the coat SF of paint when it contacts with the coat SF of paint. For example, when the end part 134 contacts with the coat SF of paint the surface of which is a planar shape, the shape of the end part 134 becomes a planar shape as with the coat SF of paint. For example, when the end part 134 contacts with the coat SF of paint the surface of which is a curved shape, the shape of the end part 134 becomes a curved shape as with the coat SF of paint. As a result, the sealability of the containing space SP improves, compared to the case where the end part 134 is not configured to change the shape thereof in accordance with the shape of the surface of the coat SF of paint. The end part 134 that is made from a member having an elasticity such as a gum (in other words, a flexible member) is one example of the end part 134 that is configured to change the shape. Note that a bellows-like end part that is a structure having an elasticity may be used as the end part 134 that is configured to change the shape, for example.

The end part 134 may be configured to adhere to the coat SF of paint in a state where it contacts with the coat SF of paint. For example, the end part 134 may be provided with a suction mechanism that is configured to suck the coat SF of paint. When the end part 134 adheres to the coat SF of paint, the sealability of the containing space SP improves more, compared to the case where the end part 134 does not adhere to the coat SF of paint. However, the end part 134 may not be configured to adhere to the coat SF of paint. Even in this case, the sealability of the containing space SP is maintained to a certain degree as long as the end part 134 contacts with the coat SF of paint.

The partition member 132 is a member that is configured to extend and contract along the Z axis by a non-illustrated driving system (for example, an actuator) that operates under the control of the control apparatus 2. For example, the partition member 132 may be a bellows-like member (what we call a bellows). In this case, the partition member 132 is configured to extend and contract due to the expansion and the contraction of the bellows-like part. Alternatively, the partition member 132 may be provided with a telescopic pipe in which a plurality of hollow cylindrical members having different diameters, respectively, are combined, for example. In this case, the partition member 132 is configured to extend and contract due to a relative movement of the plurality of cylindrical members. A state of the partition member 132 is allowed to be set to at least a first expansion state in which the partition member 132 extends along the Z axis and a size thereof in the Z axis direction is relatively long and a first contraction state in which the partition member 132 contracts along the Z axis and the size thereof in the Z axis direction is relatively short.

When the partition member 132 is in the first expansion state, the end part 134 is in a first contact state in which it is allowed to contact with the coat SF of paint. On the other hand, when the partition member 132 is in the first contraction state, the end part 134 is in a first non-contact state in which it does not contact with the coat SF of paint. Namely, when the partition member 132 is in the first contraction state, the end part 134 is in the first non-contact state in which it is away from the coat SF of paint toward the +Z side. Note that a configuration for switching the state of the end part 134 between the first contact state and the first non-contact state is not limited to a configuration that allows the partition member 132 to extend and contract. For example, the state of the end part 134 may be switched between the first contact state and the first non-contact state by means of the housing apparatus 13 itself being configured to move along the ±Z direction.

The housing apparatus 13 is further provided with a detection apparatus 135. The detection apparatus 135 detects the unnecessary substance (namely, the substance that is generated by the irradiation of the processing light EL) in the containing space SP. A detected result by the detection apparatus 135 is used by the control apparatus 2 when the state of the partition member 132 is changed from the first expansion state to the first contraction state, as described later in detail.

The support apparatus 14 supports the housing apparatus 13. Since the housing apparatus 13 supports the driving system 12 and the light irradiation apparatus 11, the support apparatus 14 substantially supports the driving system 12 and the light irradiation apparatus 11 through the housing apparatus 13. In order to support the housing apparatus 13, the support apparatus 14 is provided with a beam member 141 and a plurality of leg members 142. The beam member 141 is disposed at the +Z side than the housing apparatus 13. The beam member 141 is a beam-like member that extends along the XY plane. The beam member 141 supports the housing member 13 through supporting members 143. The plurality of leg members 142 are disposed at the beam member 141. The leg member 142 is a bar-like member that extends from the beam member 141 toward the -Z side.

An end part (specifically, an end part at the coat SF of paint side and an end part at the -Z side in the example illustrated in FIG. 1) 144 of the leg member 142 is allowed to contact with the surface of the coat SF of paint. As a result, the support apparatus 14 is supported by the coat SF of paint (namely, by the processing target object S). Namely, the support apparatus 14 supports the housing apparatus 13 in a state where the end part 144 contacts with the coat SF of paint (in other words, in a state where the support apparatus 14 is supported by the coat SF of paint). The end part 144 may be configured to change a shape thereof (especially, a shape of a contact surface (the surface at the -Z side in the example illustrated in FIG. 1) of the end part 144 that contacts with the coat SF of paint, the same applies to the below described description) in accordance with the shape of the surface of the coat SF of paint when it contacts with the coat SF of paint, as with the end part 134 of the housing apparatus 13. The end part 144 may be configured to adhere to the coat SF of paint in a state where it contacts with the coat SF of paint. For example, the end part 144 may be provided with a suction mechanism that is configured to suck the coat SF of paint. When the end part 144 adheres to the coat SF of paint, a stability of the support apparatus 14 improves more, compared to the case where the end part 144 does not adhere to the coat SF of paint. However, the end part 144 may not be configured to adhere to the coat SF of paint.

The beam member 141 is a member that is configured to extend and contract along at least one of the X axis and the Y axis (alternatively, along any direction along the XY plane) by the driving system 15 that operates under the control of the control apparatus 2. For example, the beam member 141 may be provided with a telescopic pipe in which a plurality of hollow cylindrical members having different diameters, respectively, are combined, for example. In this case, the beam member 141 is configured to extend and contract due to a relative movement of the plurality of cylindrical members.

The leg member 142 is a member that is configured to extend and contract along the Z axis by the driving system 15 that operates under the control of the control apparatus 2. For example, the leg member 142 may be provided with a telescopic pipe in which a plurality of hollow cylindrical members having different diameters, respectively, are combined, for example. In this case, the leg member 142 is configured to extend and contract due to a relative movement of the plurality of cylindrical members. A state of the leg member 142 is allowed to be set to at least a second expansion state in which the leg member 142 extends along the Z axis and a size thereof in the Z axis direction is relatively long and a second contraction state in which the leg member 142 contracts along the Z axis and the size thereof in the Z axis direction is relatively short. When the leg member 142 is in the second expansion state, the end part 144 is in a second contact state in which it is allowed to contact with the coat SF of paint. On the other hand, when the leg member 142 is in the second contraction state, the end part 144 is in a second non-contact state in which it does not contact with the coat SF of paint. Namely, when the leg member 142 is in the second contraction state, the end part 144 is in the second non-contact state in which it is away from the coat SF of paint toward the +Z side.

The driving system 15 moves the support apparatus 14 relative to the coat SF of paint (namely, relative to the processing target object S on the surface of which the coat SF of paint is formed) under the control of the control apparatus 2. Namely, the driving system 15 moves the support apparatus 14 relative to the coat SF of paint so as to change a relative positional relationship between the support apparatus 14 and the coat SF of paint. Since the support apparatus 14 supports the housing apparatus 13, the driving system 15 substantially moves the housing apparatus 13 relative to the coat SF of paint by moving the support apparatus 14. Namely, the driving system 15 moves the support apparatus 14 relative to the coat SF of paint so as to substantially change a relative positional relationship between the housing apparatus 13 and the coat SF of paint. Moreover, the housing apparatus 13 supports the light irradiation apparatus 11 through the driving system 12. Thus, the driving system 15 is allowed to substantially move the light irradiation apparatus 11 relative to the coat SF of paint by moving the support apparatus 14. Namely, the driving system 15 is allowed to move the support apparatus 14 relative to the coat SF of paint so as to substantially change the relative positional relationship between the light irradiation apparatus 11 and the coat SF of paint. In other words, the driving system 15 is allowed to move the support apparatus 14 relative to the coat SF of paint so as to substantially change the relative positional relationship between the plurality of target irradiation areas EA and the coat SF of paint.

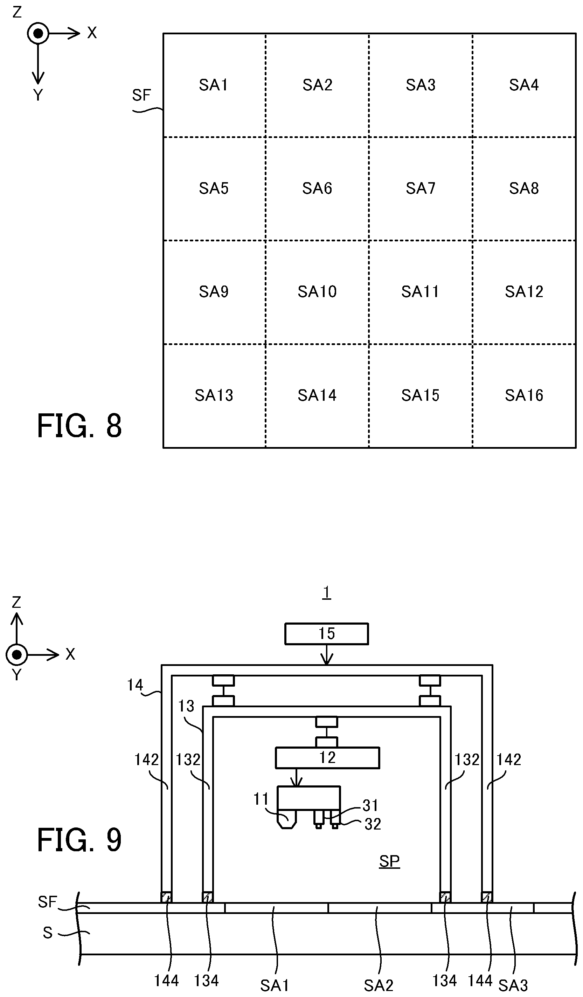

The driving system 15 extends and contracts the beam member 141 in order to move the support apparatus 14 under the control of the control apparatus 2. Moreover, the driving system 15 extends and contracts the plurality of leg members 142 in order to move the support apparatus 14 under the control of the control apparatus 2. Note that a moving aspect of the support apparatus 14 by the driving system 15 will be described later in detail with reference to FIG. 8 to FIG. 19.

The exhaust apparatus 16 is coupled to the containing space SP through an exhaust pipe 161. The exhaust apparatus 16 is configured to exhaust gas in the containing space SP. Especially, the exhaust apparatus 16 is configured to suck the unnecessary substance that is generated by the irradiation of the processing light EL from the containing space SP to an outside of the containing space SP by exhausting the gas in the containing space SP. Especially, when the unnecessary substance is on the optical path of the processing lights EL, there is a possibility that the irradiation of the processing lights EL to the coat SF of paint is affected. Thus, the exhaust apparatus 16 especially sucks, from a space including the optical path of the processing lights EL between the terminal optical element of the optical system 112 and the coat SF of paint, the unnecessary substance with the gas in this space. The unnecessary substance sucked by the exhaust apparatus 16 from the containing space SP is discharged to the outside of the processing apparatus 1 through a filter 162. The filter 162 sorbs the unnecessary substance. Note that the filter 162 may be attachable and detachable and may be replaceable.

The gas supply apparatus 17 is coupled to the containing space SP through an intake pipe 171. The gas supply apparatus 17 is configured to supply gas to the containing space SP. The gas that is supplied to the containing space SP includes at least one of an air, a CDA (Clean Dry Air) and an inert gas. A nitrogen gas is one example of the inert gas. In the first embodiment, the gas supply apparatus 17 supplies the CDA. Thus, the containing space SP is a space that is purged by the CDA. At least a part of the CDA supplied to the containing space SP is sucked by the exhaust apparatus 16. The CDA sucked by the exhaust apparatus 16 from the containing space SP is discharged to the outside of the processing system SYSa through the filter 162.

The gas supply apparatus 17 especially supplies the gas such as the CDA to an optical surface 1124 at the containing space SP side of the fθ lens 1123 (namely, an optical surface at the containing space SP side of the terminal optical element of the optical system 112) illustrated in FIG. 3. There is a possibility that the optical surface 1124 is exposed to the unnecessary substance that is generated by the irradiation of the processing light EL, because the optical surface 1124 faces the containing space SP. As a result, there is a possibility that the unnecessary substance adheres to the optical surface 1124. Moreover, there is a possibility that the unnecessary substance adhering to the optical surface 1124 is baked (namely, is firmly fixed) by the processing light EL passing through the optical surface 1124, because the processing lights EL pass through the optical surface 1124. The unnecessary substance adhering (moreover, firmly fixed) to the optical surface 1124 becomes a dust to be likely to affect a characteristic of the processing lights EL. However, when the gas such as the CDA is supplied to the optical surface 1124, a contact between the optical surface 1124 and the unnecessary substance is prevented. Thus, an adherence of the dust to the optical surface 1124 is prevented. Therefore, the gas supply apparatus 17 also serves as an adherence prevention apparatus that prevents the adherence of the dust to the optical surface 1124. Moreover, even when the dust is adhering (moreover, firmly fixed) to the optical surface 1124, there is a possibility that the dust is removed (for example, is blown away) by the CDA supplied to the optical surface 1124. Therefore, the gas supply apparatus 17 also serves as an adherence prevention apparatus that removes the dust adhering to the optical surface 1124.

The control apparatus 2 controls an entire operation of the processing system SYSa. Especially, the control apparatus 2 controls the light irradiation apparatus 11, the driving system 12, the housing apparatus 13 and the driving system 15 so that the concave part C having a desired shape is formed at a desired position, as described later in detail.

The control apparatus 2 may include a CPU (Central Processing Unit) (alternatively, a GPU (Graphic Processing Unit) in addition to or instead of the CPU) and a memory, for example. The control apparatus 2 serves as an apparatus for controlling the operation of the processing system SYSa by means of the CPU executing a computer program. The computer program is a computer program that allows the control apparatus 2 (for example, the CPU) to execute (namely, to perform) a below described operation that should be executed by the control apparatus 2. Namely, the computer program is a computer program that allows the control apparatus 2 to function so as to make the processing system SYSa execute the below described operation. The computer program executed by the CPU may be recorded in the memory (namely, a recording medium) of the control apparatus 2, or may be recorded in any recording medium (for example, a hard disk or a semiconductor memory) that is built in the control apparatus 2 or that is attachable to the control apparatus 2. Alternatively, the CPU may download the computer program that should be executed from an apparatus disposed at the outside of the control apparatus 2 through a network interface.

The control apparatus 2 may not be disposed in the processing system SYSa, and may be disposed at the outside of the processing system SYSa as a server or the like. In this case, the control apparatus 2 may be connected to the processing system SYSa through a wired and / or wireless network (alternatively, a data bus and / or a communication line). A network using a serial-bus-type interface such as at least one of IEEE1394, RS-232x, RS-422, RS-423, RS-485 and USB may be used as the wired network. A network using a parallel-bus-type interface may be used as the wired network. A network using an interface that is compatible to Ethernet (a registered trademark) such as at least one of 10-BASE-T, 100BASE-TX or 1000BASE-T may be used as the wired network. A network using an electrical wave may be used as the wireless network. A network that is compatible to IEEE802.1x (for example, at least one of a wireless LAN and Bluetooth (registered trademark)) is one example of the network using the electrical wave. A network using an infrared ray may be used as the wireless network. A network using an optical communication may be used as the wireless network. In this case, the control apparatus 2 and the processing system SYSa may be configured to transmit and receive various information through the network. Moreover, the control apparatus 2 may be configured to transmit information such as a command and a control parameter to the processing system SYSa through the network. The processing system SYSa may be provided with a receiving apparatus that receives the information such as the command and the control parameter from the control apparatus 2 through the network. Alternatively, a first control apparatus that performs a part of the processing performed by the control apparatus 2 may be disposed in the processing system SYSa and a second control apparatus that performs another part of the processing performed by the control apparatus 2 may be disposed at the outside of the processing system SYSa.

Note that the recording medium recording therein the computer program that should be executed by the CPU may include an optical disc such as a CD-ROM, a CD-R, a CD-RW, a flexible disc, a MO, a DVD-ROM, a DVD-RAM, a DVD-R, a DVD+R, a DVD-RW, a DVD+RW and a Blu-ray (registered trademark), a magnetic disc such as a magnetic tape, an optical-magnetic disc, a semiconductor memory such as a USB memory, and another medium that is configured to store the program. The recording medium may include a device that is configured to record the computer program (for example, a device for a universal use or a device for an exclusive use in which the computer program is embedded to be executable in a form of at least one of a software, a firmware and the like). Moreover, various processes or functions included in the computer program may be realized by a logical process block that is realized in the control apparatus 2 by means of the control apparatus 2 (namely, a computer) executing the computer program, may be realized by a hardware such as a predetermined gate array (a FPGA, an ASIC) of the control apparatus 2, or may be realized in a form in which the logical process block and a partial hardware module that realizes an partial element of the hardware are combined.

The extraneous substance measurement apparatus 31 measures an extraneous substance on the surface of the coat SF of paint under the control of the control apparatus 2. Specifically, the extraneous substance measurement apparatus 31 measures the extraneous substance in an area on the surface of the coat SF of paint that is included in a measurement range of the extraneous substance measurement apparatus 31 (in the below described description, it is referred to as a "measurement target area AMA") under the control of the control apparatus 2. Note that the extraneous substance measurement apparatus 31 may measures the extraneous substance on the surface of the coat SF of paint independently from the control of the control apparatus 2.

When the extraneous substance exists on the surface of the coat SF of paint, there is a possibility that the extraneous substance prevents an irradiation of at least a part of the processing light EL to the coat SF of paint. Namely, when the extraneous exists substance on the surface of the coat SF of paint, there is a possibility that at least a part of the processing light EL does not properly reach the coat SF of paint. As a result, there may be a problem in the proper processing of the coat SF of paint by the irradiation of the processing light EL. Namely, there is a possibility that the extraneous substance prevents the proper processing of the coat SF of paint by the irradiation of the processing light EL. Thus, an event in which the extraneous substance exists on (typically, adheres to) the surface of the coat SF of paint corresponds to one specific example of an abnormal event that that is possibly an obstacle to the proper processing of the coat SF of paint by the irradiation of the processing light EL. At least one of a dust, a dirt, a mote, a fine particle, a wet and the above described fume is one example of the extraneous substance.

The extraneous substance measurement apparatus 31 may be a measurement apparatus that is configured to measure a condition of the surface of the coat SF of paint. Namely, the extraneous substance measurement apparatus 31 may be a measurement apparatus that is configured to measure the extraneous substance on the surface of the coat SF of paint by measuring the condition of the surface of the coat SF of paint. This is because the condition of the surface of the coat SF of paint on which the extraneous substance exists is different from the condition of the surface of the coat SF of paint on which the extraneous substance does not exist.

The extraneous substance measurement apparatus 31 is attached to the attachment member 19 to which the light irradiation apparatus 11 is attached. Thus, the extraneous substance measurement apparatus 31 also moves along with the movement of the light irradiation apparatus 11 by the driving system 12. Namely, the extraneous substance measurement apparatus 31 moves relative to the coat SF of paint with the light irradiation apparatus 11. As a result, the measurement target area AMA in which the extraneous substance measurement apparatus 31 measures the extraneous substance also moves on the coat SF of paint. Therefore, the extraneous substance measurement apparatus 31 is allowed to measure the extraneous substance in the measurement target area AMA that is allowed to set on a desired area on the coat SF of paint. However, the extraneous substance measurement apparatus 31 may not be attached to the attachment member 19. The extraneous substance measurement apparatus 31 may not be attached to the attachment member 19. The extraneous substance measurement apparatus 31 may be attached to a member that is different from the attachment member 19. The extraneous substance measurement apparatus 31 may be attached to the light irradiation apparatus 11. The extraneous substance measurement apparatus 31 may be movable independently from the attachment member 19. The extraneous substance measurement apparatus 31 may not be movable.

A measured result by the extraneous substance measurement apparatus 31 (in the below described description, it is referred to as an "extraneous substance measured information") is outputted to the control apparatus 2. The control apparatus 2 performs an extraneous substance inspection operation in the measurement target area AMA on the basis of the extraneous substance measured information. Namely, the control apparatus 2 performs the extraneous substance inspection operation in the measurement target area AMA with the extraneous substance measurement apparatus 31. Thus, a system including the extraneous substance measurement apparatus 31 and the control apparatus 2 is referred to as an inspection system. Then, the measurement target area AMA is referred to as an inspection target area.

The control apparatus 2 may perform an extraneous substance detection operation as at least a part of the extraneous substance inspection operation. Namely, the control apparatus 2 may determine on the basis of the extraneous substance measured information whether or not the extraneous substance exists in the measurement target area AMA. The control apparatus 2 may determine on the basis of the extraneous substance measured information whether or not the abnormal event (especially, the abnormal event in which the extraneous substance exists on the surface of the coat SF of paint) occurs in the measurement target area AMA. In this case, the extraneous substance measurement apparatus 31 may perform a measurement operation for measuring a presence and an absence of the extraneous substance in the measurement target area AMA. Namely, the extraneous substance measurement apparatus 31 may perform a measurement operation for obtaining the extraneous substance measured information that is usable to determine the presence and the absence of the extraneous substance in the measurement target area AMA.

When the extraneous substance exists in the measurement target area AMA, the control apparatus 2 may calculate a characteristic of the extraneous substance (in other words, a condition or a feature of the extraneous substance) on the basis of the extraneous substance measured information. Namely, the control apparatus 2 may perform a characteristic calculation operation for calculating the characteristic of the extraneous substance as at least a part of the extraneous substance inspection operation. For example, the control apparatus 2 may calculate a shape of the extraneous substance, which is one example of the characteristic of the extraneous substance, on the basis of the extraneous substance measured information. The shape of the extraneous substance may include a two-dimensional shape (for example, a shape in a plane along the XY plane) of the extraneous substance, and may include a three- dimensional shape of the extraneous substance. For example, the control apparatus 2 may calculate a size of the extraneous substance, which is one example of the characteristic of the extraneous substance, on the basis of the extraneous substance measured information. The size of the extraneous substance may include at least one of a size of the extraneous substance in the X axis direction, a size of the extraneous substance in the Y axis direction and a size of the extraneous substance in the Z axis direction. In this case, the extraneous substance measurement apparatus 31 may perform a measurement operation for measuring the characteristic of the extraneous substance that exists in the measurement target area AMA. Namely, the extraneous substance measurement apparatus 31 may perform a measurement operation for obtaining the extraneous substance measured information that is usable to calculate the characteristic of the extraneous substance in the measurement target area AMA.

When the extraneous substance exists in the measurement target area AMA, the control apparatus 2 may determine the number of the extraneous substance on the basis of the extraneous substance measured information. Namely, the control apparatus 2 may perform a number calculation operation for calculating the number of the extraneous substance as at least a part of the extraneous substance inspection operation. In this case, the extraneous substance measurement apparatus 31 may perform a measurement operation for measuring the number of the extraneous substance that exists in the measurement target area AMA. Namely, the extraneous substance measurement apparatus 31 may perform a measurement operation for obtaining the extraneous substance measured information that is usable to calculate the number of the extraneous substance in the measurement target area AMA.

The control apparatus 2 may perform the extraneous substance inspection operation on the basis of the extraneous substance measured information and feature information relating to a feature of the surface of the coat SF of paint (especially, a feature of the measurement target area AMA of the surface of the coat SF of paint). For example, when the extraneous substance does not exist in the measurement target area AMA, an actual feature of the measurement target area AMA that is indicated by the extraneous substance measured information is expected to be same as a design feature (alternatively, an ideal feature) of the measurement target area AMA that is indicated by the feature information. On the other hand, when the extraneous substance exists in the measurement target area AMA, there is a high possibility that the actual feature of the measurement target area AMA that is indicated by the extraneous substance measured information is not same as the design feature (alternatively, the ideal feature) of the measurement target area AMA that is indicated by the feature information. Thus, the control apparatus 2 may perform the extraneous substance inspection operation by comparing the extraneous substance measured information with the feature information.

The extraneous substance measurement apparatus 31 may be any measurement apparatus, as long as it is configured to obtain the extraneous substance measured information that is usable for the extraneous substance inspection operation. For example, the extraneous substance measurement apparatus 31 may be configured to measure the surface of the coat SF of paint in a non-contact manner. A measurement apparatus that is configured to optically measure the surface of the coat SF of paint is one example of the measurement apparatus that is configured to measure the surface of the coat SF of paint in a non-contact manner. A measurement apparatus that measures the surface of the coat SF of paint by using at least one of sound and electrical wave is another example of the measurement apparatus that is configured to measure the measurement target area AMA in a non-contact manner.

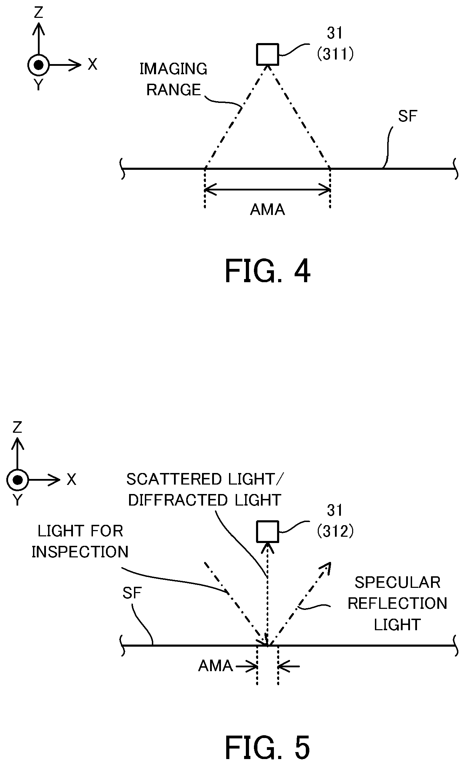

The extraneous substance measurement apparatus 31 may include, as one example of the measurement apparatus that is configured to optically measure the measurement target area AMA, an imaging apparatus (namely, a camera) 311 that is configured to image the surface of the coat SF of paint. For example, FIG. 4 is a cross-sectional view that illustrates the extraneous substance measurement apparatus 31 including the imaging apparatus 311. Note that the imaging apparatus 311 here means an apparatus that is configured to image a condition of the surface of the coat SF of paint as an image by using an imaging element in which light reception elements (namely, light reception apparatuses) that are configured to optically receive light from the surface of the coat SF of paint are arranged regularly. At least one of a CCD (Charge Coupled Device) image sensor and a CMOS (Complementary Metal Oxide Semiconductor) image sensor is one example of the imaging element. In this case, the control apparatus 2 may perform the extraneous substance inspection operation by analyzing the image captured by the imaging apparatus 311. Incidentally, when the extraneous substance measurement apparatus 31 includes the imaging apparatus 311, an area of the surface of the coat SF of paint that is included in an imaging range of the imaging apparatus 311 may be the measurement target area AMA.

The extraneous substance measurement apparatus 31 may include, as one example of the measurement apparatus that is configured to optically measure the measurement target area AMA, a light reception apparatus 312 that is configured to optically receive the light from the surface of the coat SF of paint. For example, FIG. 5 is a cross-sectional view that illustrates the extraneous substance measurement apparatus 31 including the light reception apparatus 312. Here, when the extraneous substance exists on the surface of the coat SF of paint, there is a higher possibility that light for an extraneous substance inspection, with which the surface of the coat SF of paint (especially, the extraneous substance) is irradiated, is scattered and / or diffracted by the surface of the coat SF of paint, compared to the case where n the extraneous substance does not exist on the surface of the coat SF of paint. In this case, there is a relatively high possibility that scattered light that is scattered by the surface of the coat SF of paint and / or diffracted light that is diffracted by the surface of the coat SF of paint propagates in a direction that is different from a direction in which a specular reflection light of the light for the extraneous substance inspection propagates. Therefore, there is a possibility that the scattered light and / or the diffracted light includes information relating to the extraneous substance. Thus, the extraneous substance measurement apparatus 31 may include the light reception apparatus 312 that is configured to optically receive at least one of the scattered light that is scattered by the surface of the coat SF of paint and / or the diffracted light that is diffracted by the surface of the coat SF of paint, as illustrated in FIG. 5. In this case, the control apparatus 2 may calculate a characteristic (for example, an intensity and the like) of the scattered light and / or the diffracted light from a received result by the light reception apparatus 312 and may perform the extraneous substance inspection operation on the basis of the calculated characteristic of the scattered light and / or the diffracted light. Incidentally, when the extraneous substance measurement apparatus 31 includes the light reception apparatus 312, an area of the surface of the coat SF of paint that is irradiated with the light for the extraneous substance inspection (namely, an area from which the scattered light and / or the diffracted light emits) may be the measurement target area AMA.

Again in FIG. 1, the extraneous substance removal apparatus 32 removes the extraneous substance that exists on the surface of the coat SF of paint under the control of the control apparatus 2. Namely, the extraneous substance removal apparatus 32 performs an extraneous substance removal operation for removing the extraneous substance under the control of the control apparatus 2. Specifically, the extraneous substance removal apparatus 32 removes the extraneous substance in an area on the surface of the coat SF of paint that is included in a removal range from which the extraneous substance removal apparatus 32 is allowed to remove the extraneous substance (in the below described description, it is referred to as a "removal area RA"). Note that the extraneous substance removal apparatus 32 may remove the extraneous substance that exists on the surface of the coat SF of paint independently from the control of the control apparatus 2.

The removal area RA may be coincident with the above described measurement target area AMA. Namely, the extraneous substance measurement apparatus 31 and the extraneous substance removal apparatus 32 may be aligned so that the removal area RA is coincident with the measurement target area AMA. Alternatively, the removal area RA may partially overlap with the above described measurement target area AMA. Namely, the extraneous substance measurement apparatus 31 and the extraneous substance removal apparatus 32 may be aligned so that the removal area RA partially overlaps with the measurement target area AMA. Alternatively, the removal area RA may not overlap with the above described measurement target area AMA. Namely, the extraneous substance measurement apparatus 31 and the extraneous substance removal apparatus 32 may be aligned so that the removal area RA partially does not overlap with the measurement target area AMA. Note that FIG. 1 illustrates an example in which the removal area RA is coincident with the measurement target area AMA.

The extraneous substance removal apparatus 32 is attached to the attachment member 19 to which the light irradiation apparatus 11 is attached. Thus, the extraneous substance removal apparatus 32 also moves along with the movement of the light irradiation apparatus 11 by the driving system 12. Namely, the extraneous substance removal apparatus 32 moves relative to the coat SF of paint with the light irradiation apparatus 11. As a result, the removal area RA in which the extraneous substance removal apparatus 32 removes the extraneous substance also moves on the coat SF of paint. Therefore, the extraneous substance removal apparatus 32 is allowed to remove the extraneous substance that exists in the removal area RA that is allowed to set on a desired area on the coat SF of paint. However, the extraneous substance removal apparatus 32 may not be attached to the attachment member 19. The extraneous substance removal apparatus 32 may be attached to a member that is different from the attachment member 19. The extraneous substance removal apparatus 32 may be attached to the light irradiation apparatus 11. The extraneous substance removal apparatus 32 may be movable independently from the light irradiation apparatus 11. The extraneous substance removal apparatus 32 may be movable independently from the extraneous substance measurement apparatus 31. The extraneous substance removal apparatus 32 may not be movable.

The extraneous substance removal apparatus 32 may include any apparatus, as long as it is configured to remove the extraneous substance. For example, the extraneous substance removal apparatus 32 may remove the extraneous substance from the removal area RA by supplying fluid to the removal area RA.

Specifically, for example, the extraneous substance removal apparatus 32 may remove the extraneous substance from the removal area RA by supplying gas, that is one example of the fluid, to the removal area RA. More specifically, for example, the extraneous substance removal apparatus 32 may blow out the gas to the removal area RA. In this case, the extraneous substance in the removal area RA is blown away by the gas that is blown out to the removal area RA. As a result, the extraneous substance is removed from the removal area RA.

Specifically, for example, the extraneous substance removal apparatus 32 may remove the extraneous substance from the removal area RA by supplying liquid, that is one example of the fluid, to the removal area RA, in addition to or instead of the gas. More specifically, for example, the extraneous substance removal apparatus 32 may spray (alternatively, jet) the liquid to the removal area RA. In this case, the extraneous substance in the removal area RA is flushed by the liquid that is sprayed to the removal area RA. As a result, the extraneous substance is removed from the removal area RA. Alternatively, the extraneous substance removal apparatus 32 may supply cleaning liquid (for example, liquid including cleaning agent such as interfacial active agent) to the removal area RA and then supply liquid (for example, water and the like) for flushing the cleaning liquid to the removal area RA, depending on a type of the extraneous substance or a degree of an adherence of the extraneous substance to the coat SF of paint. When the cleaning liquid is used in this manner, there is a higher possibility that even the extraneous substance that is difficult to be remove by the water and the like or the extraneous substance that adheres to the coat SF of paint relatively strongly is removed, compared to the case where the cleaning liquid is not used. Moreover, a process for promoting the removal of the extraneous substance may be performed on a part of the surface of the coat SF of paint to which the liquid is supplied (typically, the removal area RA) after the supply of the liquid or the cleaning liquid to the removal area RA or in parallel with the supply of the liquid, depending on a type of the extraneous substance or a degree of an adherence of the extraneous substance to the coat SF of paint. The process for promoting the removal of the extraneous substance may include at least one of a ultrasonic sound cleaning process by an irradiation of ultrasonic sound to the coat SF of paint, a bubble process by generating bubble (for example, micro bubble) in liquid, a wipe process for wiping the surface of the coat SF of paint by using a wiping member such as a fabric, a brush process for peeling the extraneous substance form the surface of the coat SF of paint by using many fine bar-shaped members (for example, a brush), and a polishing process for polishing the surface of the coat SF of paint by using a polishing member such as a polishing pad.

Note that the extraneous substance removal apparatus 32 may blow out a solid object (as one example, fine solid particle) to the removal area RA. In this case, the solid particle may be blown out to the removal area RA with fluid (gas, liquid).

However, when the extraneous substance is removed by using the liquid, there is a possibility that the liquid that remains on the surface of the coat SF of paint prevents the proper processing of the coat SF of paint by the irradiation of the processing light EL. Namely, there is a possibility that the remaining liquid may be new extraneous substance. Thus, after the extraneous substance is removed by using the liquid, a process for removing the liquid from the surface of the coat SF of paint may be performed and then the coat SF of paint may be processed. At least one of a process for drying the surface of the coat SF of paint that is wet with the liquid and a process for blowing way the liquid on the coat SF of paint by blowing out the gas to the coat SF of paint is one example of the process for removing the liquid from the surface of the coat SF of paint. Note that specific flows of the extraneous substance inspection operation using the extraneous substance measurement apparatus 31 and the extraneous substance removal operation using the extraneous substance removal apparatus 32 will be described later in detail, and thus, their detailed description is omitted here.

The display 4 is a display apparatus that is configured to display a desired image under the control of the control apparatus 2. For example, the display 4 may display information relating to the processing system SYSa. For example, the display 4 may display information relating to the processing target object S. For example, the display 4 may display information relating to the coat SF of paint. For example, the display 4 may display information relating to at least one of the processing operation, the extraneous substance inspection operation and the extraneous substance removal operation.

Note that the display 4 may not be in the processing system SYSa. For example, the display 4 may be disposed at the outside of the processing system SYSa as an external display. In this case, the display 4 may be connected to the processing system SYSa through a wired and / or wireless network (alternatively, a data bus and / or a communication line). In this case, the control apparatus 2 and the display 4 may be configured to transmit and receive (namely, input and output) various information through the network. The display 4 may be provided with a transmitting / receiving part (namely, an inputting / outputting part) that transmits and receives the information to and from the control apparatus 2 (moreover, to and from another apparatus of the processing system SYSa through or not through the control apparatus 2), and a displaying part that displays the image.

### (1-2) Specific Example of Operation by Processing System SYSa

### (1-3-1) Specific Example of Structure formed by Processing system SYSa

As described above by using FIG. 2, the processing system SYSa forms the concave part C at the coat SF of paint in the first embodiment. The concave part C is formed at a part of the coat SF of paint that is actually irradiated with the processing light EL. Thus, the concave part C is formable at a desired position of the coat SF of paint by properly setting a position on the coat SF of paint that is actually irradiated with the processing light EL (namely, a position at which the target irradiation area EA that is expected to be actually irradiated with the processing light EL is set). Namely, a structure of the coat SF of paint is formable on the processing target object S.

Specifically, the processing system SYSa moves the target irradiation area EA on the surface of the coat SF of paint by using at least one of the Galvano mirror 1122 and the driving system 12 as described above. The processing system SYSa emits the processing light EL at a timing when the target irradiation area EA overlaps with the area of the surface of the coat SF of paint that should be actually irradiated with the processing light EL (namely, that should be processed) in a period when the target irradiation area EA moves on the surface of the coat SF of paint. On the other hand, the processing system SYSa does not emit the processing light EL at a timing when the target irradiation area EA does not overlap with the area of the surface of the coat SF of paint that should be actually irradiated with the processing light EL in the period when the target irradiation area EA moves on the surface of the coat SF of paint. Namely, the processing system SYSa does not emit the processing light EL at a timing when the target irradiation area EA overlaps with an area of the surface of the coat SF of paint that should not be actually irradiated with the processing light EL (namely, that should not be processed) in the period when the target irradiation area EA moves on the surface of the coat SF of paint. As a result, the structure (namely, a pattern structure) of the coat SF of paint in accordance with a pattern (alternatively, a distribution) of the area that is actually irradiated with the processing light EL is formed on the processing target object S.

In the first embodiment, the processing system SYSa forms a riblet structure that is one example of the structure of the coat SF of paint on the processing target object S under the control of the control apparatus 2. The riblet structure is a structure by which a resistance (especially, a frictional resistance, a turbulent frictional resistance) of the surface of the coat SF of paint to a fluid is reducible. A resistance of the surface of the processing target object S on which the riblet structure is formed to the fluid is smaller than a resistance of the surface of the processing target object S on which the riblet structure is not formed to the fluid. Thus, it can be said that the riblet structure is a structure by which the resistance of the surface of the processing target object S to the fluid is reducible. Namely, it can be said that the riblet structure is a structure by which an aerodynamic characteristic of the processing target object S is changeable. Note that the fluid here may be any medium (gas, liquid) that flows relative to the surface of the coat SF of paint. For example, each of the medium that flows relative to the static processing target object SF and the static medium distributing around the moving processing target object SF is one example of the fluid.

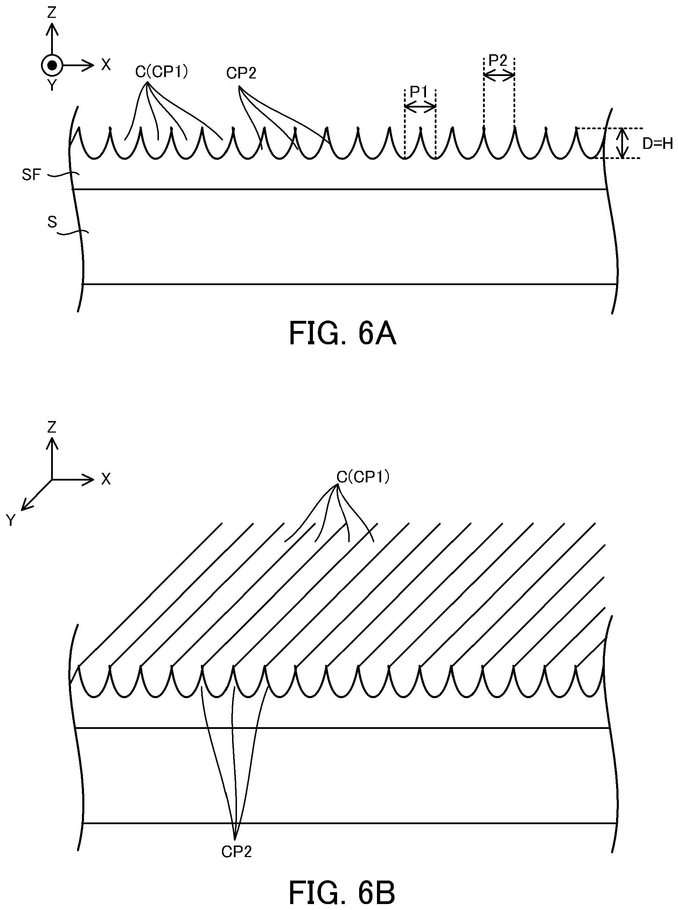

One example of the riblet structure is illustrated in FIG. 6A and FIG. 6B. As illustrated in FIG. 6A and FIG. 7B, the riblet structure is a structure in which a plurality of concave structures CP1 each of which is formed by sequentially forming the concave part C along a first direction (the Y axis direction in an example illustrated in FIG. 6A and FIG. 6B) (namely, a plurality of concave structures CP1 each of which is linearly formed to extend along the first direction) are arranged along a second direction (the X axis direction in the example illustrated in FIG. 6A and FIG. 6B) that intersects with the first direction, for example. Namely, the riblet structure is a structure in which the plurality of concave structures CP1 extending along the first direction have a periodical direction along the second direction that intersects with the first direction, for example. A convex structure CP2 that protrudes from a surrounding area substantially exists between two adjacent concave structures CP1. Therefore, it can be said that the riblet structure is a structure in which a plurality of convex structures CP2 each of which linearly extends along the first direction (for example, the Y axis direction) are arranged along the second direction (for example, the X axis direction) that intersects with the first direction, for example. Namely, it can be said the riblet structure is a structure in which the plurality of convex structures CP2 extending along the first direction have a periodical direction along the second direction that intersects with the first direction, for example. The riblet structure illustrated in FIG. 6A and FIG. 6B is a periodical structure. Note that the riblet structure may be non-periodical structure.

An interval between the two adjacent concave structures CP1 (namely, an arrangement pitch P1 of the concave structure CP1) is several microns to several hundred microns, for example, however, may be different size. Moreover, a depth (namely, a depth in the Z axis direction) D of each concave structure CP1 is several microns to several hundred microns, for example, however, may be different size. The depth D of each concave structure CP1 may be equal to or smaller than the arrangement pitch P1 of the concave structure CP1. The depth D of each concave structure CP1 may be equal to or smaller than a half of the arrangement pitch P1 of the concave structure CP1. A shape of a cross-sectional surface including the Z axis (specifically, a cross-sectional surface along the XZ plane) of each concave structure CP1 is a bowl-shaped curved shape, however, may be a triangle shape, may be a quadrangular shape, may be a polygonal shape more than a pentagonal shape.

An interval between the two adjacent convex structures CP2 (namely, an arrangement pitch P2 of the convex structure CP2) is several microns to several hundred microns, for example, however, may be different size. Moreover, a height (namely, a height in the Z axis direction) H of each convex structure CP2 is several microns to several hundred microns, for example, however, may be different size. The height H of each convex structure CP2 may be equal to or smaller than the arrangement pitch P2 of the convex structure CP2. The height H of each convex structure CP2 may be equal to or smaller than a half of the arrangement pitch P2 of the convex structure CP2. A shape of a cross-sectional surface including the Z axis (specifically, a cross-sectional surface along the XZ plane) of each convex structure CP2 is a chevron shape having a curved slope, however, may be a triangle shape, may be a quadrangular shape, may be a polygonal shape more than a pentagonal shape.

Note that the riblet structure itself formed by the processing system SYSa may be an existing riblet structure disclosed in "Mechanical Engineers' Handbook, Basic Edition, α4 Fluids Engineering", Chapter 5, edited by The Japan Society of Mechanical Engineers, for example, and a detailed description of the riblet structure itself is omitted.

As described above, the resistance of the surface of the processing target object S on which the riblet structure is formed to the fluid is reducible by the riblet structure like this. As described above, the resistance of the surface of the processing target object S on which the riblet structure is formed to the fluid is reducible by the riblet structure like this. Thus, the processing target object S is an object (for example, a structural object) the resistance of which to the fluid is desired to be reduced. For example, the processing target object S is an object (namely, a movable body) that is movable so that at least a part thereof travels in the fluid (for example, at least one of the gas and the liquid). Specifically, for example, the processing target object S may include an airframe (for example, at least one of a body PL1, a main wing PL2, a vertical tail PL3 and a horizontal tail PL4) of an airplane PL as illustrated in FIG. 7A to FIG. 7C. In this case, as illustrated in FIG. 7A to FIG. 7C, the processing apparatus 1 (alternatively, the processing system SYSa, same applies in this paragraph) may self-stands on the airframe of the airplane PL by the support apparatus 14. Alternatively, the processing apparatus 1 may adhere to the airframe of the airplane PL to suspend (namely, hang) from the airframe of the airplane PL by the support apparatus 14 as illustrated in FIG. 7B, because the end part 144 of the leg member 142 of the support apparatus 14 is configured to adhere to the coat SF of paint. Moreover, the processing apparatus 1 is capable of self-standing on the coat SF of paint even when the surface of the coat SF of paint is inclined with respect to the horizontal plane in a state where the surface of the coat SF of paint faces upwardly, because the end part 144 of the leg member 142 of the support apparatus 14 is configured to adhere to the coat SF of paint and the end part 134 of the partition member 132 of the housing apparatus 13 is configured to adhere to the coat SF of paint. Moreover, the processing apparatus 1 is capable of adhering to the coat SF of paint to suspend from the coat SF of paint even when the surface of the coat SF of paint is inclined with respect to the horizontal plane in a state where the surface of the coat SF of paint faces downwardly. Even in both cases, the light irradiation apparatus 11 is movable along the surface of the airplane PL by the driving system 12 and / or the movement of the support apparatus 14. Therefore, the processing system SYSa is capable of forming the riblet structure of the coat SF of paint at the processing target object S such as the airframe of the airplane (namely, the processing target object S the surface of which is a curved surface, the surface of which is inclined with respect to the horizontal plane or the surface of which faces downwardly).

Beyond that, for example, the processing target object S may include a vehicle body and an aerodynamic part of a vehicle. For example, the processing target object S may include a ship hull of a ship. For example, the processing target object S may include a body of a rocket. For example, the processing target object S may include a turbine (for example, at least one of a hydraulic turbine, a wind turbine and the like, especially a turbine blade thereof). For example, the processing target object S may include a component that constitutes the object at least a part of which travels in the fluid. For example, the processing target object S may include an object at least a part of which is fixed in the flowing fluid. Specifically, for example, the processing target object S may include a bridge column built in a river or a sea. For example, the processing target object S may include a pipe in which the fluid flows. In this case, an inner wall of the pipe may be the surface of the above described processing target object S.

Note that one example of the processing target object S described here is a relatively large object (for example, an object having a size of an order of several meters to several hundred meters). In this case, as illustrated in FIG. 7A to FIG. 7C, a size of the light irradiation apparatus 11 is smaller than a size of the processing target object S. However, the processing target object S may be an object having any size. For example, the processing target object S may be an object having a size of an order of kilometer, centimeter, millimeter or micrometer.

A characteristic of the above described riblet structure may be set to a proper characteristic by which an effect of a reduction of the resistance is properly achieved based on what object the processing target object S is. Namely, the characteristic of the above described riblet structure may be optimized so that the effect of a reduction of the resistance is properly achieved based on what object the processing target object S is. More specifically, the characteristic of the riblet structure may be set to a proper characteristic by which the effect of the reduction of the resistance is properly achieved based on at least one of a type of the fluid that distributes around the used (namely, operated) processing target object S, a relative velocity of the processing target object S relative to the fluid, a shape of the processing target object S and the like. Moreover, the characteristic of the above described riblet structure may be set to a proper characteristic by which the effect of the reduction of the resistance is properly achieved based on what object the processing target object S is and where the riblet structure is formed at the object. For example, when the processing target object S is the airframe of the airplane PL, the characteristic of the riblet structure formed at the body PL1 may be different from the characteristic of the riblet structure formed at the main wing PL2.

The characteristic of the riblet structure may include a size of the riblet structure. The size of the riblet structure may include at least one of the arrangement pitch P1 of the concave structure CP1, the depth D of each concave structure CP1, the arrangement pitch P2 of the convex structure CP2, the height H of each convex structure CP2 and the like. The characteristic of the riblet structure may include a shape (for example, the shape of the cross-sectional surface including the Z axis (specifically, the cross-sectional surface along the XZ plane)) of the riblet structure. The characteristic of the riblet structure may include an extending direction of the riblet structure (namely, an extending direction of the concave structure CP1). The characteristic of the riblet structure may include a formed position of the riblet structure.

As one example, when the processing target object S is the airframe of the airplane that flies at a 1000 kilometer per hour at an altitude of 10 kilometer in cruising, the arrangement pitch P1 of the concave structure CP1 (namely, the arrangement pitch P2 of the convex structure CP2) may be set to about 78 micrometers, for example.

### (1-2-2) Flow of Processing Operation

Next, with reference to FIG. 8 to FIG. 19, a flow of a processing operation for forming the riblet structure will be described.

Firstly, as described above, the plurality of processing lights EL are deflected by the Galvano mirror 1122. In order to form the riblet structure, the Galvano mirror 1122 deflects the plurality of processing lights EL to alternately repeat: a scan operation for moving the plurality of target irradiation areas EA along the Y axis on the surface of the coat SF of paint and irradiating the plurality of target irradiation areas EA with the plurality of processing lights EL, respectively, at a desired timing; and a step operation for moving the plurality of irradiation areas EA along at least the X axis on the surface of the coat SF of paint by a predetermined amount. In this case, the Y axis may be referred to as a scan axis and the X axis may be referred to as a step axis.

Here, a size of an area on the surface of the coat SF of paint that is swept with the plurality of processing lights EL by controlling the Galvano mirror 1122 without moving the light irradiation apparatus 11 relative to the coat SF of paint is limited. Therefore, in the first embodiment, as illustrated in FIG. 8, the control apparatus 2 sets a plurality of processing shot areas SA on the surface of the coat SF of paint (especially, an area of the coat SF of paint at which the riblet structure should be formed). Each processing shot area SA corresponds to an area that is sweepable with the plurality of processing lights EL by controlling the Galvano mirror 1122 without moving the light irradiation apparatus 11 relative to the coat SF of paint. A shape of each processing shot area SA is a quadrangular shape, however, may be any shape.

The control apparatus 2 controls the light irradiation apparatus 11 to irradiate a part of one processing shot area SA (for example, SA1) with the plurality of processing lights EL deflected by the Galvano mirror 1122 to form the riblet structure at one processing shot area SA (SA1). Then, the control apparatus 2 disposes the light irradiation apparatus 11 on a position from which another processing shot area SA (for example, SA2) is irradiated with the plurality of processing lights EL by controlling at least one of the driving systems 12 and 15 to move the light irradiation apparatus 11 relative to the coat SF of paint. Then, the control apparatus 2 controls the light irradiation apparatus 11 to irradiate another processing shot area SA (for example, SA2) with the plurality of processing lights EL deflected by the Galvano mirror 1122 to form the riblet structure at another processing shot area SA (SA2). The control apparatus 2 forms the riblet structure by repeating the following operation at all processing shot areas SA1 to SA16.

Next, an operation for forming the riblet structure at the processing shot areas SA1 to SA4 illustrated in FIG. 8 will be described as one example. Incidentally, in the below described description, an example in which two processing shot areas SA that are adjacent to each other along the X axis are located in the containing space SP will be described. However, the fact remains that same operation is performed even when any number of processing shot area SA is located in the containing space SP. Moreover, the operation for forming the riblet structure described below is merely one example, and the processing system SYS may form the riblet structure by performing an operation that is different from the below described operation. Namely, the processing system SYS may perform any operation as long as it forms the riblet structure on the processing target object S by irradiating the processing target object S with the plurality of processing lights EL.

As illustrated in FIG. 9, firstly, the control apparatus 2 controls the driving system 15 to move the support apparatus 14 relative to the coat SF of paint so that the housing apparatus 13 is disposed at a first housing position at which the processing shot areas SA1 and SA2 are located in the containing space SP. Namely, the control apparatus 2 moves the housing apparatus 13 supported by the support apparatus 14 so that the processing shot areas SA1 and SA2 are covered by the housing apparatus 13. Moreover, the control apparatus 2 controls the driving system 12 to move the light irradiation apparatus 11 relative to the coat SF of paint so that the light irradiation apparatus 11 is disposed at a first irradiation position from which the processing shot area SA1 is irradiated with the plurality of processing lights EL. After the housing apparatus 13 is disposed at the first housing position and the light irradiation apparatus 11 is disposed at the first irradiation position, the partition member 132 becomes to be the first expansion state. Therefore, the end part 134 of the partition member 132 contacts with and adheres to the coat SF of paint. Similarly, the plurality of leg members 142 becomes to be the second expansion state. Therefore, the end parts 144 of the plurality of leg members 142 contact with and adhere to the coat SF of paint.

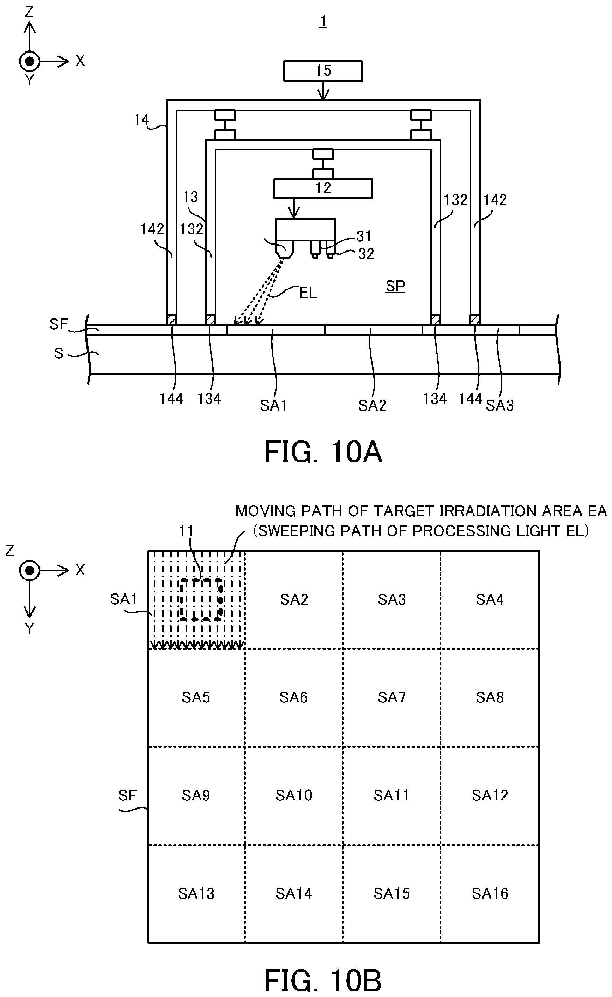

Then, as illustrated in FIG. 10A and FIG. 10B, the control apparatus 2 controls the light irradiation apparatus 11 (especially, the Galvano mirror 1122) to sweep the processing shot area SA1 with the plurality of processing lights EL. Specifically, the control apparatus 2 controls the Y scanning mirror 1122Y of the Galvano mirror 1122 to sweep a certain area in the processing shot area SA1 with the plurality of processing lights EL along the Y axis direction, in order to perform the above described scan operation. During a period when the scan operation is performed, the light source system 111 emits the plurality of processing lights EL. Then, the control apparatus 2 rotates at least the X scanning mirror 1122X of the Galvano mirror 1122 by a unit step amount, in order to perform the above described step operation. During a period when the step operation is performed, the light source system 111 does not emit the plurality of processing lights EL. Then, the control apparatus 2 controls the Y scanning mirror 1122Y of the Galvano mirror 1122 to sweep a certain area in the processing shot area SA1 with the plurality of processing lights EL along the Y axis direction, in order to perform the above described scan operation. In this manner, the control apparatus 2 controls the Galvano mirror 1122 to sweep whole of the processing shot area SA1 (alternatively, a partial area at which the riblet structure should be formed in the processing shot area SA1) with the plurality of processing lights EL by alternately repeating the scan operation and the step operation. Note that the plurality of processing lights EL may be emitted during the period when the step operation is performed.

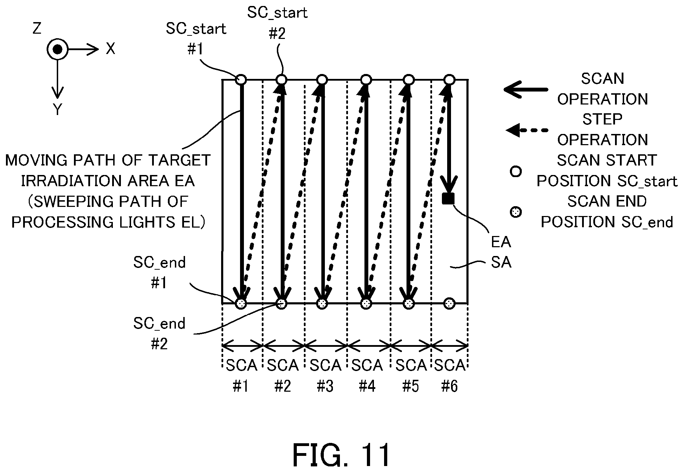

Namely, in the first embodiment, as illustrated in FIG. 11 that is a plan view that illustrates a sweeping path of the processing lights EL (namely, a moving path of the target irradiation areas EA) during a period when the scan operation and the step operation are repeated, the processing apparatus 1 performs the scan operation in a plurality of scan areas SCA set in the processing shot area EA in sequence. FIG. 11 illustrates an example in which six scan areas SCA#1 to SCA#6 are set in the processing shot area SA. Each scan area SCA is an area that is swept by the plurality of processing lights EL that are emitted by one scan operation (namely, a series of scan operation without performing the step operation). Each scan area SCA is an area in which the plurality of target irradiation areas EA move by one scan operation. In this case, the plurality of target irradiation areas EA move from a scan start position SC_start to a scan end position SC_end in each scan area SCA by one scan operation. This scan area SCA is typically an area that extends along the Y axis direction (namely, a sweeping direction of the plurality of processing lights EL). The plurality of scan areas SCA are arranged along the X axis direction (namely, a direction that intersects with the sweeping direction of the plurality of processing lights EL).

In this case, the processing system SYSa starts the scan operation at one scan area SCA, which is located at the most +X side or the most -X side, of the plurality of scan areas SCA set in a certain processing shot area SA, for example. For example, FIG. 11 illustrates an example in which the processing system SYSa starts the scan operation at a scan area SCA#1 that is located at the most -X side. In this case, the control apparatus 2 controls the Galvano mirror 1122 so that a scan start position SC_start#1 of the scan area SCA#1 (for example, an end part at the -Y side or a neighborhood thereof in the scan area SCA#1) is irradiated with the processing lights EL. Namely, the control apparatus 2 controls the Galvano mirror 1122 so that the target irradiation areas EA are set on the scan start position SC_start#1 of the scan area SCA#1. Then, the processing system SYSa performs the scan operation in the scan area SCA#1. Specifically, the control apparatus 2 controls the Galvano mirror 1122 so that the plurality of target irradiation areas EA move from the scan start position SC_start#1 of the scan area SCA#1 to a scan end position SC_end#1 of the scan area SCA#1 (for example, an end part at the +Y side or a neighborhood thereof in the scan area SCA#1). Moreover, the control apparatus 2 controls the light irradiation apparatus 11 so that the plurality of target areas EA are irradiated with the plurality of processing lights EL at a desired timing. As a result, the scan area SCA#1 is swept by the plurality of processing lights EL. Note that FIG. 11 illustrates the moving path of one target irradiation area EA in each scan area SCA for the purpose of simple illustration, however, the plurality of target irradiation areas EA move in the scan area SCA actually. Namely, FIG. 11 illustrates the sweeping path of one processing light EL in each scan area SCA for the purpose of simple illustration, however, the scan area SCA is swept by the plurality of processing lights EL actually.

After the scan operation in the scan area SCA#1 is completed, the processing system SYSa performs the step operation in order to perform the scan operation in another scan area SCA that is different from the scan area SCA#1. Specifically, the control apparatus 2 controls the Galvano mirror 1122 so that a scan start position SC_start#2 of a scan area SCA#2 (for example, an end part at the -Y side or a neighborhood thereof in the scan area SCA#2) that is adjacent to the scan area SCA#1 along the X axis direction is irradiated with the processing lights EL. Namely, the control apparatus 2 controls the Galvano mirror 1122 so that the target irradiation areas EA are set on the scan start position SC_start#2 of the scan area SCA#2. As a result, as illustrated in FIG. 11, the target irradiation areas EA move along each of the X axis direction and the Y axis direction. In this case, a moving distance of the target irradiation areas EA along the X axis direction may be equal to a size of the scan area SCA along the X axis direction. A moving distance of the target irradiation areas EA along the Y axis direction may be equal to a size of the scan area SCA along the Y axis direction.

Then, the processing system SYSa performs the scan operation in the scan area SCA#2. Specifically, the control apparatus 2 controls the Galvano mirror 1122 so that the plurality of target irradiation areas EA move from the scan start position SC_start#2 of the scan area SCA#2 to a scan end position SC_end#2 of the scan area SCA#2 (for example, an end part at the +Y side or a neighborhood thereof in the scan area SCA#2). Moreover, the control apparatus 2 controls the light irradiation apparatus 11 so that the plurality of target areas EA are irradiated with the plurality of processing lights EL at a desired timing. As a result, the scan area SCA#2 is swept by the plurality of processing lights EL.

Then, same operation is repeated until the scan operations in the scan areas SCA#3 to SCA#6 are completed.

In the example illustrated in FIG. 11, the sweeping direction of the processing lights EL by the scan operation is fixed to the +Y axis direction. The moving direction of the target irradiation areas EA by the scan operation is fixed to the +Y axis direction. Namely, in the example illustrated in FIG. 11, the sweeping directions of the processing light EL (namely, the moving directions of the target irradiation area EA, the same applies the below described description) by the plurality of scan operations performed in the scan area SCA are same as each other. The sweeping directions of the plurality of processing lights EL with which the plurality of scan areas SCA are swept, respectively, are same as each other. The moving directions of the target irradiation areas EA in the plurality of scan areas SCA are same as each other. Specifically, the sweeping direction of the processing lights EL by the scan operation performed in the scan area SCA#1, the sweeping direction of the processing lights EL by the scan operation performed in the scan area SCA#2, ..., and the sweeping direction of the processing lights EL by the scan operation performed in the scan area SCA#6 are same as one another.

The riblet structure is formed in the processing shot area SA1 by repeating the scan operation and the step operation in this manner. Note that a width of an area that is swept by the processing lights EL (namely, a width of the processing shot area SA, especially, a width in the X axis direction) is wider than a width (especially, a width in the X axis direction) of the light irradiation apparatus 11, as illustrated in FIG. 10A and FIG. 10B.

During a period when the scan operation and the step operation are repeated in this manner, a positional error of the target irradiation areas EA may be caused by the operation of the Galvano mirror 1122. For example, when the Galvano mirror 1122 keeps operating, there is a possibility that a temperature of the Galvano mirror 1122 changes (typically, increases). When the temperature of the Galvano mirror 1122 changes, there is a possibility that a characteristic of the Galvano mirror 1122 changes compared to that before the temperature of the Galvano mirror 1122 changes. As a result, there is a possibility that the positions of the target irradiation areas EA relative to the Galvano mirror 1122 change (namely, the positional error of the target irradiation areas EA is caused). There is a possibility that the positional error of the target irradiation areas EA prevents a proper processing of the coat SF of paint. Thus, the control apparatus 2 may control the driving system 12 to move the light irradiation apparatus 11 relative to the coat SF of paint so as to reduce the positional error of the target irradiation areas EA (namely, allow the target irradiation areas EA to be closer to original positions).

The control apparatus 2 controls the driving system 15 so that the plurality of leg members 142 continue to be in the second expansion state during a period when the light irradiation apparatus 11 emits the processing lights EL. As a result, the end parts 144 of the plurality of leg members 142 continue to adhere to the coat SF of paint. As a result, the stability of the support apparatus 14 improves, and thus, there is a low possibility that the irradiation areas EA of the processing lights EL are displaced on the coat SF of paint accidentally due to an instability of the support apparatus 14. However, a part of the plurality of leg members 142 may be in the second contraction state as long as the support apparatus 14 is capable of self-standing on the coat SF of paint (alternatively, is capable of adhering to the coat SF of paint to suspend from the coat SF of paint) during at least a part of the period when the light irradiation apparatus 11 emits the processing lights EL.

The control apparatus 2 controls the non-illustrated driving system that extends and contracts the partition member 132 so that the partition member 132 continues to be in the first expansion state during the period when the light irradiation apparatus 11 emits the processing lights EL. As a result, the end part 134 of the partition member 132 continues to adhere to the coat SF of paint. As a result, the sealability of the containing space SP is maintained, and thus, the processing light EL propagating in the containing space SP does not leak outside the containing space SP (namely, outside the housing apparatus 13). Moreover, the unnecessary substance that is generated in the containing space SP does not leak outside the containing space SP (namely, outside the housing apparatus 13).

Note that there is a possibility that at least a part of the end part 134 that should adhere to the coat SF of paint is away from the coat SF of paint due to any factor. When the light irradiation apparatus 11 continues to emit the processing lights EL in this situation, there is a possibility that at least one of the processing light EL and the unnecessary substance leaks outside the housing apparatus 13. Thus, the control apparatus 2 may control the light irradiation apparatus 11 to stop the irradiation of the processing lights EL when it is detected that at least a part of the end part 134 is away from the coat SF of paint during the period when the light irradiation apparatus 11 emits the processing lights EL.

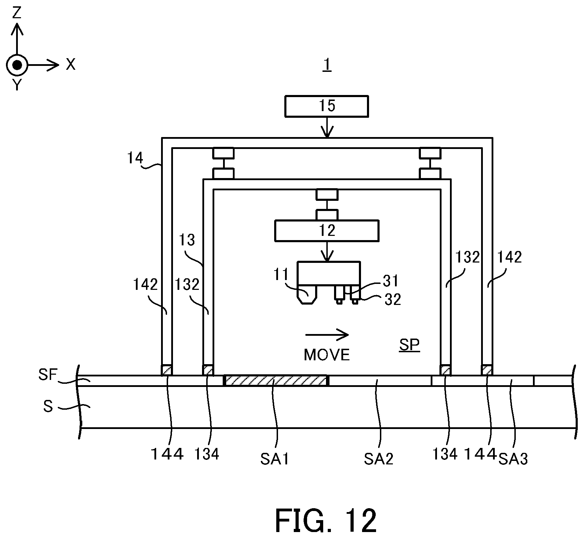

Then, as illustrated in FIG. 12, the control apparatus 2 controls the driving system 12 so that the light irradiation apparatus 11 moves from the first irradiation position to a second irradiation position at which the light irradiation apparatus 11 irradiates the processing shot area SA2 with the plurality of processing lights EL. During a period when the light irradiation apparatus 11 moves, the control apparatus 2 controls the light irradiation apparatus 11 so that the light irradiation apparatus 11 does not emit the processing lights EL.

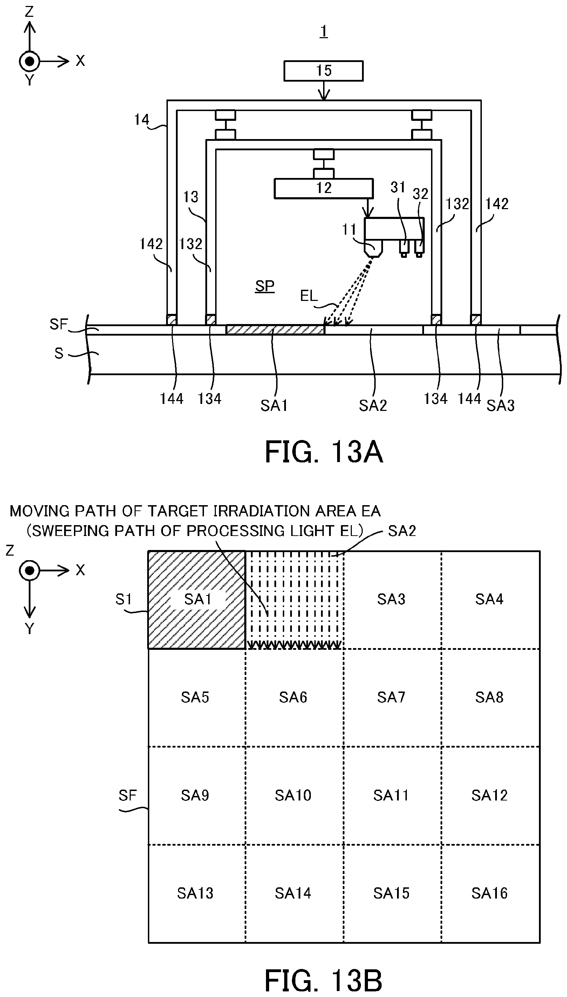

Then, as illustrated in FIG. 13A and FIG. 13B, the control apparatus 2 controls the light irradiation apparatus 11 (especially, the Galvano mirror 1122) to sweep the processing shot area SA2 with the plurality of processing lights EL. Specifically, the control apparatus 2 controls the light irradiation apparatus 11 (especially, the Galvano mirror 1122) to sweep whole of the processing shot area SA2 (alternatively, a partial area at which the riblet structure should be formed in the processing shot area SA2) with the plurality of processing lights EL by alternately repeating the above described scan operation and the above described step operation. As a result, the riblet structure is formed in the processing shot area SA2. Note that the plurality of concave structures CP1 constituting the riblet structure in the processing shot area SA1 and the plurality of concave structures CP1 constituting the riblet structure in the processing shot area SA2 (alternatively, other processing shot area SA) that is adjacent to the processing shot area SA1 may be formed to be sequentially connected to each other. Alternatively, the plurality of concave structures CP1 constituting the riblet structure in the processing shot area SA1 and the plurality of concave structures CP1 constituting the riblet structure in the processing shot area SA2 may be formed not to be sequentially connected to each other. For example, a sequential length of one concave structure CP1 formed by sweeping the processing shot area SA with the processing light EL depends on the size (especially, the size along the Y axis direction that is the sweeping direction of the processing light EL) of the processing shot area SA. Therefore, when the size of the processing shot area SA is a size that realizes the sequential length allowing the riblet structure to have the above described function, the plurality of concave structures CP1 constituting the riblet structure in the processing shot area SA1 and the plurality of concave structures CP1 constituting the riblet structure in the processing shot area SA2 may be formed not to be sequentially connected to each other, respectively. As one example, when the processing target object S is the airplane, the sequential length allowing the riblet structure to have the above described function is about several millimeter in accordance with a calculation based on an air speed and a frequency of turbulence phenomenon when the airplane is used (typically, cruises). Thus, when the processing shot area SA the size of which is longer than about several millimeter in the Y axis direction is allowed to be set on the surface of the coat SF of paint, the plurality of concave structures CP1 constituting the riblet structure in the processing shot area SA1 and the plurality of concave structures CP1 constituting the riblet structure in the processing shot area SA2 may be formed not to be sequentially connected to each other, respectively.

After the riblet structure is formed in the processing shot area SA2, there is no processing shot area SA in which the riblet structure is not formed yet in the containing space SP. Thus, it is difficult for the light irradiation apparatus 11 to irradiate the processing shot area SA in which the riblet structure is not formed yet with the plurality of processing lights EL to form the riblet structure therein only by moving the light irradiation apparatus 11 in the containing space SP by the driving system 12. Thus, when there is no processing shot area SA in which the riblet structure is not formed yet in the containing space SP, the control apparatus 2 controls the driving system 15 to move the support apparatus 14 (namely, to move the housing apparatus 13) so that the processing shot area SA in which the riblet structure is not formed yet is located in the containing space SP.

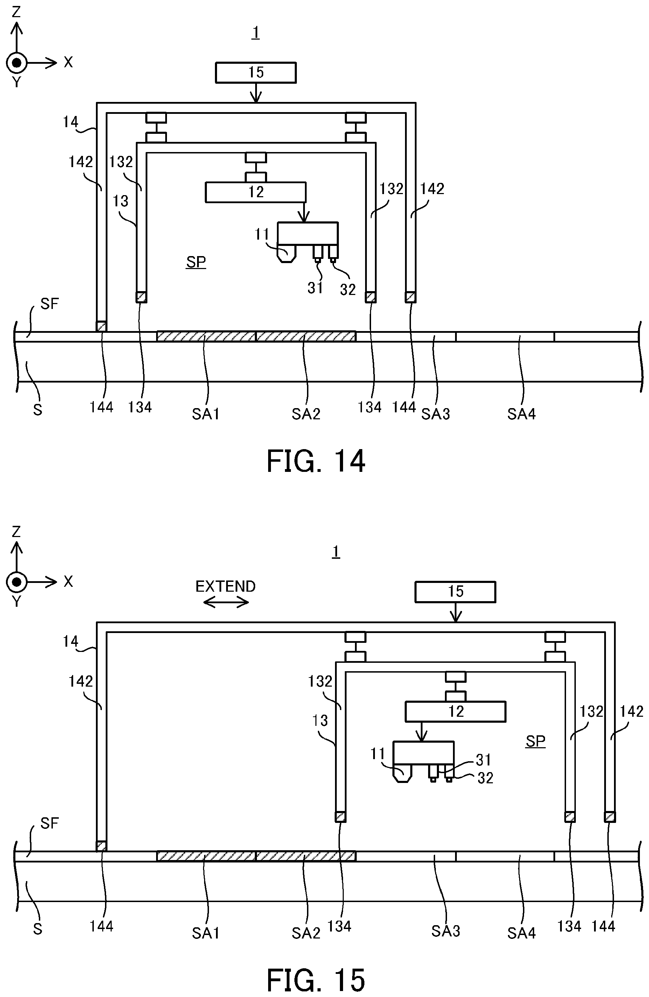

Specifically, firstly, as illustrated in FIG. 14, the control apparatus 2 controls the non-illustrated driving system that extends and contracts the partition member 132 so that the state of the partition member 132 is switched from the first expansion state to the first contraction state. As a result, the end part 134 of the partition member 132 is away from the coat SF of paint. Note that the control apparatus 2 controls the light irradiation apparatus 11 so that the light irradiation apparatus 11 does not emit the processing lights EL during a period when the support apparatus 14 moves. Thus, even when the end part 134 is away from the coat SF of paint, at least one of the processing light EL and the unnecessary substance does not leak outside the housing apparatus 13.

However, although the unnecessary substance existing in the containing space SP is sucked to the outside of the containing space SP by the above described exhaust apparatus 16, there is a possibility that all of the unnecessary substance existing in the containing space SP is not sucked by the exhaust apparatus 16 (namely, the unnecessary substance remains in the containing space SP) due to any factor. In this case, when the end part 134 is away from the coat SF of paint, there is a possibility that the unnecessary substance leaks outside the housing apparatus 13. Thus, the control apparatus 2 may determine on the basis of the detected result by the detection apparatus 135 that detects the unnecessary substance in the containing space SP whether or not the partition member 132 is switched from the first expansion state to the first contraction state. When the unnecessary substance remains in the containing space SP, the control apparatus 2 does not switch the partition member 132 from the first expansion state to the first contraction state. In this case, the exhaust apparatus 16 continues to suck the unnecessary substance remaining in the containing space SP. On the other hand, when the unnecessary substance does not remain in the containing space SP, the control apparatus 2 switches the partition member 132 from the first expansion state to the first contraction state.

Moreover, the control apparatus 2 controls the driving system 15 so that the state of at least one leg member 142 that moves relative to the coat SF of paint due to the movement of the support apparatus 14 (especially, the expansion of the contracted beam member 141 described later) among the plurality of leg members 142 is switched from the second expansion state to the second contraction state. The leg member 142 that moves relative to coat SF of paint due to the expansion of the contracted beam member 141 is typically the leg member 142 that is disposed at a front side along a moving direction of the support apparatus 14 (namely, a moving direction of the housing apparatus 13) among the plurality of leg members 142. In an example illustrated in FIG. 14, the support apparatus 14 moves toward the +X side and the leg member 142 that is disposed at the front side along the moving direction of the support apparatus 14 is the leg member 142 at the +X side. Hereinafter, the leg member 142 that is disposed at the front side along the moving direction of the support apparatus 14 is referred to as a "front leg member 142". As a result, the end part 144 of the front leg member 142 is away from the coat SF of paint.

Then, as illustrated in FIG. 15, the control apparatus 2 controls the driving system 15 so that the housing apparatus 13 moves from the first housing position to a second housing position at which the processing shot areas SA3 and SA4 are located in the containing space SP. Specifically, the control apparatus 2 controls the driving system 15 so that the beam member 141 extends along the moving direction of the support apparatus 14. As a result, the beam member 141 extends while supporting the housing apparatus 13 (moreover, while supporting the light irradiation apparatus 11 supported by the housing apparatus 13). Moreover, in parallel with the movement of the support apparatus 14, the control apparatus 2 controls the driving system 12 so that the light irradiation apparatus 11 moves from the second irradiation position to a third irradiation position at which the light irradiation apparatus 11 irradiates the processing shot area SA3 with the plurality of processing lights EL. In this manner, in the first embodiment, the support apparatus 14 is configured to self-run in a state where it is supported by the processing target object S. Thus, the support apparatus 14 may be referred to as a self-running apparatus.

The control apparatus 2 controls the non-illustrated driving system that extends and contracts the partition member 132 so that the partition member 132 continues to be in the first contraction state during the period when the support apparatus 14 moves (namely, the contracted beam member 141 extends). As a result, the movement of the support apparatus 14 (namely, the movement of the housing apparatus 13) is not prevented by a contact between the end part 134 of the partition member 132 and the coat SF of paint. Moreover, the coat SF of paint is not scratched by the contact between the end part 134 and the coat SF of paint when the support apparatus 14 moves. However, when the contact between the end part 134 and the coat SF of paint does not prevent movement of the support apparatus 14, at least a part of the end part 134 may contact with the coat SF of paint during at least a part of the period when the support apparatus 14 moves. When the contact between the end part 134 and the coat SF of paint does not scratch the coat SF of paint during the period when the support apparatus 14 moves, at least a part of the end part 134 may contact with the coat SF of paint during at least a part of the period when the support apparatus 14 moves.

Moreover, the control apparatus 2 controls the driving system 15 so that the front leg member 142 continues to be in the second contraction state during the period when the support apparatus 14 moves. As a result, the movement of the support apparatus 14 (namely, the movement of the housing apparatus 13) is not prevented by a contact between the end part 144 of the front leg member 142 and the coat SF of paint. Moreover, the coat SF of paint is not scratched by the contact between the end part 144 and the coat SF of paint when the support apparatus 14 moves. However, when the contact between the end part 144 and the coat SF of paint does not prevent movement of the support apparatus 14, at least a part of the end part 144 may contact with the coat SF of paint during at least a part of the period when the support apparatus 14 moves. When the contact between the end part 144 and the coat SF of paint does not scratch the coat SF of paint during the period when the support apparatus 14 moves, at least a part of the end part 144 may contact with the coat SF of paint during at least a part of the period when the support apparatus 14 moves.

Moreover, the control apparatus 2 controls the driving system 15 so that the other leg member 142 of the plurality of leg members 142 other than the front leg member 142 continues to be in the first expansion state during the period when the support apparatus 14 moves. As a result, even when the end part 144 of the front leg member 142 is away from the coat SF of paint, the end part 144 of the leg member 142 other than the front leg member 142 contacts with the coat SF of paint. Thus, the fact remains that the processing apparatus 1 is capable of self-standing on the coat SF of paint (alternatively, is capable of adhering to the coat SF of paint to suspend from the coat SF of paint), as with the case where all end parts 144 of the plurality of leg members 142 contact with the coat SF of paint.

Moreover, during the period when the support apparatus 14 moves, the control apparatus 2 controls the light irradiation apparatus 11 so that the light irradiation apparatus 11 does not emit the processing lights EL.

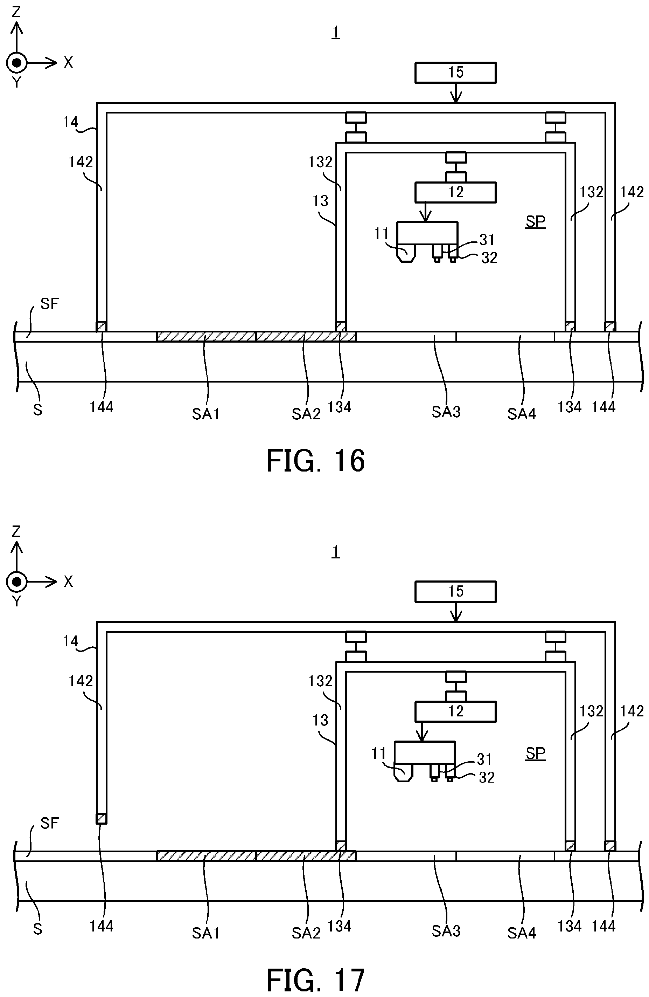

After the housing apparatus 13 is disposed at the second housing position, as illustrated in FIG. 16, the control apparatus 2 controls the non-illustrated driving system that extends and contracts the partition member 132 so that the partition member 132 is switched from the first contraction state to the first expansion state. As a result, the end part 134 of the partition member 132 contacts with and adheres to the coat SF of paint. Moreover, the control apparatus 2 controls the driving system 15 so that the front leg member 142 is switched from the second contraction state to the second expansion state. As a result, the end part 144 of the front leg member 142 contacts with and adheres to the coat SF of paint. Here, an operation for extending the partition member 132 and an operation for extending the front leg member 142 may be performed at the same time or may be performed at different times.

Then, as illustrated in FIG. 17, the control apparatus 2 controls the driving system 15 so that the state of at least one leg member 142 that moves relative to the coat SF of paint due to the movement of the support apparatus 14 (especially, the contraction of the extended beam member 141 described later) among the plurality of leg members 142 is switched from the second expansion state to the second contraction state. The leg member 142 that moves relative to coat SF of paint due to the contraction of the extended beam member 141 is typically the leg member 142 that is disposed at a rear side along the moving direction of the support apparatus 14 among the plurality of leg members 142. In an example illustrated in FIG. 17, the leg member 142 that is disposed at the rear side along the moving direction of the support apparatus 14 is the leg member 142 at the -X side. Hereinafter, the leg member 142 that is disposed at the rear side along the moving direction of the support apparatus 14 is referred to as a "rear leg member 142". As a result, the end part 144 of the rear leg member 142 is away from the coat SF of paint.

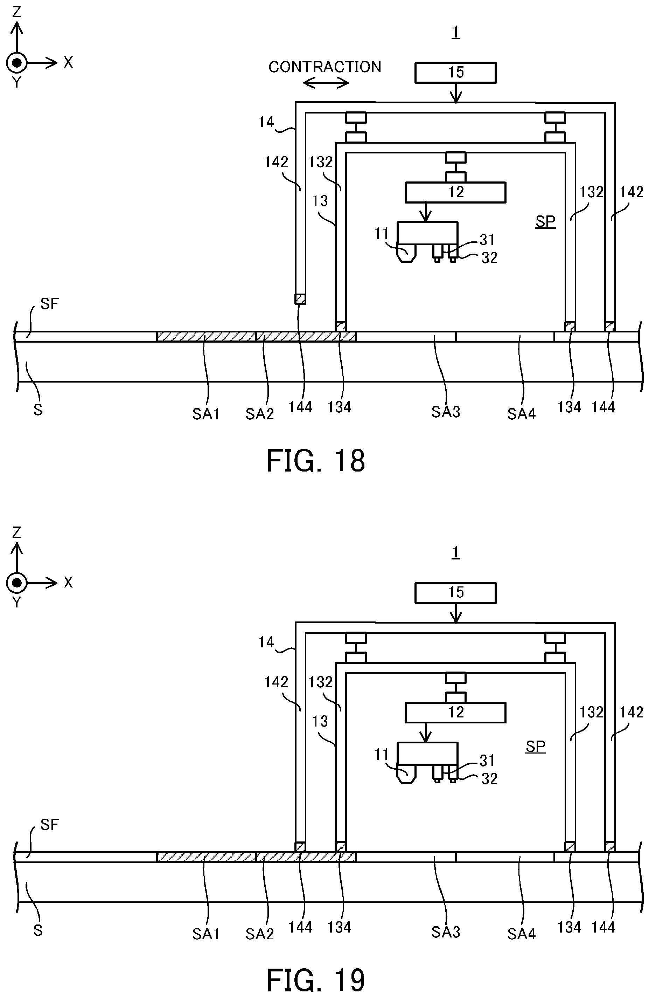

Then, as illustrated in FIG. 18, the control apparatus 2 controls the driving system 15 to contract the beam member 141 extending along the moving direction of the support apparatus 14.

After the beam member 141 finishes contracting, as illustrated in FIG. 19, the control apparatus 2 controls the driving system 15 so that the second leg member 142 is switched from the second contraction state to the second expansion state. As a result, the end part 144 of the rear leg member 142 contacts with and adheres to the coat SF of paint.

Then, the control apparatus 2 controls the light irradiation apparatus 11 to sweep the processing shot areas SA3 and SA4 with the plurality of processing lights EL, as with the case where the processing shot areas SA1 and SA2 are swept with the plurality of processing lights EL. Then, same operation is repeated, and thus, the surface of the coat SF of paint (especially, the area of the coat SF of paint at which the riblet structure should be formed) is irradiated with the plurality of processing lights EL. As a result, the riblet structure of the coat SF of paint is formed on the processing target object S.

### (1-2-3) Extraneous Substance Inspection Operation and Extraneous Substance Removal Operation

As described above, the extraneous substance measurement apparatus 31 and the control apparatus 2 perform the extraneous substance inspection operation. In the first embodiment, the extraneous substance measurement apparatus 31 and the control apparatus 2 perform the extraneous substance inspection operation in one target area of the surface of the coat SF of paint before the processing operation is performed in one target area. Namely, the processing apparatus 1 performs the processing operation in one target area after the extraneous substance inspection operation is performed in one target area of the surface of the coat SF of paint. The processing apparatus 1 performs the processing operation in an inspected area of the surface of the coat SF of paint in which the extraneous substance inspection operation has been performed. The processing apparatus 1 may not perform the processing operation in a non-inspected area of the surface of the coat SF of paint in which the extraneous substance inspection operation is not performed. However, the processing apparatus 1 may perform the processing operation in at least a part of the non-inspected area of the surface of the coat SF of paint in which the extraneous substance inspection operation is not performed.

For example, the extraneous substance measurement apparatus 31 and the control apparatus 2 may perform the extraneous substance inspection operation in one processing shot area SA of the plurality of processing shot areas SA before the processing operation is performed in one processing shot area SA. Namely, the processing apparatus 1 may perform the processing operation in one processing shot area SA after the extraneous substance inspection operation is performed in one processing shot area SA. The processing apparatus 1 may perform the processing operation in the processing shot area SA on the surface of the coat SF of paint in which the extraneous substance inspection operation has been performed. The processing apparatus 1 may not perform the processing operation in the processing shot area SA on the surface of the coat SF of paint in which the extraneous substance inspection operation is not performed.

For example, the extraneous substance measurement apparatus 31 and the control apparatus 2 may perform the extraneous substance inspection operation in one area part in one processing shot area SA before the processing operation is performed in one area part in one processing shot area SA. Namely, the processing apparatus 1 may perform the processing operation in one area part in one processing shot area SA after the extraneous substance inspection operation is performed in one area part in one processing shot area SA. The processing apparatus 1 may perform the processing operation in an inspected area part of one processing shot area SA in which the extraneous substance inspection operation has been performed. The processing apparatus 1 may not perform the processing operation in a non-inspected area part of one processing shot area SA in which the extraneous substance inspection operation is not performed.

The extraneous substance measurement apparatus 31 and the light irradiation apparatus 11 may be aligned so as to realize a situation where the extraneous substance inspection operation is performed before the processing operation is performed. Specifically, the extraneous substance measurement apparatus 31 and the light irradiation apparatus 11 may be aligned on the basis of a moving direction of the light irradiation apparatus 11. The extraneous substance measurement apparatus 31 and the light irradiation apparatus 11 may be aligned on the basis of the moving direction of the target irradiation areas EA, because the target irradiation areas EA move when the light irradiation apparatus 11 moves.

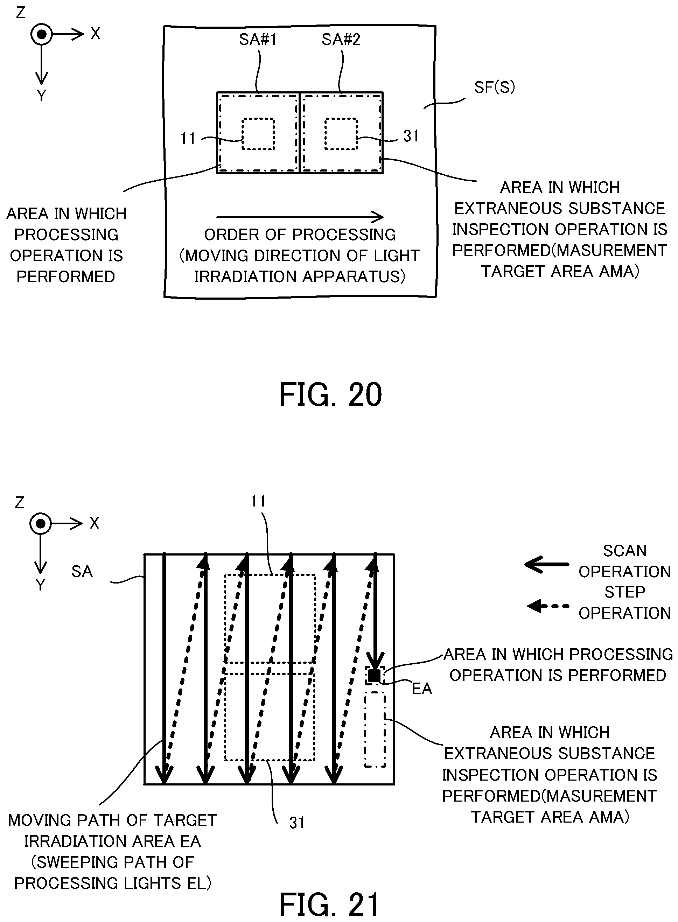

For example, FIG. 20 is a plan view that illustrates the two processing shot areas SA#1 and SA#2 set on the coat SF of paint. Especially, FIG. 20 illustrates an example in which the two processing shot areas SA#1 and SA#2 line up along the X axis direction and the processing shot area SA#2 is set at the +X side from the processing shot area SA#1. Here, when the light irradiation apparatus 11 performs the processing operation in the processing shot areas SA#1 and SA#2 in this order, the light irradiation apparatus 11 moves from above the processing shot area SA#1 to above the processing shot area SA#2. Namely, the light irradiation apparatus 11 moves relative to the coat SF of paint along the X axis direction toward the +X side. Moreover, the target irradiation areas EA also move relative to the coat SF of paint along the X axis direction toward the +X side along with the movement of the light irradiation apparatus 11. In this case, as illustrated in FIG. 20, the extraneous substance measurement apparatus 31 and the light irradiation apparatus 11 may be aligned so that the extraneous substance measurement apparatus 31 and the light irradiation apparatus 11 line up along the X axis direction (namely, the moving direction of the light irradiation apparatus 11 and the moving direction of the target irradiation areas EA). Moreover, as illustrated in FIG. 20, the extraneous substance measurement apparatus 31 and the light irradiation apparatus 11 may be aligned so that the extraneous substance measurement apparatus 31 is disposed at the +X side (namely, at a front side along the moving direction of the light irradiation apparatus 11 and at a front side along the moving direction of the target irradiation areas EA) from the light irradiation apparatus 11. As a result, as illustrated in FIG. 20, an area in which the processing operation is performed on the coat SF of paint and an area in which the extraneous substance inspection operation is performed on the coat SF of paint line up along the X axis direction (namely, the moving direction of the light irradiation apparatus 11 and the moving direction of the target irradiation areas EA). Moreover, as illustrated in FIG. 20, the area in which the extraneous substance inspection operation is performed is disposed at the +X side (namely, at the front side along the moving direction of the light irradiation apparatus 11 and at the front side along the moving direction of the target irradiation areas EA) from the area in which the processing operation is performed. Note that the area in which the processing operation is performed in FIG. 20 is typically an area that is irradiated with the processing lights EL by the light irradiation apparatus 11 (in an example illustrated in FIG. 20, an area that includes the processing shot area SA#1 at least partially). The area in which the extraneous substance inspection operation is performed in FIG. 20 is typically an area in which at least a part of the measurement target area AMA is set (in the example illustrated in FIG. 20, an area that includes the processing shot area SA#2 at least partially). As a result, the extraneous substance measurement apparatus 31 is allowed to perform the extraneous substance inspection operation in the processing shot area SA#2 before the processing apparatus 1 performs the processing operation in the processing shot area SA#2. The processing apparatus 1 is allowed to perform the processing operation in the processing shot area SA#1 after the extraneous substance measurement apparatus 31 performs the extraneous substance inspection operation in the processing shot area SA#1. Thus, the situation where the extraneous substance inspection operation is performed before the processing operation is performed is realizable.

In the example illustrated in FIG. 20, the extraneous substance measurement apparatus 31 may perform the extraneous substance inspection operation in the processing shot area SA#2 in at least a part of a period when the processing apparatus 1 performs the processing operation in the processing shot area SA#1. Namely, the processing operation in one area on the coat SF of paint by the processing apparatus 1 and the extraneous substance inspection operation in another area on the coat SF of paint by the extraneous substance measurement apparatus 31 may be performed in parallel. However, the processing operation in one area on the coat SF of paint by the processing apparatus 1 and the extraneous substance inspection operation in another area on the coat SF of paint by the extraneous substance measurement apparatus 31 may not be performed in parallel. For example, the extraneous substance measurement apparatus 31 may perform the extraneous substance inspection operation in at least a part of a period when the processing apparatus 1 does not perform the processing operation (namely, a period when the coat SF of paint is not irradiated with the processing lights EL).

Incidentally, in the example illustrated in FIG. 20, the light irradiation apparatus 11 and the extraneous substance measurement apparatus 31 may not line up along the X axis direction and the extraneous substance measurement apparatus 31 may not be disposed at the +X side from the light irradiation apparatus 11, as long as the area in which the processing operation is performed and the area in which the extraneous substance inspection operation is performed line up along the X axis direction and the area in which the extraneous substance inspection operation is performed is disposed at the +X side from the area in which the processing operation is performed. Namely, the extraneous substance measurement apparatus 31 and the light irradiation apparatus 11 may be aligned so that the area in which the processing operation is performed and the area in which the extraneous substance inspection operation is performed line up along the X axis direction and the area in which the extraneous substance inspection operation is performed is disposed at the +X side from the area in which the processing operation is performed. Even in this case, the situation where the extraneous substance inspection operation is performed before the processing operation is performed is realizable.

Alternatively, for example, FIG. 21 is a plan view that illustrates the moving path of the target irradiation areas EA by the processing operation that is performed in a certain processing shot area SA. As illustrated in FIG. 21 (moreover, as already described with reference to FIG. 11), the target irradiation areas EA move along the Y axis direction from the -Y side to the +Y side in the processing shot area SA by the scan operation. In this case, as illustrated in FIG. 21, the extraneous substance measurement apparatus 31 and the light irradiation apparatus 11 may be aligned so that the extraneous substance measurement apparatus 31 and the light irradiation apparatus 11 line up along the Y axis direction (namely, the moving direction of the target irradiation areas EA). Moreover, as illustrated in FIG. 21, the extraneous substance measurement apparatus 31 and the light irradiation apparatus 11 may be aligned so that the extraneous substance measurement apparatus 31 is disposed at the +Y side (namely, at the front side along the moving direction of the target irradiation areas EA) from the light irradiation apparatus 11. As a result, as illustrated in FIG. 21, the area in which the processing operation is performed on the coat SF of paint and the area in which the extraneous substance inspection operation is performed on the coat SF of paint line up along the Y axis direction (namely, the moving direction of the target irradiation areas EA). Moreover, as illustrated in FIG. 21, the area in which the extraneous substance inspection operation is performed is disposed at the +Y side (namely, at the front side along the moving direction of the target irradiation areas EA) from the area in which the processing operation is performed. Note that the area in which the processing operation is performed in FIG. 21 is typically an area in which the target irradiation areas EA are set. The area in which the extraneous substance inspection operation is performed in FIG. 21 is typically an area in which at least a part of the measurement target area AMA is set. As a result, the extraneous substance measurement apparatus 31 is allowed to perform the extraneous substance inspection operation in one area in the processing shot area SA before the processing apparatus 1 performs the processing operation in (specifically, emits the processing lights EL to) one area in the processing shot area SA. Thus, the situation where the extraneous substance inspection operation is performed before the processing operation is performed is realizable.

In the example illustrated in FIG. 21, the extraneous substance measurement apparatus 31 may perform the extraneous substance inspection operation in another area in a certain processing shot area SA in at least a part of a period when the processing apparatus 1 performs the processing operation in one area in the same processing shot area SA.

Incidentally, in an example illustrated in FIG. 21, the light irradiation apparatus 11 and the extraneous substance measurement apparatus 31 may not line up along the Y axis direction and the extraneous substance measurement apparatus 31 may not be disposed at the +Y side from the light irradiation apparatus 11, as long as the area in which the processing operation is performed and the area in which the extraneous substance inspection operation is performed line up along the Y axis direction and the area in which the extraneous substance inspection operation is performed is disposed at the +Y side from the area in which the processing operation is performed. Namely, the extraneous substance measurement apparatus 31 and the light irradiation apparatus 11 may be aligned so that the area in which the processing operation is performed and the area in which the extraneous substance inspection operation is performed line up along the Y axis direction and the area in which the extraneous substance inspection operation is performed is disposed at the +Y side from the area in which the processing operation is performed. Even in this case, the situation where the extraneous substance inspection operation is performed before the processing operation is performed is realizable.

FIG. 20 and FIG. 21 illustrated an example in which a direction in which the light irradiation apparatus 11 moves in order to start the processing operation in another processing shot area SA after the processing operation in one processing shot area SA is completed (the X axis direction in FIG. 20) is different from the moving direction of the target irradiation areas EA by the scan operation in the processing shot area SA (the Y axis direction in FIG. 21). However, the direction in which the light irradiation apparatus 11 moves in order to start the processing operation in another processing shot area SA after the processing operation in one processing shot area SA is completed may be same as the moving direction of the target irradiation areas EA by the scan operation in the processing shot area SA. In this case, the situation where the extraneous substance inspection operation is performed before the processing operation is performed is realizable in both of the situation illustrated in FIG. 20 and the situation illustrated in FIG. 21.

Alternatively, the processing system SYSa may be provided with a plurality of extraneous substance measurement apparatuses 31, wherein relative positions of the extraneous substance measurement apparatuses 31 relative to the light irradiation apparatus 11 are different from each other. In this case, a first extraneous substance measurement apparatus 31 of the plurality of extraneous substance measurement apparatuses 31 may be lined beside the light irradiation apparatus 11 along the moving direction of the light irradiation apparatus 11 and may be disposed at the front side along the moving direction of the light irradiation apparatus 11 from the light irradiation apparatus 11. For example, the first extraneous substance measurement apparatus 31 may be lined beside the light irradiation apparatus 11 along the X axis direction and may be disposed at the +X side from the light irradiation apparatus 11. On the other hand, a second extraneous substance measurement apparatus 31 of the plurality of extraneous substance measurement apparatuses 31 may be lined beside the light irradiation apparatus 11 along the moving direction of the target irradiation areas EA and may be disposed at the front side along the moving direction of the target irradiation areas EA from the light irradiation apparatus 11. For example, the second extraneous substance measurement apparatus 31 may be lined beside the light irradiation apparatus 11 along the Y axis direction and may be disposed at the +Y side from the light irradiation apparatus 11. Even in this case, the situation where the extraneous substance inspection operation is performed before the processing operation is performed is realizable in both of the situation illustrated in FIG. 20 and the situation illustrated in FIG. 21 (namely, in the case where the moving direction of the light irradiation apparatus 11 is different form the moving direction of the target irradiation areas EA).

The control apparatus 2 may control the processing apparatus 1 on the basis of a result of the extraneous substance inspection operation. For example, when the extraneous substance inspection operation indicates that the extraneous substance does not exist in one area of the surface of the coat SF of paint, the control apparatus 2 may control the processing apparatus 1 to start the processing operation in one area. On the other hand, for example, when the extraneous substance inspection operation indicates that the extraneous substance exists in one area of the surface of the coat SF of paint, the control apparatus 2 may control the processing apparatus 1 not to start the processing operation in one area. Namely, when the extraneous substance inspection operation indicates that the extraneous substance exists in one area of the surface of the coat SF of paint, the control apparatus 2 may temporarily stop the processing apparatus 1.

When the extraneous substance inspection operation indicates that the extraneous substance exists in one area of the surface of the coat SF of paint, the control apparatus 2 may control the extraneous substance removal apparatus 32 to remove the extraneous substance from one area (namely, to perform the extraneous substance removal operation in one area) on the basis of the result of the extraneous substance inspection operation. Namely, the extraneous substance removal apparatus 32 may remove the extraneous substance from one area, in which the extraneous substance inspection operation indicates that the extraneous substance exists, on the basis of the result of the extraneous substance inspection operation. After the extraneous substance removal apparatus 32 removes the extraneous substance, the abnormal event that is possibly the obstacle to the proper processing of one area by the irradiation of the processing light EL is resolved, as described above. Thus, the control apparatus 2 may control the processing apparatus 1 to start the processing operation in one area after the extraneous substance removal apparatus 32 removes the extraneous substance from one area. Note that the extraneous substance removal apparatus 32 may be referred to as a resolution apparatus for resolving the abnormal event, because it resolves the abnormal event by removing the extraneous substance.

In this manner, when the extraneous substance inspection operation indicates that the extraneous substance exists in one area of the surface of the coat SF of paint, the extraneous substance removal apparatus 32 performs the extraneous substance removal operation before the processing operation is performed. Namely, the processing apparatus 1 performs the processing operation after the extraneous substance removal operation is performed. Specifically, the extraneous substance removal apparatus 32 performs the extraneous substance removal operation in one target area of the surface of the coat SF of paint before the processing operation is performed in one target area. Namely, the processing apparatus 1 performs the processing operation in one target area of the surface of the coat SF of paint after the extraneous substance removal operation is performed in one target area. The processing apparatus 1 performs the processing operation in a removed area of the surface of the coat SF of paint in which the extraneous substance removal operation has been performed. The processing apparatus 1 may not perform the processing operation in a non-removed area of the surface of the coat SF of paint in which the extraneous substance removal operation is not performed.

The extraneous substance removal apparatus 32 and the light irradiation apparatus 11 may be aligned so as to realize a situation where the extraneous substance removal operation is performed before the processing operation is performed. Specifically, the extraneous substance removal apparatus 32 and the light irradiation apparatus 11 may be aligned on the basis of a rule that is same as a rule for aligning the extraneous substance measurement apparatus 31 and the light irradiation apparatus 11. Specifically, the extraneous substance removal apparatus 32 and the light irradiation apparatus 11 may be aligned so that the extraneous substance removal apparatus 32 and the light irradiation apparatus 11 line up along the moving direction of the light irradiation apparatus 11 and / or the target irradiation areas EA. The extraneous substance removal apparatus 32 and the light irradiation apparatus 11 may be aligned so that the extraneous substance removal apparatus 32 is disposed at the front side along the moving direction of the light irradiation apparatus 11 and / or the target irradiation areas EA from the light irradiation apparatus 11. The area in which the processing operation is performed on the coat SF of paint and an area in which the extraneous substance removal operation is performed on the coat SF of paint may line up along the moving direction of the light irradiation apparatus 11 and / or the target irradiation areas EA. The area in which the extraneous substance removal operation is performed may be disposed at the front side along the moving direction of the light irradiation apparatus 11 and / or the target irradiation areas EA from the area in which the processing operation is performed.

Alternatively, the processing system SYSa may be provided with a plurality of extraneous substance removal apparatuses 32, wherein relative positions of the extraneous substance removal apparatuses 32 relative to the light irradiation apparatus 11 are different from each other. In this case, a first extraneous substance removal apparatus 32 of the plurality of extraneous substance removal apparatuses 32 may be lined beside the light irradiation apparatus 11 along the moving direction of the light irradiation apparatus 11 and may be disposed at the front side along the moving direction of the light irradiation apparatus 11 from the light irradiation apparatus 11. On the other hand, a second extraneous removal measurement apparatus 32 of the plurality of extraneous substance removal apparatuses 32 may be lined beside the light irradiation apparatus 11 along the moving direction of the target irradiation areas EA and may be disposed at the front side along the moving direction of the target irradiation areas EA from the light irradiation apparatus 11. Even in this case, the situation where the extraneous substance removal operation is performed before the processing operation is performed is realizable in both of the situation illustrated in FIG. 20 and the situation illustrated in FIG. 21 (namely, in the case where the moving direction of the light irradiation apparatus 11 is different form the moving direction of the target irradiation areas EA).

In order to determine whether or not the extraneous substance is removed by the extraneous substance removal apparatus 32, the control apparatus 2 may control the extraneous substance measurement apparatus 31 to perform the extraneous substance inspection operation in one area again after the extraneous substance removal apparatus 32 performs the extraneous substance removal operation in one area and before the processing operation is started in one area. When the extraneous substance inspection operation that is performed in one area again indicates that the extraneous substance is removed from one area, the control apparatus 2 may control the processing apparatus 1 to start the processing operation in one area. On the other hand, when the extraneous substance inspection operation that is performed in one area again indicates that the extraneous substance is not removed from one area yet, the control apparatus 2 may control the extraneous substance removal apparatus 32 to remove the extraneous substance from one area.

Even when the extraneous substance inspection operation indicates that the extraneous substance exists in one area of the surface of the coat SF of paint, the control apparatus 2 may control the processing apparatus 1 to start the processing operation without removing the extraneous substance from one area, depending on the characteristic of the extraneous substance. For example, when the size of the extraneous substance existing in one area is smaller than a predetermined size, the control apparatus 2 may control the processing apparatus 1 to start the processing operation without removing the extraneous substance from one area. This is because the possibility that the extraneous substance prevents the proper processing of one area by the irradiation of the processing light EL becomes lower as the size of the extraneous substance is smaller. Thus, when the size of the extraneous substance is too small to affect the proper processing of one area by the irradiation of the processing light EL, the processing apparatus 1 is supposed to process one area without being affected by the extraneous substance. Thus, the predetermined size that is a threshold value to be compared with the size of the extraneous substance may be set to a desired value that allows the extraneous substance that affects the proper processing of one area by the irradiation of the processing light EL to be distinguished from the extraneous substance that does not affect the proper processing of one area by the irradiation of the processing light EL on the basis of the size. When the processing operation is started without removing the extraneous substance from one area, the processing apparatus 1 may process the coat SF of paint with the extraneous substance. Namely, the processing apparatus 1 may process the coat SF of paint by irradiating the coat SF of paint as well as the extraneous substance with the processing lights EL. In this case, the extraneous substance may evaporate by the irradiation of the processing lights EL, or may be burned by the irradiation of the processing lights EL.

The control apparatus 2 may control the display 4 to display the information relating to the extraneous substance inspection operation. For example, the control apparatus 2 may control the display 4 to display information relating to the result of the extraneous substance inspection operation. For example, the control apparatus 2 may control the display 4 to display information that indicates whether or not the extraneous substance is detected by the extraneous substance inspection operation. When the extraneous substance is detected by the extraneous substance inspection operation, for example, the control apparatus 2 may control the display 4 to display an alert indicating that the processing operation is not allowed to be started due to the extraneous substance. For example, the control apparatus 2 may control the display 4 to display information relating to a position (namely, a position on the coat SF of paint) at which the extraneous substance is detected by the extraneous substance inspection operation. For example, the control apparatus 2 may control the display 4 to display information relating to the characteristic of the extraneous substance that is detected by the extraneous substance inspection operation. When the information relating to the extraneous substance inspection operation is displayed in the display 4, an operator of the processing system SYSa can recognize, from a displayed result by the display 4, where and what type of extraneous substance exists on the surface of the coat SF of paint. In this case, the operator may remove the extraneous substance by himself. Namely, the extraneous substance removal apparatus 32 may not necessarily remove the extraneous substance.

The control apparatus 2 may control the display 4 to display the information relating to the extraneous substance removal operation. For example, the control apparatus 2 may control the display 4 to display information relating to a result of the extraneous substance removal operation. For example, the control apparatus 2 may control the display 4 to display information that indicates whether or not the extraneous substance is removed by the extraneous substance removal operation. When the extraneous substance is removed by the extraneous substance removal operation, for example, the control apparatus 2 may control the display 4 to display information for notifying the operator of the processing operation being started because the extraneous substance is removed. When the extraneous substance is not removed by the extraneous substance removal operation, for example, the control apparatus 2 may control the display 4 to display an alert indicating that the processing operation is not allowed to be started due to the extraneous substance not being removed by the extraneous substance removal operation.

### (1-4) Technical Effect of Processing SYSa

As described above, the processing system SYSa in the first embodiment forms the riblet structure of the coat SF of paint on the surface of the processing target object S by irradiating the processing target object S (especially, the coat SF of paint formed on the surface thereof) with the processing lights EL. Thus, the processing system SYSa forms the riblet structure relatively easily in a relatively short time, compared to a processing apparatus that forms the riblet structure by cutting the surface of the processing target object S by a cutting tool such as an end mill.

Moreover, the processing system SYSa forms the plurality of concave structures CP1 at the same time by emitting the plurality of processing lights EL at the same time. Thus, the throughput relating to the formation of the riblet structure improves, compared to a processing apparatus that forms only single concave structure CP1 at a time by emitting the single processing light EL.

Moreover, the processing system SYSa sweeps the coat SF of paint relatively fast by deflecting the plurality of processing lights EL by the Galvano mirror 1122. Thus, the throughput relating to the formation of the riblet structure improves.

Moreover, the processing system SYSa forms the riblet structure on the surface of the processing target object S by processing the coat SF of paint formed on the surface of the processing target object S instead of directly processing the processing target object S. Thus, an increase of a weight of the processing target object S due to the formation of the riblet structure is prevented, compared to a processing apparatus that forms the riblet structure by newly adding (for example, pasting), on the surface of the processing target object S (namely, the surface of the coat SF of paint), a special material for forming the riblet structure.

Moreover, the riblet structure is formable again relatively easily, because the processing system SYSa does not directly process the processing target object S. Specifically, when the riblet structure is formed again, firstly, the riblet structure of the coat SF of paint is removed and then new coat SF of paint is coated. Then, the processing system SYSa forms new riblet structure by processing the newly coated coat SF of paint. Therefore, a deterioration (for example, a breakage) of the riblet structure is handled relatively easily by forming the riblet structure again.

Moreover, the processing system SYSa is allowed to form the riblet structure on the surface of the processing target object S that is difficult to be directly processed or at which the riblet structure is not formed from the beginning, because the processing system SYS does not directly process the processing target object S. Namely, the riblet structure is formable relatively easily by processing the coat SF of paint by the processing system SYSa after coating the coat SF of paint on the surface of the processing target object S.

Incidentally, when the coat SF of paint is processed after the coat SF of paint is coated on the surface of the processing target object S, the operation for processing the processing target object S may include an operation for coating (namely, forming) the coat SF of paint on the processing target object S and an operation for processing the coat SF of paint (for example, partially removing the coat SF of paint). The operation for coating the coat SF of paint on the processing target object S may be performed by the processing system SYSa. In this case, the processing system SYSa may be provided with a coating apparatus that coats the coat SF of paint on the processing target object S. Alternatively, the operation for coating the coat SF of paint on the processing target object S may be performed at the outside of the processing system SYSa. For example, the operation for coating the coat SF of paint on the processing target object S may be performed by a coating apparatus outside the processing system SYSa.

Moreover, the processing system SYSa forms the riblet structure of the coat SF of paint. The coat SF of paint usually has relatively strong durability to an external environment (for example, at least one of heat, light, wind and the like). Thus, the processing system SYSa is capable of forming the riblet structure having the relatively strong durability relatively easily.

Moreover, in the first embodiment, the optical path of the processing lights EL between the terminal optical element of the optical system 112 and the coat SF of paint is included in the containing space SP. Thus, it is possible to properly prevent the processing light EL with which the coat SF of paint is irradiated (alternatively, the scattered light, the reflected light or the like of the processing light EL from the coat SF of paint) from propagating (in other words, scattering) toward the surrounding environment of the processing system SYSa, compared to a processing apparatus in which the optical path of the processing lights EL is not included in the containing space SP (namely, is exposed to an opened space). Moreover, it is possible to properly prevent the unnecessary substance generated by the irradiation of the processing light EL from flying (in other words, scattering) toward the surrounding environment of the processing system SYSa.

Moreover, in the first embodiment, the light irradiation apparatus 11 is supported by the support apparatus 14 that is movable on the coat SF of paint. Thus, the processing system SYSa is capable of relatively easily processing the coat SF of paint that relatively widely spreads. Namely, the processing system SYSa is capable of forming the riblet structure of the coat SF of paint in a relatively wide area on the surface of the processing target object S. Moreover, the processing system SYS is capable of forming the riblet structure on the surface of the relatively large or heavy processing target object S relatively easily, because it does not necessarily move the processing target object S.

Moreover, the processing system SYSa sucks the unnecessary substance generated by the irradiation of the processing light EL to the outside of the containing space SP by using the exhaust apparatus 16. Thus, the unnecessary substance rarely prevents the irradiation of the processing lights EL to the coat SF of paint. Thus, an irradiation accuracy of the processing lights EL improves, compared to a processing apparatus that is not provided with the exhaust apparatus 16 (namely, in which there is a possibility that the unnecessary substance prevents the irradiation of the processing lights EL to the coat SF of paint). As a result, the forming accuracy of the riblet structure improves.

Moreover, the processing system SYSa prevents the adherence of the dust to the optical surface 1124 (namely, the optical surface at the containing space SP side of the terminal optical element of the optical system 112) by using the gas supply apparatus 17. Thus, there is a lower possibility that the irradiation of the processing lights EL to the coat SF of paint is prevented by the dust that adheres to the optical surface 1124, compared to a processing apparatus that is not provided with the gas supply apparatus 17. Thus, the irradiation accuracy of the processing lights EL improves. As a result, the forming accuracy of the riblet structure improves.

Moreover, in the first embodiment, the processing system SYSa may perform the extraneous substance inspection operation on the surface of the coat SF of paint by using the extraneous substance measurement apparatus 31. Thus, there is a lower possibility that the extraneous substance prevents the proper processing of the coat SF of paint by the irradiation of the processing light EL, compared to the case where the extraneous substance inspection operation is not performed. Specifically, when it is determined by the extraneous substance inspection operation that the extraneous substance exists, the processing operation does not start. Thus, there is a lower possibility that the extraneous substance prevents the proper processing of the coat SF of paint by the irradiation of the processing light EL, compared to the case the processing operation starts even when it is determined that the extraneous substance exists.

Moreover, the processing system SYSa may remove the extraneous substance from the surface of the coat SF of paint by using the extraneous substance removal apparatus 32. Thus, the processing system SYSa properly processes the coat SF of paint without being affected by the extraneous substance, even when it is determined that the extraneous substance exists.

Moreover, the processing system SYSa may start the processing operation without removing the extraneous substance, depending on the characteristic of the extraneous substance, even when it is determined that the extraneous substance exists. Thus, performing the processing operation is not restricted excessively due to the existence of the extraneous substance. Therefore, the throughput of the processing system SYSa improves, compared to the case where the processing does not start unless the extraneous substance is removed regardless of the characteristic of the extraneous substance.

### (1-5) Modified Example of Processing SYSa

The processing system SYSa may not be provided with the extraneous substance measurement apparatus 31. Namely, the processing system SYSa may not performs the extraneous substance inspection operation. In this case, the control apparatus 2 may control the extraneous substance removal apparatus 32 to perform the extraneous substance removal operation without using the result of the extraneous substance inspection operation. For example, the control apparatus 2 may control the extraneous substance removal apparatus 32 to perform the extraneous substance removal operation in whole of the surface of the coat SF of paint. The control apparatus 2 may control the extraneous substance removal apparatus 32 to perform the extraneous substance removal operation in an area of the surface of the coat SF of paint in which the processing operation is performed (especially, that is irradiated with the processing lights EL). The control apparatus 2 may control the extraneous substance removal apparatus 32 to perform the extraneous substance removal operation in an area of the surface of the coat SF of paint in which extraneous substance actually exists (but it is an area in which it is not possible to determine whether the extraneous substance exists, because the extraneous substance inspection operation is not performed). The control apparatus 2 may control the extraneous substance removal apparatus 32 to perform the extraneous substance removal operation in an area of the surface of the coat SF of paint in which extraneous substance does not actually exist (but it is an area in which it is not possible to determine whether the extraneous substance does not exist, because the extraneous substance inspection operation is not performed). In this case, the control apparatus 2 may regard that the extraneous substance does not exist in an area of the surface of the coat SF of paint in which the extraneous substance removal operation has been performed, and may control the processing apparatus 1 to perform the processing operation in the area in which the extraneous substance removal operation has been performed.

The processing system SYSa may not be provided with the extraneous substance removal apparatus 32. In this case, when the extraneous substance inspection operation indicates that the extraneous substance exists in one area of the surface of the coat SF of paint, the operator of the processing system SYSa may remove the extraneous substance.

The extraneous substance measurement apparatus 31 may measure a defect occurring on the surface of the coat SF of paint, in addition to or instead of the extraneous substance. Specifically, the extraneous substance measurement apparatus 31 may measure the defect occurring on the measurement target area AMA. Especially, in the first embodiment, the extraneous substance measurement apparatus 31 may measure the defect occurring on the surface of the coat SF of paint on which the riblet structure is not formed (namely, the defect of the coat SF of paint itself). At least one of at least a partial peeling of the coat SF of paint, at least partial unevenness of a thickness of the coat SF of paint, a concave part (for example, a depression) occurring on at least a part of the coat SF of paint undesirably and a convex part occurring on at least a part of the coat SF of paint undesirably. However, as described later in detail in a second embodiment, the extraneous substance measurement apparatus 31 may measure the defect occurring on the surface of the coat SF of paint on which the riblet structure has been formed (namely, at least one of the defect of the coat SF of paint itself and the defect of the riblet structure formed on the surface of the coat SF of paint). Note that the extraneous substance measurement apparatus 31 may be referred to as a defect measurement apparatus 31, when the extraneous substance measurement apparatus 31 measures the defect. Alternatively, the processing system SYSa may be provided with a defect measurement apparatus that is for measuring the defect occurring on the surface of the coat SF of paint.

When the defect occurs on the surface of the coat SF of paint, there is a possibility that at least a part of the processing light EL does not properly reach the coat SF of paint. As a result, there may be a problem in the proper processing of the coat SF of paint by the irradiation of the processing light EL. Namely, there is a possibility that the defect prevents the proper processing of the coat SF of paint by the irradiation of the processing light EL. Thus, an event in which the defect occurs on the surface of the coat SF of paint corresponds to one specific example of the abnormal event that is possibly the obstacle to the proper processing of the coat SF of paint by the irradiation of the processing light EL.

The extraneous substance measurement apparatus 31 may measure the defect by performing an operation that is same as that in the case where the extraneous substance is measured. This is because the condition of the surface of the coat SF of paint in the case where the defect occurs is different from that in the case where the defect does not occur, as with the case where the condition of the surface of the coat SF of paint in the case where the extraneous substance exists is different from that in the case where the extraneous substance does not exist.

When the extraneous substance measurement apparatus 31 measures the defect, the control apparatus 2 may perform a defect inspection operation in the measurement target area AMA on the basis of a result by the extraneous substance measurement apparatus 31 (it is referred to as the "extraneous substance measured information" in the above described description, however, it is referred to as a "defect measured information" here). Note that the defect inspection operation is different from the extraneous substance inspection operation that is an operation targeting the extraneous substance in that it is an operation targeting the defect. Details of the defect inspection operation may be same as details of the extraneous substance inspection operation in which a target of the operation is the extraneous substance, except for the fact that a target of the operation is the defect. For example, the control apparatus 2 may perform a defect detection operation for determining whether or not the defect occurs in the measurement target area AMA. For example, the control apparatus 2 may calculate a characteristic of the defect (namely, a condition of the defect, and at least one of a shape and a size of the defect). For example, the control apparatus 2 may calculate the number of the defect. The control apparatus 2 may perform the defect inspection operation on the basis of the defect measured information and the feature information relating to the feature of the surface of the coat SF of paint. Thus, a detailed description of the defect inspection operation is omitted.

When the extraneous substance measurement apparatus 31 measures the defect, the extraneous substance removal apparatus 32 may perform a defect repair operation for repairing the defect. Specifically, the extraneous substance removal apparatus 32 may repair the defect occurring in the removal area RA (in this case, the removal area may be referred to as a repair area). Note that the extraneous substance removal apparatus 32 may be referred to as a defect repair apparatus, when the extraneous substance removal apparatus 32 repairs the defect. Alternatively, the processing system SYSa may be provided with a defect repair apparatus that is for repairing the defect occurring on the surface of the coat SF of paint in addition to or instead of the extraneous substance removal apparatus 32.

The defect repair operation may include any operation, as long as the defect is repairable by it. Namely, the extraneous substance removal apparatus 32 may be any apparatus, as long as it is configured to repair the defect. For example, the extraneous substance removal apparatus 32 may repair the defect by adding a material (for example, filling it with a filling member (for example, a paste for the repair)) to at least a part of the surface of the coat SF of paint so that the condition of the surface of the coat SF of paint becomes an ideal condition. For example, the extraneous substance removal apparatus 32 may repair the defect by removing (for example, cutting out) at least a part of the surface of the coat SF of paint so that the condition of the surface of the coat SF of paint becomes an ideal condition.

### (2) Processing System SYSb in Second Embodiment

Next, a processing system SYS in a second embodiment (in the below described description, the processing system SYS in the second embodiment is referred to as a "processing system SYSb") will be described.

### (2-1) Structure of Processing System SYSb

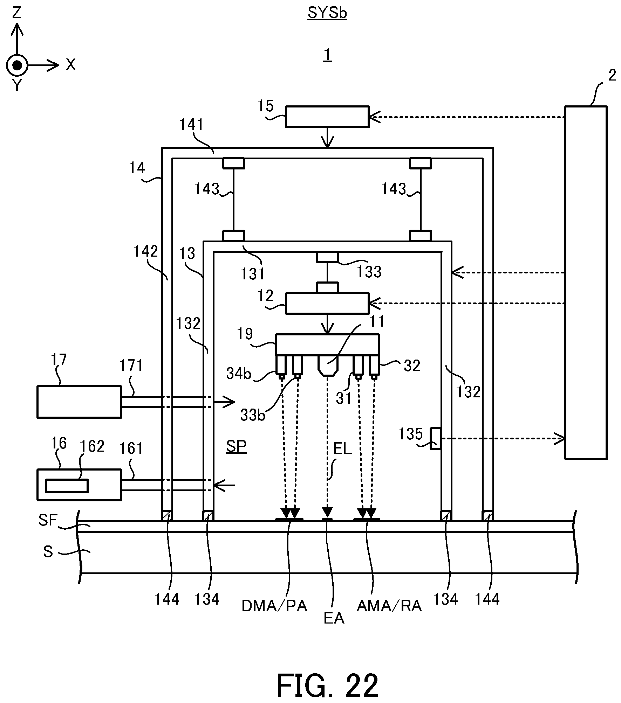

Firstly, with reference to FIG. 22, a structure of the processing system SYSb in a second embodiment will be described. FIG. 22 is a cross-sectional view that schematically illustrates an entire structure of the processing system SYSb in the second embodiment.

As illustrated in FIG. 22, the processing system SYSb in the second embodiment is different from the processing system SYSa in the first embodiment in that it is provided with a defect measurement apparatus 33b and a defect repair apparatus 34b. Another feature of the processing system SYSb may be same as another feature of the processing system SYSa. However, the processing system SYSb may not be provided with the extraneous substance measurement apparatus 31 and the extraneous substance removal apparatus 32.

The defect measurement apparatus 33b measures the defect occurring on the surface of the coat SF of paint under the control of the control apparatus 2. Specifically, the defect measurement apparatus 33b measures the defect occurring in an area on the surface of the coat SF of paint that is included in a measurement range of the defect measurement apparatus 33b (in the below described description, it is referred to as a "measurement target area DMA") under the control of the control apparatus 2. Note that the defect measurement apparatus 33b may measures the defect occurring on the surface of the coat SF of paint independently from the control of the control apparatus 2.

The defect measurement apparatus 33b may measure the defect occurring on the surface of the coat SF of paint on which the riblet structure is not formed by the processing operation (namely, the defect of the coat SF of paint itself). One example of the defect of the coat SF of paint itself is already described in the modified example of the first embodiment.

The defect measurement apparatus 33b may measure the defect occurring on the surface of the coat SF of paint on which the riblet structure has been formed by the processing operation. The defect occurring on the surface of the coat SF of paint on which the riblet structure has been formed includes at least one of the defect of the coat SF of paint itself and the defect of the riblet structure formed on the surface of the coat SF of paint. The defect of the riblet structure includes a defect of the characteristic (namely, the feature) of the riblet structure. The characteristic of the riblet structure may include at least one of the formed position of the riblet structure, the cross-sectional shape of the riblet structure, a height of the riblet structure (specifically, at least one of the height H of the convex structure CP2 and the depth D of the concave structure CP1 described above) and an arrangement pitch of the riblet structure (specifically, at least one of the arrangement pitch P2H of the convex structure CP2 and the arrangement pitch P1 of the concave structure CP1 described above). The defect of the characteristic of the riblet structure may mean a condition in which a difference (namely, an error) between an actual characteristic and a design characteristic (namely, an ideal characteristic) of the riblet structure is larger than an allowable value. For example, the defect of the formed position of the riblet structure may mean a condition in which a difference between an actual formed position and a design formed position of the riblet structure is larger than a first allowable value. For example, the defect of the cross-sectional shape of the riblet structure may mean a condition in which a difference between an actual cross-sectional shape and a design cross-sectional shape of the riblet structure is larger than a second allowable value. For example, the defect of the formed position of the riblet structure may mean a condition in which a difference between an actual height and a design height of the riblet structure is larger than a third allowable value. For example, the defect of the arrangement pitch of the riblet structure may mean a condition in which a difference between an actual arrangement pitch and a design arrangement pitch of the riblet structure is larger than a fourth allowable value.

The riblet structure in which the defect occurs may be regarded as the riblet structure a quality of which is not high, compared to the riblet structure in which the defect does not occur. Thus, an operation for measuring the defect occurring in the riblet structure may be regarded to be equivalent to an operation for measuring the quality of the riblet structure. In this case, the defect measurement apparatus 33b may be referred to as a quality measurement apparatus.

The defect measurement apparatus 33b may be a measurement apparatus that is configured to measure a condition of the surface of the coat SF of paint. Namely, the defect measurement apparatus 33b may be a measurement apparatus that is configured to measure the defect occurring on the surface of the coat SF of paint by measuring the condition of the surface of the coat SF of paint. This is because the condition of the surface of the coat SF of paint on which the defect occurs is different from the condition of the surface of the coat SF of paint on which the defect does not occur.

The defect measurement apparatus 33b is attached to the attachment member 19 to which the light irradiation apparatus 11 is attached. Thus, the defect measurement apparatus 33b also moves along with the movement of the light irradiation apparatus 11 by the driving system 12. Namely, the defect measurement apparatus 33b moves relative to the coat SF of paint with the light irradiation apparatus 11. As a result, the measurement target area DMA in which the defect measurement apparatus 33b measures the defect also moves on the coat SF of paint. Therefore, the defect measurement apparatus 33b is allowed to measure the defect occurring in the measurement target area DMA that is allowed to set on a desired area on the coat SF of paint. However, the defect measurement apparatus 33b may not be attached to the attachment member 19. The defect measurement apparatus 33b may be attached to a member that is different from the attachment member 19. The defect measurement apparatus 33b may be attached to the light irradiation apparatus 11. The defect measurement apparatus 33b may be movable independently from the attachment member 19. The defect measurement apparatus 33b may not be movable.

A measured result by the defect measurement apparatus 33b (in the below described description, it is referred to as a "defect measured information") is outputted to the control apparatus 2. The control apparatus 2 performs the defect inspection operation in the measurement target area DMA on the basis of the defect measured information. Namely, the control apparatus 2 performs the defect inspection operation in the measurement target area DMA with the defect measurement apparatus 33b. Thus, an apparatus (alternatively, a system) including the defect measurement apparatus 33b and the control apparatus 2 may be referred to as an inspection apparatus or an inspection system. In this case, the measurement target area DMA may be referred to as an inspection target area. Note that the operation for measuring the defect occurring in the riblet structure may be regarded to be equivalent to the operation for measuring the quality of the riblet structure as described above. In this case, the defect inspection operation performed by the control apparatus 2 may be regarded to be substantially equivalent to a quality inspection an operation for inspecting the quality of the riblet structure (namely, a quality determination operation for determining whether or not a processing quality of the processing operation for forming the riblet structure is good). Namely, the defect inspection operation performed by the control apparatus 2 may be regarded to be substantially equivalent to an evaluation operation for evaluating the characteristic (the feature) of the riblet structure. Thus, the control apparatus 2 may be referred to as an evaluation apparatus.

The control apparatus 2 may perform a defect detection operation as at least a part of the defect inspection operation. Namely, the control apparatus 2 may determine on the basis of the defect measured information whether or not the defect occurs in the measurement target area DMA. The control apparatus 2 may determine on the basis of the defect measured information whether or not the abnormal event (especially, the abnormal event in which the defect occurs on the surface of the coat SF of paint) occurs in the measurement target area DMA. In this case, the defect measurement apparatus 33b may perform a measurement operation for measuring a presence and an absence of the defect in the measurement target area DMA. Namely, the defect measurement apparatus 33b may perform a measurement operation for obtaining the defect measured information that is usable to determine the presence and the absence of the defect in the measurement target area DMA.

When the defect exists in the measurement target area DMA, the control apparatus 2 may calculate a characteristic of the defect (in other words, a condition or a feature of the defect) on the basis of the defect measured information. Namely, the control apparatus 2 may perform a characteristic calculation operation for calculating the characteristic of the defect as at least a part of the defect inspection operation. For example, the control apparatus 2 may calculate a shape of the defect, which is one example of the characteristic of the defect, on the basis of the defect measured information. The shape of the defect may include a two-dimensional shape (for example, a shape in a plane along the XY plane) of the defect, and may include a three-dimensional shape of the defect. Note that the control apparatus 2 may calculate, as the shape of the defect, a shape (for example, a shape in a plane along the surface of the coat SF of paint) of an area on the coat SF of paint in which the defect occurs. For example, the control apparatus 2 may calculate a size of the defect, which is one example of the characteristic of the defect, on the basis of the defect measured information. The size of the defect may include at least one of a size of the defect in the X axis direction, a size of the defect in the Y axis direction and a size of the defect in the Z axis direction. Note that the control apparatus 2 may calculate, as the size of the defect, a size of the area on the coat SF of paint in which the defect occurs. For example, the control apparatus 2 may calculate, as one example of the characteristic of the defect, a difference between the characteristic of the riblet structure in which the defect occurs and the design characteristic (namely, a difference (an error) of the actual characteristic of the riblet structure from an allowable value). In this case, the defect measurement apparatus 33b may perform a measurement operation for measuring the characteristic of the defect that exists in the measurement target area DMA. Namely, the defect measurement apparatus 33b may perform a measurement operation for obtaining the defect measured information that is usable to calculate the characteristic of the defect in the measurement target area DMA.

When the defect exists in the measurement target area DMA, the control apparatus 2 may determine the number of the defect on the basis of the defect measured information. Namely, the control apparatus 2 may perform a number calculation operation for calculating the number of the defect as at least a part of the defect inspection operation. In this case, the defect measurement apparatus 33b may perform a measurement operation for measuring the number of the defect that exists in the measurement target area DMA. Namely, the defect measurement apparatus 33b may perform a measurement operation for obtaining the defect measured information that is usable to calculate the number of the defect in the measurement target area DMA.

The control apparatus 2 may perform the defect inspection operation on the basis of the defect measured information and feature information relating to a feature of the surface of the coat SF of paint (especially, a feature of the measurement target area DMA of the surface of the coat SF of paint). For example, when the defect does not occur in the measurement target area DMA, an actual feature of the measurement target area DMA that is indicated by the defect measured information is expected to be same as a design feature (alternatively, an ideal feature) of the measurement target area DMA that is indicated by the feature information. On the other hand, when the defect occurs in the measurement target area DMA, there is a high possibility that the actual feature of the measurement target area DMA that is indicated by the defect measured information is not same as the design feature (alternatively, the ideal feature) of the measurement target area DMA that is indicated by the feature information. Thus, the control apparatus 2 may perform the defect inspection operation by comparing the defect measured information with the feature information.

The control apparatus 2 may perform the defect inspection operation on the basis of the defect measured information and design information relating to the design characteristic (namely, the feature, and at least one of a shape, a size and an arrangement such as an interval, for example) of the riblet structure. For example, when the defect does not occur in the measurement target area DMA, an actual condition of the surface of the coat SF of paint (more specifically, the actual characteristic of the riblet structure formed on the surface of the coat SF of paint) that is indicated by the defect measured information is expected to be same as a design characteristic of the riblet structure that is indicated by the feature information. On the other hand, when the defect occurs in the measurement target area DMA, there is a high possibility that the actual characteristic of the riblet structure that is indicated by the defect measured information is not same as the design characteristic of the riblet structure that is indicated by the feature information. Thus, the control apparatus 2 may perform the defect inspection operation by comparing the defect measured information with the design information. When the design information is used for the defect inspection operation in this manner, the control apparatus 2 is capable of inspecting the defect of the riblet structure more properly, compared to the case where the design information is not used for the defect inspection operation. Namely, the control apparatus 2 is capable of inspecting the processing quality of the riblet structure more properly. In other words, the control apparatus 2 is capable of evaluating the characteristic (the feature) of the riblet structure more properly.

The defect measurement apparatus 33b may be any measurement apparatus, as long as it is configured to obtain the defect measured information that is usable for the defect inspection operation. For example, the defect measurement apparatus 33b may be configured to measure the surface of the coat SF of paint in a non-contact manner. A measurement apparatus that is configured to optically measure the surface of the coat SF of paint is one example of the measurement apparatus that is configured to measure the surface of the coat SF of paint in a non-contact manner. A measurement apparatus that measures the surface of the coat SF of paint by using at least one of sound and electrical wave is another example of the measurement apparatus that is configured to measure the measurement target area DMA in a non-contact manner.

The above described extraneous substance measurement apparatus 31 may also be the measurement apparatus that is configured to measure the surface of the coat SF of paint in a non-contact manner. Thus, the defect measurement apparatus 33b may be a measurement apparatus that is same as the extraneous substance measurement apparatus 31. For example, The defect measurement apparatus 33b may include the imaging apparatus (namely, a camera) 311 that is configured to image the surface of the coat SF of paint, as with the extraneous substance measurement apparatus 31. In this case, the control apparatus 2 may perform the defect inspection operation by analyzing the image captured by the imaging apparatus 311. Incidentally, when the defect measurement apparatus 33b includes the imaging apparatus 311, an area of the surface of the coat SF of paint that is included in the imaging range of the imaging apparatus 311 may be the measurement target area DMA. Alternatively, the defect measurement apparatus 33b may include the light reception apparatus 312 (see FIG. 5) that is configured to optically receive the light from the surface of the coat SF of paint (especially, at least one of the scattered light that is scattered by the surface of the coat SF of paint and / or the diffracted light that is diffracted by the surface of the coat SF of paint), as with the extraneous substance measurement apparatus 31. Incidentally, when the defect occurs in the surface of the coat SF of paint, there is a relatively high possibility that the scattered light that is scattered by the surface of the coat SF of paint and / or the diffracted light that is diffracted by the surface of the coat SF of paint propagates in a direction that is different from the direction in which the specular reflection light of inspection light propagates, as with the case where the extraneous substance exists on the surface of the coat SF of paint. Therefore, there is a possibility that the scattered light and / or the diffracted light includes information relating to the defect. In this case, the control apparatus 2 may calculate the characteristic (for example, the intensity and the like) of the scattered light and / or the diffracted light from the received result by the light reception apparatus 312 and may perform the defect inspection operation on the basis of the calculated characteristic of the scattered light and / or the diffracted light. Incidentally, when the defect measurement apparatus 33b includes the light reception apparatus 312, an area of the surface of the coat SF of paint that is irradiated with the light for a defect inspection (namely, an area from which the scattered light and / or the diffracted light emits) may be the measurement target area DMA.

The defect repair apparatus 34b repairs the defect that occurs on the surface of the coat SF of paint under the control of the control apparatus 2. Namely, the defect repair apparatus 34b performs a defect repair operation for repairing the defect under the control of the control apparatus 2. Specifically, the defect repair apparatus 34b repairs the defect occurring in an area on the surface of the coat SF of paint that is included in a repair range in which the defect repair apparatus 34b is allowed to repair the defect (in the below described description, it is referred to as a "repair area PA"). Note that the defect repair apparatus 34b may repair the detect that occurs on the surface of the coat SF of paint independently from the control of the control apparatus 2.

The repair area PA may be coincident with the above described measurement target area DMA. Namely, the defect measurement apparatus 33b and the defect repair apparatus 34b may be aligned so that the repair area PA is coincident with the measurement target area DMA. Alternatively, the repair area PA may partially overlap with the above described measurement target area DMA. Namely, the defect measurement apparatus 33b and the defect repair apparatus 34b may be aligned so that the repair area PA partially overlaps with the measurement target area DMA. Alternatively, the repair area PA may not overlap with the above described measurement target area DMA. Namely, the defect measurement apparatus 33b and the defect repair apparatus 34b may be aligned so that the repair area PA partially does not overlap with the measurement target area DMA. Note that FIG. 22 illustrates an example in which the repair area PA is coincident with the measurement target area DMA.

The defect repair apparatus 34b is attached to the attachment member 19 to which the light irradiation apparatus 11 is attached. Thus, the defect repair apparatus 34b also moves along with the movement of the light irradiation apparatus 11 by the driving system 12. Namely, the defect repair apparatus 34b moves relative to the coat SF of paint with the light irradiation apparatus 11. As a result, the repair area PA in which the defect repair apparatus 34b repairs the defect also moves on the coat SF of paint. Therefore, the defect repair apparatus 34b is allowed to repair the defect that exists in the repair area PA that is allowed to set on a desired area on the coat SF of paint. However, the defect repair apparatus 34b may not be attached to the attachment member 19. The defect repair apparatus 34b may be attached to a member that is different from the attachment member 19. The defect repair apparatus 34b may be attached to the light irradiation apparatus 11. The defect repair apparatus 34b may be movable independently from the light irradiation apparatus 11. The defect repair apparatus 34b may be movable independently from the defect measurement apparatus 33b. The defect repair apparatus 34b may not be movable.

The defect repair apparatus 34b may include any apparatus, as long as it is configured to repair the defect. For example, the defect repair apparatus 34b may repair the defect by adding a material (for example, filling it with a filling member (for example, a paste for the repair)) to at least a part of the surface of the coat SF of paint so that the condition of the surface of the coat SF of paint becomes an ideal condition. For example, the defect repair apparatus 34b may repair the defect by removing (for example, cutting out) at least a part of the surface of the coat SF of paint so that the condition of the surface of the coat SF of paint becomes an ideal condition. For example, the defect repair apparatus 34b may repair the defect by adding a material (for example, filling it with a filling member (for example, a paste for the repair)) to at least a part of the riblet structure so that the characteristic of the riblet structure becomes the design characteristic. For example, the defect repair apparatus 34b may repair the defect by removing (for example, cutting out) at least a part of the riblet structure so that the characteristic of the riblet structure becomes the design characteristic.

Incidentally, when the riblet structure in which the defect occurs is repaired, the quality of the riblet structure is expected to improve. Thus, an operation for repairing the defect of the riblet structure may be regarded to be substantially equivalent to an operation for improving the quality of the riblet structure (namely, the processing quality of the processing operation).

Incidentally, considering that the riblet structure is formed by the irradiation of the processing lights EL, the defect occurring on the surface of the coat SF of paint (especially, the defect of the riblet structure) is expected to be repaired by the irradiation of the processing lights EL. Thus, the control apparatus 1 may repair the defect (especially, the defect of the riblet structure) by controlling the processing apparatus 1, in addition to or instead of the defect repair apparatus 34b. Namely, the control apparatus 2 may control the processing apparatus 1 to repair the defect (especially, the defect of the riblet structure) by irradiating the surface of the coat SF of paint with the processing lights EL. When the defect is repaired by using the processing apparatus 1, the processing system SYSb may not be provided with the defect repair apparatus 34b.

### (2-2) Extraneous Substance Inspection Operation and Extraneous Substance Repair Operation

Next, specific flows of the defect inspection operation using the defect measurement apparatus 34b and the defect repair operation using the defect repair apparatus 34b will be described.

As described above, the defect measurement apparatus 33b and the control apparatus 2 perform the defect inspection operation. In the second embodiment, the defect measurement apparatus 33b and the control apparatus 2 perform the defect inspection operation in one target area of the surface of the coat SF of paint after the processing operation is performed in one target area. The defect measurement apparatus 33b and the control apparatus 2 perform the defect inspection operation in a processed area of the surface of the coat SF of paint in which the processing operation has been performed. The defect measurement apparatus 33b and the control apparatus 2 may not perform the defect inspection operation in a non-processed area of the surface of the coat SF of paint in which the processing operation is not performed. As a result, the defect measurement apparatus 33b and the control apparatus 2 is capable of properly inspecting the defect of the riblet structure formed by the processing operation in addition to the defect of the coat SF of paint itself. Namely, the defect measurement apparatus 33b and the control apparatus 2 is capable of properly inspecting the quality of the riblet structure formed by the processing operation. The defect measurement apparatus 33b and the control apparatus 2 is capable of properly evaluating the characteristic of the riblet structure formed by the processing operation.

For example, the defect measurement apparatus 33b and the control apparatus 2 may perform the defect inspection operation in one processing shot area SA of the plurality of processing shot areas SA after the processing operation is performed in one processing shot area SA. The defect measurement apparatus 33b and the control apparatus 2 may perform the defect inspection operation in the processing shot area SA of the coat SF of paint in which the processing operation has been performed. The defect measurement apparatus 33b and the control apparatus 2 may not perform the defect inspection operation in the processing shot area SA of the coat SF of paint in which the processing operation is not performed.

For example, the defect measurement apparatus 33b and the control apparatus 2 may perform the defect inspection operation in one area part in one processing shot area SA after the processing operation is performed in one area part in one processing shot area SA. The defect measurement apparatus 33b and the control apparatus 2 may perform the defect inspection operation in a processed area part in one processing shot area SA in which the processing operation has been performed. The defect measurement apparatus 33b and the control apparatus 2 may not perform the defect inspection operation in a non-processed area part in one processing shot area SA in which the processing operation is not performed.

The defect measurement apparatus 33b and the light irradiation apparatus 11 may be aligned so as to realize a situation where the defect inspection operation is performed after the processing operation is performed. Specifically, the defect measurement apparatus 33b and the light irradiation apparatus 11 may be aligned on the basis of the moving direction of the light irradiation apparatus 11. The defect measurement apparatus 33b and the light irradiation apparatus 11 may be aligned on the basis of the moving direction of the target irradiation areas EA, because the target irradiation areas EA move when the light irradiation apparatus 11 moves.

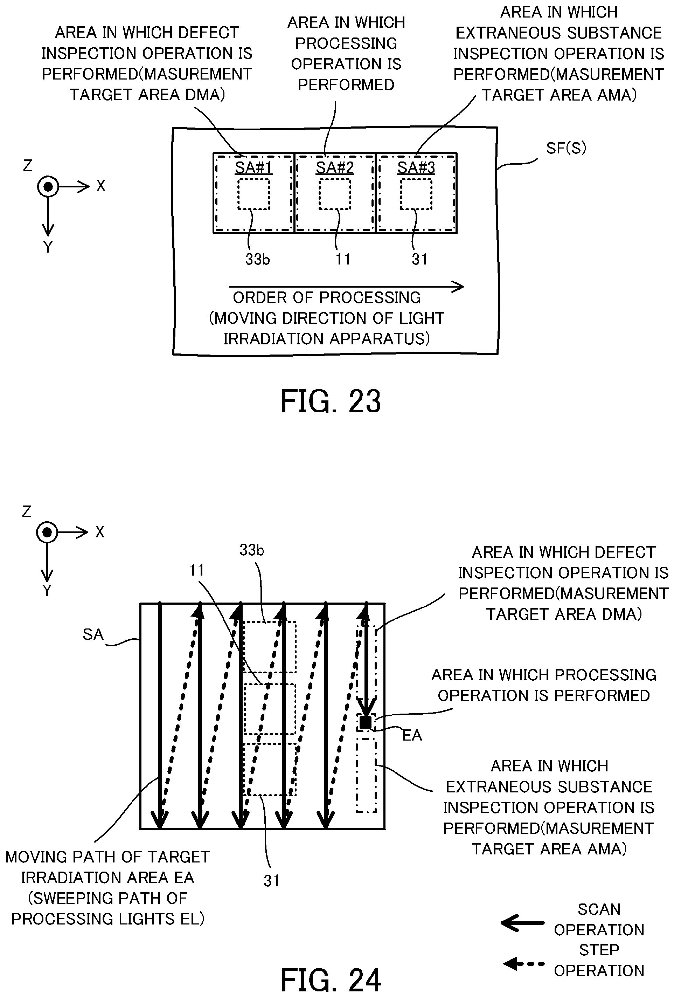

For example, FIG. 23 is a plan view that illustrates the three processing shot areas SA#1 to SA#3 set on the coat SF of paint. Especially, FIG. 23 illustrates an example in which the two processing shot areas SA#1 to SA#3 line up along the X axis direction, the processing shot area SA#2 is set at the +X side from the processing shot area SA#1 and the processing shot area SA#3 is set at the +X side from the processing shot area SA#2. Here, when the light irradiation apparatus 11 performs the processing operation in the processing shot areas SA#1 to SA#3 in this order, the light irradiation apparatus 11 moves from above the processing shot area SA#1 to above the processing shot area SA#2 and then moves from above the processing shot area SA#2 to above the processing shot area SA#3. Namely, the light irradiation apparatus 11 moves relative to the coat SF of paint along the X axis direction toward the +X side. Moreover, the target irradiation areas EA also move relative to the coat SF of paint along the X axis direction toward the +X side along with the movement of the light irradiation apparatus 11. In this case, as illustrated in FIG. 23, the defect measurement apparatus 33b and the light irradiation apparatus 11 may be aligned so that the defect measurement apparatus 33b and the light irradiation apparatus 11 line up along the X axis direction (namely, the moving direction of the light irradiation apparatus 11 and the moving direction of the target irradiation areas EA). Moreover, as illustrated in FIG. 23, the defect measurement apparatus 33b and the light irradiation apparatus 11 may be aligned so that the defect measurement apparatus 33b is disposed at the -X side (namely, at a rear side along the moving direction of the light irradiation apparatus 11 and at a rear side along the moving direction of the target irradiation areas EA) from the light irradiation apparatus 11. As a result, as illustrated in FIG. 23, an area in which the processing operation is performed on the coat SF of paint and an area in which the defect inspection operation is performed on the coat SF of paint line up along the X axis direction (namely, the moving direction of the light irradiation apparatus 11 and the moving direction of the target irradiation areas EA). Moreover, as illustrated in FIG. 23, the area in which the defect inspection operation is performed is disposed at the - X side (namely, at the rear side along the moving direction of the light irradiation apparatus 11 and at the rear side along the moving direction of the target irradiation areas EA) from the area in which the processing operation is performed. Note that the area in which the processing operation is performed in FIG. 23 is typically an area that is irradiated with the processing lights EL by the light irradiation apparatus 11 (in an example illustrated in FIG. 23, an area that includes the processing shot area SA#2 at least partially). The area in which the defect inspection operation is performed in FIG. 23 is typically an area in which at least a part of the measurement target area DMA is set (in the example illustrated in FIG. 23, an area that includes the processing shot area SA#1 at least partially). As a result, the defect measurement apparatus 33b is allowed to perform the defect inspection operation in the processing shot area SA#1 after the processing apparatus 1 performs the processing operation in the processing shot area SA#1. Thus, the situation where the defect inspection operation is performed after the processing operation is performed is realizable.

In the example illustrated in FIG. 23, the defect measurement apparatus 33b may perform the defect inspection operation in the processing shot area SA#1 in at least a part of a period when the processing apparatus 1 performs the processing operation in the processing shot area SA#2. Namely, the processing operation in one area on the coat SF of paint by the processing apparatus 1 and the defect inspection operation in another area on the coat SF of paint by the defect measurement apparatus 33b may be performed in parallel. However, the processing operation in one area on the coat SF of paint by the processing apparatus 1 and the defect inspection operation in another area on the coat SF of paint by the defect measurement apparatus 33b may not be performed in parallel. For example, the defect measurement apparatus 33b may perform the defect inspection operation in at least a part of a period when the processing apparatus 1 does not perform the processing operation (namely, a period when the coat SF of paint is not irradiated with the processing lights EL). As one example, the defect measurement apparatus 33b may perform the defect inspection operation when a regular maintenance of the coat SF of paint (especially, a regular maintenance of the riblet structure) is performed.

Incidentally, in the example illustrated in FIG. 23, the light irradiation apparatus 11 and the defect measurement apparatus 33b may not line up along the X axis direction and the defect measurement apparatus 33b may not be disposed at the -X side from the light irradiation apparatus 11, as long as the area in which the processing operation is performed and the area in which the defect inspection operation is performed line up along the X axis direction and the area in which the defect inspection operation is performed is disposed at the -X side from the area in which the processing operation is performed. Namely, the defect measurement apparatus 33b and the light irradiation apparatus 11 may be aligned so that the area in which the processing operation is performed and the area in which the defect inspection operation is performed line up along the X axis direction and the area in which the defect inspection operation is performed is disposed at the -X side from the area in which the processing operation is performed. Even in this case, the situation where the defect inspection operation is performed after the processing operation is performed is realizable.

Alternatively, for example, FIG. 24 is a plan view that illustrates the moving path of the target irradiation areas EA by the processing operation that is performed in a certain processing shot area SA. As illustrated in FIG. 24 (moreover, as already described with reference to FIG. 11), the target irradiation areas EA move along the Y axis direction from the -Y side to the +Y side in the processing shot area SA by the scan operation. In this case, as illustrated in FIG. 24, the defect measurement apparatus 33b and the light irradiation apparatus 11 may be aligned so that the defect measurement apparatus 33b and the light irradiation apparatus 11 line up along the Y axis direction (namely, the moving direction of the target irradiation areas EA). Moreover, as illustrated in FIG. 24, the defect measurement apparatus 33b and the light irradiation apparatus 11 may be aligned so that the defect measurement apparatus 33b is disposed at the -Y side (namely, at the rear side along the moving direction of the target irradiation areas EA) from the light irradiation apparatus 11. As a result, as illustrated in FIG. 24, the area in which the processing operation is performed on the coat SF of paint and the area in which the defect inspection operation is performed on the coat SF of paint line up along the Y axis direction (namely, the moving direction of the target irradiation areas EA). Moreover, as illustrated in FIG. 24, the area in which the defect inspection operation is performed is disposed at the -Y side (namely, at the rear side along the moving direction of the target irradiation areas EA) from the area in which the processing operation is performed. Note that the area in which the processing operation is performed in FIG. 24 is typically an area in which the target irradiation areas EA are set. The area in which the defect inspection operation is performed in FIG. 24 is typically an area in which at least a part of the measurement target area DMA is set. As a result, the defect measurement apparatus 33b is allowed to perform the defect inspection operation in one area in the processing shot area SA after the processing apparatus 1 performs the processing operation in (specifically, emits the processing lights EL to) one area in the processing shot area SA. Thus, the situation where the defect inspection operation is performed after the processing operation is performed is realizable.

In the example illustrated in FIG. 24, the defect measurement apparatus 33b may perform the defect inspection operation in another area in a certain processing shot area SA in at least a part of a period when the processing apparatus 1 performs the processing operation in one area in the same processing shot area SA.

Incidentally, in an example illustrated in FIG. 24, the light irradiation apparatus 11 and the defect measurement apparatus 33b may not line up along the Y axis direction and the defect measurement apparatus 33b may not be disposed at the -Y side from the light irradiation apparatus 11, as long as the area in which the processing operation is performed and the area in which the defect inspection operation is performed line up along the Y axis direction and the area in which the defect inspection operation is performed is disposed at the -Y side from the area in which the processing operation is performed. Namely, the defect measurement apparatus 33b and the light irradiation apparatus 11 may be aligned so that the area in which the processing operation is performed and the area in which the extraneous substance inspection operation is performed line up along the Y axis direction and the area in which the defect inspection operation is performed is disposed at the -Y side from the area in which the processing operation is performed. Even in this case, the situation where the defect inspection operation is performed after the processing operation is performed is realizable.

FIG. 23 and FIG. 24 illustrated an example in which a direction in which the light irradiation apparatus 11 moves in order to start the processing operation in another processing shot area SA after the processing operation in one processing shot area SA is completed (the X axis direction in FIG. 23) is different from the moving direction of the target irradiation areas EA by the scan operation in the processing shot area SA (the Y axis direction in FIG. 24). However, the direction in which the light irradiation apparatus 11 moves in order to start the processing operation in another processing shot area SA after the processing operation in one processing shot area SA is completed may be same as the moving direction of the target irradiation areas EA by the scan operation in the processing shot area SA. In this case, the situation where the defect inspection operation is performed after the processing operation is performed is realizable in both of the situation illustrated in FIG. 23 and the situation illustrated in FIG. 24.

Alternatively, the processing system SYSb may be provided with a plurality of defect measurement apparatuses 33b, wherein relative positions of the defect measurement apparatuses 33b relative to the light irradiation apparatus 11 are different from each other. In this case, a first defect measurement apparatus 33b of the plurality of defect measurement apparatuses 33b may be lined beside the light irradiation apparatus 11 along the moving direction of the light irradiation apparatus 11 and may be disposed at the rear side along the moving direction of the light irradiation apparatus 11 from the light irradiation apparatus 11. For example, the first defect measurement apparatus 31 may be lined beside the light irradiation apparatus 11 along the X axis direction and may be disposed at the -X side from the light irradiation apparatus 11. On the other hand, a second defect measurement apparatus 33b of the plurality of defect measurement apparatuses 33b may be lined beside the light irradiation apparatus 11 along the moving direction of the target irradiation areas EA and may be disposed at the rear side along the moving direction of the target irradiation areas EA from the light irradiation apparatus 11. For example, the second defect measurement apparatus 33b may be lined beside the light irradiation apparatus 11 along the Y axis direction and may be disposed at the -Y side from the light irradiation apparatus 11. Even in this case, the situation where the defect inspection operation is performed after the processing operation is performed is realizable in both of the situation illustrated in FIG. 23 and the situation illustrated in FIG. 24 (namely, in the case where the moving direction of the light irradiation apparatus 11 is different form the moving direction of the target irradiation areas EA).

Moreover, FIG. 23 and FIG. 24 illustrate a positional relationship between the light irradiation apparatus 11 and the extraneous substance measurement apparatus 31 (namely, a positional relationship between the area in which the processing operation is performed and the area in which the extraneous substance inspection operation is performed) described in FIG. 20 and FIG. 21, in addition to a positional relationship between the light irradiation apparatus 11 and the defect measurement apparatus 33b. As illustrated in FIG. 23 and FIG. 24, the defect measurement apparatus 33b and the extraneous substance measurement apparatus 31 may be arranged to sandwich the light irradiation apparatus 11 therebetween along the X axis direction (namely, the moving direction of the light irradiation apparatus 11 and the moving direction of the target irradiation areas EA). Moreover, the area in which the defect inspection operation is performed and the area in which the extraneous substance inspection operation is performed may be arranged to sandwich the area in which the processing operation is performed therebetween along the X axis direction (namely, the moving direction of the light irradiation apparatus 11 and the moving direction of the target irradiation areas EA). As a result, a situation where the extraneous substance inspection operation is performed before the processing operation is performed and the defect inspection operation is performed after the processing operation is performed is realized. Namely, a situation where the extraneous substance inspection operation, the processing operation and the defect inspection operation is performed in a certain area on the coat SF of paint in this order is realized.

However, the defect measurement apparatus 33b and the control apparatus 2 may perform the defect inspection operation in one target area of the surface of the coat SF of paint before the processing operation is performed in one target area. Namely, the processing apparatus 1 may perform the processing operation in one target area of the surface of the coat SF of paint after the defect inspection operation is performed in one target area. This defect inspection operation may be regarded to be equivalent to the defect inspection operation that is performed by the extraneous substance measurement apparatus 31 and the control apparatus 2 and that is described in the modified example of the first embodiment.

When the defect inspection operation indicates that the defect occurs in one area of the surface of the coat SF of paint, the control apparatus 2 may control the defect repair apparatus 34b to repair the defect occurring in one area (namely, to perform the defect repair operation in one area) on the basis of the result of the defect inspection operation. Namely, the defect repair apparatus 34b may repair the defect in one area, in which the defect inspection operation indicates that the defect occurs, on the basis of the result of the defect inspection operation. After the defect repair apparatus 34b repairs the defect, the abnormal event in which the defect occurs on the surface of the coat SF of paint is resolved. Thus, the defect repair apparatus 34b may be referred to as a resolution apparatus for resolving the abnormal event.

Since the defect inspection operation is performed after the processing operation is performed as described above, the defect repair apparatus 34b performs the defect repair operation after the processing operation is performed. Namely, the defect repair apparatus 34b performs the defect repair operation in one target area of the surface of the coat SF of paint, if needed, after the processing operation is performed in one target area. The defect repair apparatus 34b and the light irradiation apparatus 11 may be aligned so as to realize a situation where the defect repair operation is performed after the processing operation is performed. Specifically, the defect repair apparatus 34b and the light irradiation apparatus 11 may be aligned on the basis of a rule that is same as a rule for aligning the defect measurement apparatus 33b and the light irradiation apparatus 11. Specifically, the defect repair apparatus 34b and the light irradiation apparatus 11 may be aligned so that the defect repair apparatus 34b and the light irradiation apparatus 11 line up along the moving direction of the light irradiation apparatus 11 and / or the target irradiation areas EA. The defect repair apparatus 34b and the light irradiation apparatus 11 may be aligned so that the defect repair apparatus 34b is disposed at the rear side along the moving direction of the light irradiation apparatus 11 and / or the target irradiation areas EA from the light irradiation apparatus 11. The area in which the processing operation is performed on the coat SF of paint and an area in which the defect repair operation is performed on the coat SF of paint may line up along the moving direction of the light irradiation apparatus 11 and / or the target irradiation areas EA. The area in which the defect repair operation is performed may be disposed at the rear side along the moving direction of the light irradiation apparatus 11 and / or the target irradiation areas EA from the area in which the processing operation is performed.

Alternatively, the processing system SYSb may be provided with a plurality of defect repair apparatuses 34b, wherein relative positions of the defect repair apparatuses 34b relative to the light irradiation apparatus 11 are different from each other. In this case, a first defect repair apparatus 34b of the plurality of defect repair apparatuses 34b may be lined beside the light irradiation apparatus 11 along the moving direction of the light irradiation apparatus 11 and may be disposed at the rear side along the moving direction of the light irradiation apparatus 11 from the light irradiation apparatus 11. On the other hand, a second defect repair apparatus 34b of the plurality of defect repair apparatuses 34b may be lined beside the light irradiation apparatus 11 along the moving direction of the target irradiation areas EA and may be disposed at the rear side along the moving direction of the target irradiation areas EA from the light irradiation apparatus 11. Even in this case, the situation where the defect repair operation is performed after the processing operation is performed is realizable in both of the situation illustrated in FIG. 23 and the situation illustrated in FIG. 24 (namely, in the case where the moving direction of the light irradiation apparatus 11 is different form the moving direction of the target irradiation areas EA).

When the defect inspection operation indicates that the defect occurs in one area of the surface of the coat SF of paint, the control apparatus 2 may control the processing apparatus 1 to repair the defect occurring in one area (namely, to perform the defect repair operation in one area) on the basis of the result of the defect inspection operation. This is because the defect repairable by irradiating the coat SF of paint with the processing lights EL, as described above. Thus, the processing apparatus 1 may irradiate one area with the processing light to repair the defect in one area, in which the defect inspection operation indicates that the defect occurs, on the basis of the result of the defect inspection operation.

In order to determine whether or not the defect is repaired by the defect repair apparatus 34b and / or the processing apparatus 1, the control apparatus 2 may control the defect measurement apparatus 33b to perform the defect inspection operation in one area again after the defect repair apparatus 34b and / or the processing apparatus 1 performs the defect repair operation in one area. When the defect inspection operation that is performed in one area again indicates that the defect is not repaired in one area (namely, the defect still exists), the control apparatus 2 may control the defect repair apparatus 34b and / or the processing apparatus 1 to repair the defect in one area.

The control apparatus 2 may control the processing apparatus 1 to perform the processing operation (namely, to form the riblet structure) in the area in which the defect repair operation has been performed after the defect repair operation is performed, depending on the details of the defect repair operation. For example, as described above, the defect repair apparatus 34b sometimes performs, as the defect repair operation, the operation for filling the surface of the coat SF of paint with the filling member (for example, the paste for the repair). In this case, the defect repair apparatus 34b may fill the surface of the coat SF of paint with the filling member so that a surface of new layer that is formed on the coat SF of paint by the filling member is flat. Then, the processing apparatus 1 may perform the processing operation on the surface of new layer that is formed on the coat SF of paint by the filling member. Namely, the processing apparatus 1 may form the riblet structure on the surface of new layer that is formed on the coat SF of paint by the filling member.

The control apparatus 2 may control the display 4 to display the information relating to the defect inspection operation. For example, the control apparatus 2 may control the display 4 to display information relating to the result of the defect inspection operation. For example, the control apparatus 2 may control the display 4 to display information that indicates whether or not the defect is detected by the defect inspection operation. For example, the control apparatus 2 may control the display 4 to display information relating to the quality of the riblet structure (namely, an evaluated result of the feature of the riblet structure) indicated by the defect inspection operation. For example, the control apparatus 2 may control the display 4 to display information relating to a position (namely, a position on the coat SF of paint) at which the defect is detected by the extraneous substance inspection operation. For example, the control apparatus 2 may control the display 4 to display information relating to the characteristic of the defect that is detected by the defect inspection operation. When the information relating to the defect inspection operation is displayed in the display 4, an operator of the processing system SYSb can recognize, from a displayed result by the display 4, where and what type of defect occurs on the surface of the coat SF of paint. In this case, the operator may repair the defect by himself. Namely, the defect repair apparatus 34b may not necessarily repair the defect.

The control apparatus 2 may control the display 4 to display the information relating to the defect repair operation. For example, the control apparatus 2 may control the display 4 to display information relating to a result of the defect repair operation. For example, the control apparatus 2 may control the display 4 to display information that indicates whether or not the defect is repaired by the defect repair operation. When the defect is not repaired by the defect repair operation (namely, the defect still exists although the defect repair operation is performed), for example, the control apparatus 2 may control the display 4 to display an alert indicating that the defect cannot be repaired.

Note that the control apparatus 2 may control at least one of the defect repair apparatus 34b and the processing apparatus 1 to perform the defect repair operation independently from the defect inspection operation.

### (2-3) Technical Effect of Processing SYSb

The above described processing apparatus SYSb in the second embodiment achieves an effect that is same as an effect achievable by the above described processing system SYSa in the first embodiment. Moreover, in the second embodiment, the processing system SYSa performs the defect inspection operation on the surface of the coat SF of paint by using the defect measurement apparatus 33b. Thus, the processing system SYSb is capable of improving the quality of the riblet structure finally formed on the coat SF of paint through the defect inspection operation (furthermore, the defect repair operation, if needed), compared to the case where the defect inspection operation is not performed.

### (2-4) Modified Example of Processing SYSb

The processing system SYSb may not be provided with the defect repair apparatus 34b. In this case, when the defect inspection operation indicates that the defect occurs in one area of the surface of the coat SF of paint, the operator of the processing system SYSa may repair the defect.

### (3) Processing System SYSc in Second Embodiment

Next, a processing system SYS in a third embodiment (in the below described description, the processing system SYS in the third embodiment is referred to as a "processing system SYSc") will be described.

### (3-1) Structure of Processing System SYSc

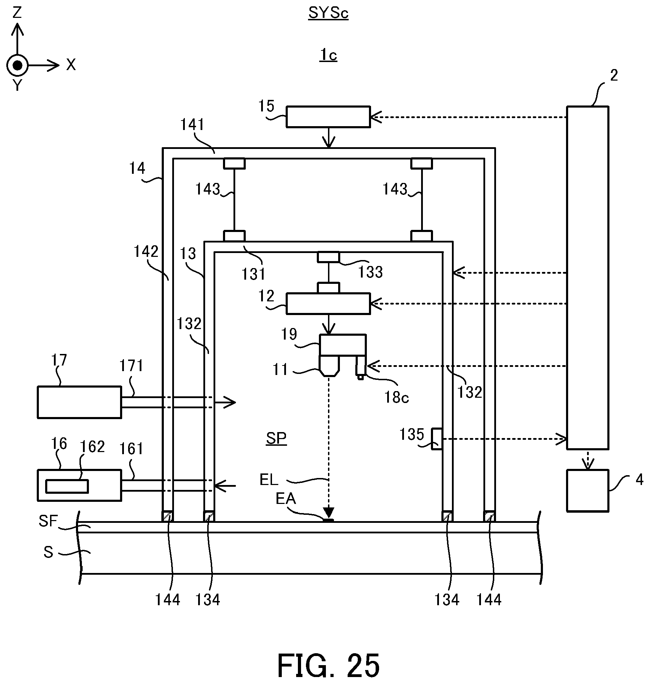

Firstly, with reference to FIG. 25, a structure of the processing system SYSc in a third embodiment will be described. FIG. 25 is a cross-sectional view that schematically illustrates an entire structure of the processing system SYSc in the third embodiment.

As illustrated in FIG. 25, the processing system SYSc in the third embodiment is different from the processing system SYSa in the first embodiment or the processing system SYSb in the second embodiment in that it is provided with a processing apparatus 1c instead of the processing apparatus 1. Another feature of the processing system SYSc may be same as another feature of the processing system SYSa or SYSb. However, the processing system SYSb may not be provided with at least one of the extraneous substance measurement apparatus 31, the extraneous substance removal apparatus 32, the defect measurement apparatus 33b and the defect repair apparatus 34b. FIG. 25 illustrates an example of the processing system SYSc that is not provided with the extraneous substance measurement apparatus 31, the extraneous substance removal apparatus 32, the defect measurement apparatus 33b and the defect repair apparatus 34b, for the purpose of simple illustration.

The processing apparatus 1c is different from the processing apparatus 1 in that it is further provided with a position measurement apparatus 18c. Another feature of the processing apparatus 1c may be same as another feature of the processing apparatus 1.

The position measurement apparatus 18c measures the relative positional relationship between the coat SF of paint and the light irradiation apparatus 11. Namely, the position measurement apparatus 18c measures the relative positional relationship between the processing target object S and the light irradiation apparatus 11. In the first embodiment, the position measurement apparatus 18c measures a position of the coat SF of paint relative to the light irradiation apparatus 11. Namely, the position measurement apparatus 18c measures a position of the processing target object S relative to the light irradiation apparatus 11.

In order to measure the position of the coat SF of paint (namely, the position of the processing target object S, the same applies to the below described description) relative to the light irradiation apparatus 11, the position measurement apparatus 18c may measure the coat SF of paint. Namely, the position measurement apparatus 18c may measure the processing target object S. in this case, the position measurement apparatus 18c may be referred to as an object measurement apparatus, because it measures an object including at least one of the coat SF of paint and the processing target object S.

The position measurement apparatus 18c may be disposed at a position that is fixed to the light irradiation apparatus 11 (especially, the optical system 112). The position measurement apparatus 18c may be disposed at a position, a relative position relative to the light irradiation apparatus 11 of which is fixed. The position measurement apparatus 18c may be disposed at a position at which a relative position of the light irradiation apparatus 11 and the position measurement apparatus 18c does not change even when the driving system 12 moves the light irradiation apparatus 11. For example, FIG. 25 illustrates an example in which the position measurement apparatus 18c is attached to the attachment member 19 to which the light irradiation apparatus 11 is attached. However, the position measurement apparatus 18c may be attached to a member that is different from the attachment member 19. For example, the position measurement apparatus 18c may be attached to the light irradiation apparatus 11.

When the position measurement apparatus 18c is disposed at a position that is fixed to the light irradiation apparatus 11, an output from the position measurement apparatus 18c (namely, a measured result by the position measurement apparatus 18c) includes information relating to the position of the coat SF of paint relative to the light irradiation apparatus 11. Specifically, the measured result by the position measurement apparatus 18c includes information relating to the position of the coat SF of paint relative to the position measurement apparatus 18c. Namely, the measured result by the position measurement apparatus 18c includes information relating to the position of the coat SF of paint in a measurement coordinate system of the position measurement apparatus 18c. Here, when the position measurement apparatus 18c is disposed at a position that is fixed to the light irradiation apparatus 11, the information relating to the position of the coat SF of paint relative to the position measurement apparatus 18c substantially includes information relating to the position of the coat SF of paint relative to the light irradiation apparatus 11 that is disposed at a potion that is fixed to the position measurement apparatus 18c. Therefore, the position of the coat SF of paint relative to the light irradiation apparatus 11 is determinable by the control apparatus 2.

The position measurement apparatus 18c may be any measurement apparatus, as long as it is configured to measure the coat SF of paint. For example, the position measurement apparatus 18c may include an imaging apparatus (namely, a camera) that is configured to image an object such as the coat SF of paint. The position measurement apparatus 18c may include an irradiation apparatus that irradiates the coat SF of paint with measurement light that draws a predetermined pattern on the coat SF of paint and an imaging apparatus that images the pattern drawn on the coat SF of paint by the measurement light. Like this, the position measurement apparatus 18c may be a measurement apparatus that measures the coat SF of paint by using a non-contact method (as one example, at least one of a light detection method, a sound detection method and electrical wave detection method).

Note that the processing apparatus 1c may be provided with a plurality of position measurement apparatuses 18c. In this case, measurement axes of the plurality of position measurement apparatuses 18c may intersect with (alternatively, skew with respect to) each other or may be parallel to (alternatively, coaxial to) each other.

The control apparatus 2 may control the driving system 12 on the basis of the measured result by the position measurement apparatus 18c. Namely, the control apparatus 2 may control the driving system 12 to change the relative position of the coat SF of paint and the light irradiation apparatus 11 on the basis of the measured result by the position measurement apparatus 18c. Specifically, the control apparatus 2 may obtain information relating to the relative positional relationship between the coat SF of paint and the light irradiation apparatus 11 on the basis of the measured result by the position measurement apparatus 18c and may control the driving system 12 on the basis of the information relating to the relative positional relationship between the coat SF of paint and the light irradiation apparatus 11. Incidentally, when the position measurement apparatus 18c includes the imaging apparatus, the control apparatus 2 may control the driving system 12 by using a vision-based servo (a visual servo) based on the measured result by the position measurement apparatus 18c (namely, the image that is captured by the imaging apparatus). Note that the vision-based servo may be referred to as a vision servo.

The control apparatus 2 may change the relative position of the coat SF of paint and the light irradiation apparatus 11 on the basis of the measured result by the position measurement apparatus 18c so that a desired processing shot area SA on the coat SF of paint is irradiated with the processing lights EL. For example, the control apparatus 2 may change the relative position of the coat SF of paint and the light irradiation apparatus 11 on the basis of the measured result by the position measurement apparatus 18c so that a desired area part in the desired processing shot area SA on the coat SF of paint is irradiated with the processing lights EL. The operation for changing the relative position of the coat SF of paint and the light irradiation apparatus 11 may be regarded to be equivalent to an operation for changing the positions of the target irradiation areas EA on the coat SF of paint, because the target irradiation areas EA are irradiated with the processing lights EL.

### (3-2) Measurement Operation by Position Measurement Apparatus 18c

Next, a measurement operation for measuring the relative positional relationship between the coat SF of paint and the light irradiation apparatus 11 by the position measurement apparatus 18c will be described. In the third embodiment, the position measurement apparatus 18c may perform at least one of a first measurement operation, a second measurement operation and a third measurement operation. Thus, in the below described description, the first to third measurement operations will be described in sequence.

### (3-2-1) First Measurement Operation

The first measurement operation is an operation for measuring the relative positional relationship between the coat SF of paint and the light irradiation apparatus 11 by measuring a position of a processed area FA1 of the surface of the coat SF of paint that has been processed by the processing operation. Namely, the first measurement operation is an operation for measuring the relative positional relationship between the coat SF of paint and the light irradiation apparatus 11 by measuring the position of the processed area FA1 of the surface of the coat SF of paint in which the riblet structure is formed by the processing operation.

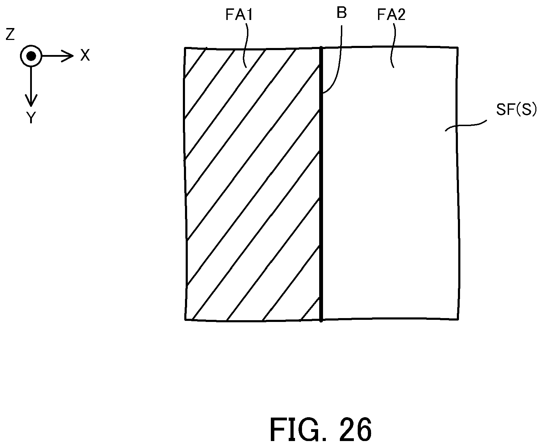

Specifically, FIG. 26 is a plan view that illustrates the processed area FA1 on the surface of the coat SF of paint. As illustrated in FIG. 26, not only the processed area FA1 but also a non-processed area FA2 that is not yet processed (namely, in which the riblet structure is not yet formed) by the processing operation usually exist on the surface of the coat SF of paint at a timing when the processing operation is not yet completed. The processed area FA1 and the non-processed area FA2 usually have a predetermined positional relationship in which they are adjacent to each other. Thus, an operation for measuring the position of the processed area FA1 may be regarded to be substantially equivalent to an operation for measuring a position of the non-processed area FA2. The operation for measuring the position of the processed area FA1 may be regarded to be substantially equivalent to an operation for measuring the position of the non-processed area FA2 in addition to the position of the processed area FA1. Thus, the control apparatus 2 may determine the position of the non-processed area FA2 (specifically, the position of the non-processed area FA2 relative to the light irradiation apparatus 11) on the basis of a result of the first measurement operation that measures the position of the processed area FA1. As a result, the control apparatus 2 may change the relative position of the coat SF of paint and the light irradiation apparatus 11 on the basis of the measured result of the position of the processed area FA1 so that at least a part of the non-processed area FA2 is irradiated with the processing lights EL. Namely, the control apparatus 2 may change the relative position of the coat SF of paint and the light irradiation apparatus 11 so that the target irradiation areas EA move in the non-processed area FA2.

The processed area FA1 and the non-processed area FA2 usually have a predetermined positional relationship in which they are adjacent to each other through a border B between the processed area FA1 and the non-processed area FA2. Namely, the processed area FA1 and the non-processed area FA2 usually have a predetermined positional relationship in which they are adjacent to each other in such a condition that a border of the processed area FA1 that constitutes the border B overlaps with a border of the non-processed area FA2 that constitutes the same border B. Thus, the position measurement apparatus 18c may measure the position of the processed area FA1 by measuring a position of the border B.

A characteristic (for example, an optical characteristic) of the processed area FA1 is different from that of the non-processed area FA2. The position measurement apparatus 18c may measure the position of the processed area FA1 by using a fact that the characteristic of the processed area FA1 is different from the characteristic of the non-processed area FA2. For example, when the position measurement apparatus 18c includes the imaging apparatus, the measured result by the position measurement apparatus 18c (namely, the image that is captured by the imaging apparatus) includes the processed area FA1 and the non-processed area FA2 in such a condition that they are optically distinguishable. Therefore, the control apparatus 2 may determine the position of the processed area FA1 by analyzing (for example, by image-analyzing) the measured result by the position measurement apparatus 18c.

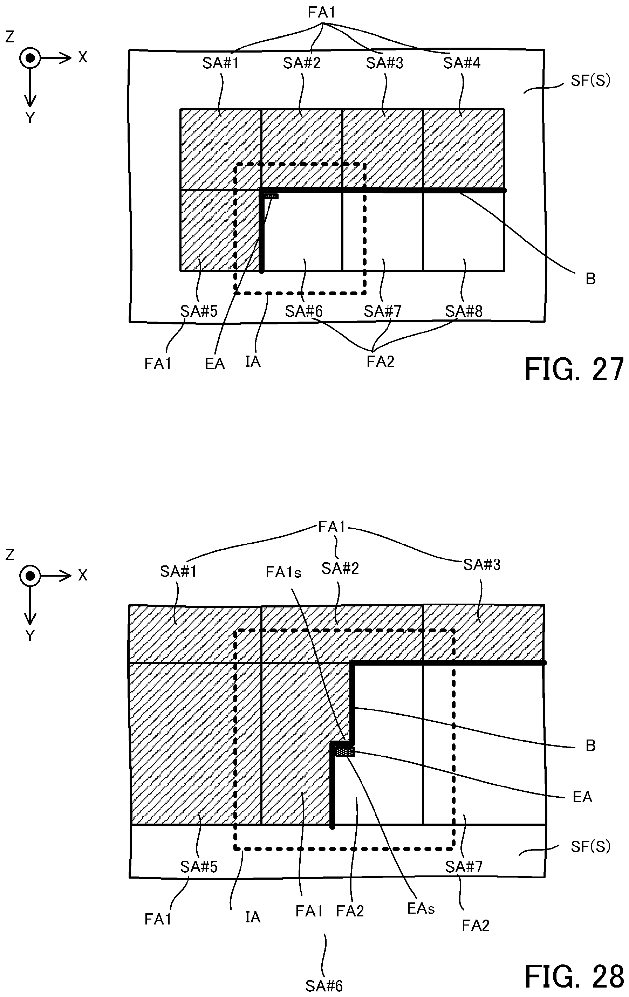

One specific example of an operation for change the relative position of the coat SF of paint and the light irradiation apparatus 11 on the basis of the measured result of the position of the processed area FA1 will be described with reference to FIG. 27. FIG. 27 is a plan view that illustrates the surface of the coat SF of paint on which eight processing shot areas SA#1 to SA#8 are set. It is assumed that the eight processing shot areas SA#1 to SA#8 are set so that the processing shot areas SA#1 to SA#4 are lined up along the X axis line in this order, the processing shot areas SA#5 to SA#8 are lined up along the X axis line in this order, and the processing shot areas SA#5 to SA#8 are adjacent to the +Y side of the processing shot areas SA#1 to SA#4.

It is assumed that the processing apparatus 1 performs the processing operation on the eight processing shot areas SA#1 to SA#8 in this order. In an example illustrated in FIG. 27, the processing shot areas SA#1 to SA#5 are the processed areas FA1 in which the processing operation has been already performed. On the other hand, the processing shot areas SA#6 to SA#8 are the non-processed areas FA2 in which the processing operation is not yet performed. In this case, the processing apparatus 1 performs the processing operation in the processing shot area SA#6 next. Thus, the first measurement operation that is performed when the processing operation is performed in the processing shot area SA#6 will be described. However, the first measurement operation that is performed when the processing operation is performed in the processing shot area SA other than the processing shot area SA#6 may be performed in the same manner as the first measurement operation that is performed when the processing operation is performed in the processing shot area SA#6.

In this case, as illustrated in FIG. 27, the position measurement apparatus 18c measures the position of the border B between the processed area FA1 and the non-processed area FA2. The border B between the processed area FA1 and the non-processed area FA2 includes a border between the processing shot area SA#6 and the processing shot areas SA#2 and SA#5, a border between the processing shot area SA#7 and the processing shot area SA#3, and a border between the processing shot area SA#8 and the processing shot area SA#8. Here, considering that the processing operation is performed in the processing shot area SA#6 next, the position measurement apparatus 18c may measure the position of the border between the processing shot area SA#6 and the processing shot areas SA#2 and SA#5, especially. As a result, the control apparatus 2 is capable of determining the position of the processing shot area SA#6 in which the processing operation is performed next on the basis of the measured result by the position measurement apparatus 18c. Thus, the control apparatus 2 is capable of changing the relative position of the coat SF of paint and the light irradiation apparatus 11 so that the light irradiation apparatus 11 is located at a position at which it can irradiates the processing shot area SA#6 with the processing lights EL. Then, after the light irradiation apparatus 11 is located at the position at which it can irradiates the processing shot area SA#6 with the processing lights EL, the processing apparatus 1 starts the processing operation in the processing shot area SA#6.

Note that a measurement range IA of the position measurement apparatus 18c may set to be larger than the processing shot area SA as illustrated in Fig. 27. The measurement range IA of the position measurement apparatus 18c may set to include the processing shot area SA. In this case, the control apparatus 2 is capable of properly determining the position of the processing shot area SA in which the processing operation is performed next on the basis of the measured result by the position measurement apparatus 18c.

The processed area FA1 and the non-processed area FA2 that are adjacent to each other through the border B may have same shape and same size. More specifically, a processing expected area (for example, a certain processing shot area SA) that is the non-processed area FA2 and in which the processing operation is performed next and an adjacent area (for example, a certain processing shot area SA) that is the processed area FA1 and that is adjacent to the processing expected area through the border B may have same shape and same size. For example, if the processing shot areas SA#1 to SA#4 are not set in the example illustrated in FIG. 27, the processing shot area SA#6 that is the non-processed area FA2 and in which the processing operation is performed next and the processing shot area SA#5 that is the processed area FA1 and that is adjacent to the processing shot area SA#6 through the border B have same shape and same size. However, the non-processed area FA2 may be smaller than the processed area FA1 that is adjacent to the non-processed area FA2 through the border B. More specifically, the processing expected area (for example, a certain processing shot area SA) that is the non-processed area FA2 and in which the processing operation is performed next may be smaller than the adjacent area (for example, a certain processing shot area SA) that is the processed area FA1 and that is adjacent to the processing expected area through the border B. For example, in the example illustrated in FIG. 27, the processing shot area SA#6 that is the non-processed area FA2 and in which the processing operation is performed next may be smaller than an area that includes the processing shot areas SA#2 and SA#5, that is the processed area FA1 and that is adjacent to the processing shot area SA#6 through the border B.

After the processing operation in the processing shot area SA#6 is started, the processing shot area SA#6 is swept with the processing lights EL by the Galvano mirror 1122. As a result, as illustrated in FIG. 28 that is a plan view that enlarges and illustrates an area around the processing shot area SA#6, a ratio of the processed area FA1 in the processing shot area SA#6 increases. Namely, a range of the processed area FA1 on the surface of the coat SF of paint substantially moves. Even when the processing operation is performed in the processing shot area SA#6 in this manner, the position measurement apparatus 18c may measure the position of the border B between the processed area FA1 and the non-processed area FA2, for example. Especially, the position measurement apparatus 18c may measure the position of the border B between the processed area FA1 and the non-processed area FA2 in the processing shot area SA#6. As a result, the control apparatus 2 is capable of determining the position of the non-processed area FA2 in the processing shot area SA#6 on the basis of the measured result by the position measurement apparatus 18c. Thus, the control apparatus 2 is capable of changing the relative position of the coat SF of paint and the light irradiation apparatus 11 so that the light irradiation apparatus 11 is located at a position at which it can irradiates the non-processed area FA2 in the processing shot area SA#6 with the processing lights EL. Alternatively, considering that the irradiation positions of the processing lights EL (namely, the positions of the target irradiation areas EA) in the processing shot area SA#6 is mainly controlled by the Galvano mirror 1122, the control apparatus 2 may control the Galvano mirror 1122 so that the non-processed area FA2 in the processing shot area SA#6 is irradiated with the processing lights EL.

Alternatively, after the processing operation in the processing shot area SA#6 is started, a position that should be irradiated with the processing lights EL next in the processing shot area SA#6 is expected to be adjacent to a part of the processed area FA1, which moves due to the sweeping of the processing lights EL, at the moving direction side (namely, a part at the front side in the moving direction, and a part FA1s in FIG. 28). Thus, after the processing operation in the processing shot area SA#6 is started, the position measurement apparatus 18c may measure the position of the part of the processed area FA1, which moves in the processing shot area SA#6, at the moving direction side, in addition to or instead of measuring the position of the border B. Even in this case, the control apparatus 2 may change the relative position of the coat SF of paint and the light irradiation apparatus 11 and / or control the Galvano mirror 1122 on the basis of the measured result by the position measurement apparatus 18c so that the non-processed area FA2 in the processing shot area SA#6 (especially, a position that should be irradiated with the processing lights EL next) is irradiated with the processing lights EL.

Moreover, after the processing operation in the processing shot area SA#6 is started, the irradiation positions of the processing lights EL are measurable by the position measurement apparatus 18c, because the processing shot area SA#6 is actually irradiated with the processing lights EL. Namely, the positions of the target irradiation areas EA that are irradiated with the processing lights EL are measurable by the position measurement apparatus 18c. As a result, the control apparatus 2 is capable of determining the positions of a part of the target irradiation areas EA (namely, the irradiation positions of the processing lights EL), which move in the processing shot area SA#6, at a moving direction side (namely, a part at the front side in the moving direction, and a part EAs in FIG. 28). Here, the position that should be irradiated with the processing lights EL next in the processing shot area SA#6 must is expected to be adjacent to the part EAs of the target irradiation areas EA (namely, the irradiation positions of the processing lights EL) at the moving direction side. Thus, after the processing operation in the processing shot area SA#6 is started, the position measurement apparatus 18c may measure the position of the part of the processed area FA1, which move in the processing shot area SA#6, at the moving direction side, in addition to or instead of measuring the position of the border B. Even in this case, the control apparatus 2 may change the relative position of the coat SF of paint and the light irradiation apparatus 11 and / or control the Galvano mirror 1122 on the basis of the measured result by the position measurement apparatus 18c so that the non-processed area FA2 in the processing shot area SA#6 (especially, the position that should be irradiated with the processing lights EL next) is irradiated with the processing lights EL.

Moreover, when the position measurement apparatus 18c measures the irradiation positions of the processing lights EL (namely, the positions of the target irradiation areas EA), the control apparatus 2 may determine on the basis of actual irradiation positions of the processing lights EL that are indicated by the measured result by the position measurement apparatus 18c whether or not the non-processed area FA2 in the processing shot area SA#6 (especially, a position that should be irradiated with the processing lights EL now) is irradiated with the processing lights EL. When it is determined that the non-processed area FA2 in the processing shot area SA#6 (especially, a position that should be irradiated with the processing lights EL now) is not irradiated with the processing lights EL, the control apparatus 2 may change the relative position of the coat SF of paint and the light irradiation apparatus 11 and / or control the Galvano mirror 1122 so that the non-processed area FA2 in the processing shot area SA#6 (especially, a position that should be irradiated with the processing lights EL now) is irradiated with the processing lights EL.

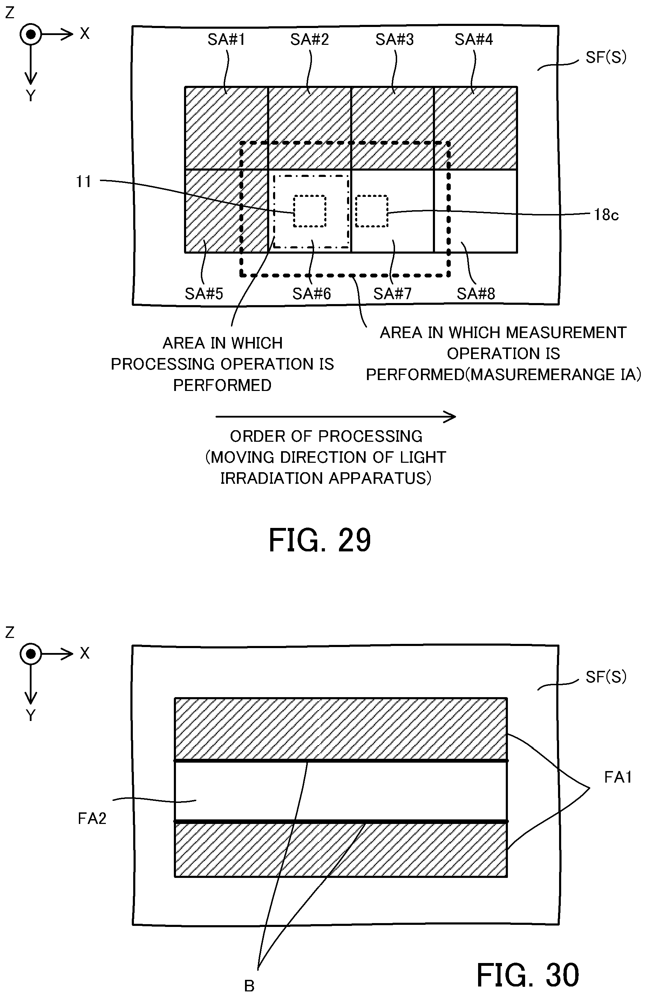

In this manner, the position measurement apparatus 18c may measure the position of the processing shot area SA#6 (especially, the position of the non-processed area FA2 in the processing shot area SA#6) during at least a part of a period when the processing operation is performed in the processing shot area SA#6. On the other hand, after the processing operation in the processing shot area SA#6 is completed, the processing apparatus 1 starts the processing operation in the processing shot area SA#7 next. In this case, the position measurement apparatus 18c may predict the position of the processing shot area SA#7 in advance during at least a part of the period when the processing operation is performed in the processing shot area SA#6. In this case, the position measurement apparatus 18c and the light irradiation apparatus 11 may be aligned to realize a situation where the measurement operation for measuring the position of another processing shot area SA in which the processing operation is performed next to one processing shot area SA is performed before the processing operation in one processing shot area SA is completed. For example, as illustrated in FIG. 29 that is one example of the positional relationship between the position measurement apparatus 18c and the light irradiation apparatus 11, the position measurement apparatus 18c and the light irradiation apparatus 11 may be aligned so that the position measurement apparatus 18c and the light irradiation apparatus 11 line up along the X axis direction (namely, the moving direction of the light irradiation apparatus 11 and a direction in which the processing shot areas are lined up). Moreover, as illustrated in FIG. 29, the position measurement apparatus 18c and the light irradiation apparatus 11 may be aligned so that the position measurement apparatus 18c is disposed at the +X side (namely, the front side in the moving direction of the light irradiation apparatus 11) from the light irradiation apparatus 11. As a result, as illustrated in FIG. 29, an area in which the first measurement operation is performed on the coat SF of paint includes an area at the +X side (namely, the front side in the moving direction of the light irradiation apparatus 11) from an area in which the processing operation is performed on the coat SF of paint. Note that the area in which the measurement operation is performed in FIG. 29 is typically an area including at least a part of the measurement range IA. Alternatively, the position measurement apparatus 18c and the light irradiation apparatus 11 may not line up along the X axis direction and the position measurement apparatus 18c may not disposed at the +X side from the light irradiation apparatus 11, as long as the area in which the first measurement operation is performed includes the area in which the processing operation is performed. Namely, he position measurement apparatus 18c and the light irradiation apparatus 11 may be aligned so that the area in which the first measurement operation is performed includes the area in which the processing operation is performed. As a result, the situation where the measurement operation for measuring the position of another processing shot area SA in which the processing operation is performed next to one processing shot area SA is performed before the processing operation in one processing shot area SA is completed.

Note that the above described description describes an example in which the one processed area FA1 and one processed area FA1 are formed on the surface of the coat SF of paint. However, a plurality of processed areas FA1 may be formed on the surface of the coat SF of paint, depending on the details of the processing operation. Moreover, a plurality of non-processed areas FA2 may be formed on the surface of the coat SF of paint, depending on the details of the processing operation. In this case, the position measurement apparatus 18c may measure the positions of at least two of the plurality of processed areas FA1. The position measurement apparatus 18c may measure the positions of at least two of the plurality of non-processed areas FA2. The position measurement apparatus 18c may measure the position of single border B that is formed by at least one processed area FA1 and at least one non-processed area FA2. The position measurement apparatus 18c may measure the positions of at least two borders B that is formed by at least one processed area FA1 and at least one non-processed area FA2.

A condition where two processed areas FA1 between which the non-processed area FA2 is located are formed on the surface of the coat SF of paint is one example of the condition where the plurality of processed areas FA1 is formed on the surface of the coat SF of paint, as illustrated in FIG. 30. In this situation, the control apparatus 2 may control the processing apparatus 1 to perform the processing operation in the non-processed area FA2 that is located between two processed areas FA1 on the basis of the measured result of the positions of two processed areas FA1 (for example, the positions of two borders B that are formed by two processed areas FA1 and one non-processed area FA2). The processing operation in this case may be a processing operation for performing an addition processing in the non-processed area FA2 that is located between two processed areas FA1 that are so close to each other that they are regarded to be substantially adjacent to each other, for example. The processing operation in this case may be a processing operation for making two processed areas FA1 be one processed area FA1 substantially.

### (3-2-2) Second Measurement Operation

The second measurement operation is an operation for measuring the relative positional relationship between the coat SF of paint and the light irradiation apparatus 11 by measuring a position of a feature point of the surface of the coat SF of paint (namely, a feature point of the processing target object S). The feature point of a certain coat SF of paint may include a point of a characteristic position of a three-dimensional shape of an object that is represented by point cloud data that is a set of points indicating positions on the surface of the coat SF of paint. At least one of a vertex, an edge, a border, a point located at the most +Z side, a point located at the most -Z side, a point located at the most +X side, a point located at the most -X side, a point located at the most +Y side and a point located at the most -Y side of the coat SF of paint is one example of the feature point.

In this case, the control apparatus 2 is capable of determining a position of the feature point relative to the light irradiation apparatus 11 in a fiducial coordinate system (for example, the measurement coordinate system of the position measurement apparatus 18c) on the basis of the measured result by the position measurement apparatus 18c. Moreover, the control apparatus 2 is capable of determining a coordinate of the feature point in a coordinate system of a three-dimensional model data by referring the three-dimensional model data of the processing target object S (alternatively, a three-dimensional model data of the coat SF of paint). Thus, the control apparatus 2 is capable of determining a position of any part of the processing target object S (namely, the coat SF of paint) in the fiducial coordinate system on the basis of the measured result by the position measurement apparatus 18c and the three-dimensional model data of the processing target object S (alternatively, the three-dimensional model data of the coat SF of paint). As a result, the control apparatus 2 is capable of changing the relative position of the coat SF of paint and the light irradiation apparatus 11 in the fiducial coordinate system so that the light irradiation apparatus 11 is located at a position at which it can irradiates a desired position on the coat SF of paint with the processing lights EL.

However, according to the second measurement operation, it is more difficult to determine the position of the non-processed area FA2 (especially, the processing expected area that is the non-processed area FA2 and in which the processing operation is performed next) with high degree of accuracy, compared to the first measurement operation. Thus, the control apparatus 2 may perform the second measurement operation, when it is difficult to perform the first measurement operation because the processed area FA1 does not exist on the coat SF of paint. For example, when the processing apparatus 1 performs the processing operation on the coat SF of paint for the first time, there is a high possibility that the processed area FA1 does not exist on the coat SF of paint. Thus, the control apparatus 2 may perform the second measurement operation, when the processing apparatus 1 performs the processing operation on the coat SF of paint for the first time. On the other hand, the control apparatus 2 may perform the first measurement operation, when it is possible to perform the first measurement operation because the processed area FA1 exists on the coat SF of paint. The control apparatus 2 may not perform the second measurement operation, when it is possible to perform the first measurement operation because the processed area FA1 exists on the coat SF of paint.

### (3-2-3) Third Measurement Operation

The third measurement operation is an operation for measuring the relative positional relationship between the coat SF of paint and the light irradiation apparatus 11 by measuring the riblet structure that is formed on the surface of the coat SF of paint. Namely, the third measurement operation is an operation for measuring the relative positional relationship between the coat SF of paint and the light irradiation apparatus 11 by measuring the riblet structure that is formed in the processed area FA1.

Specifically, as already described by referring to FIG. 6A and FIG. 6B, the riblet structure is the structure in which the plurality of concave structures CP1 or the plurality of convex structures CP2 each of which extends along the first direction (for example, the Y axis direction) are arranged along the second direction (for example, the X axis direction that intersects with the first direction. Namely, the riblet structure is the periodical structure. Thus, the riblet structure is usable as what we call an encoder scale for a position measurement. The third measurement operation is an operation for measuring the relative positional relationship between the coat SF of paint and the light irradiation apparatus 11 by using the riblet structure as the encoder scale.

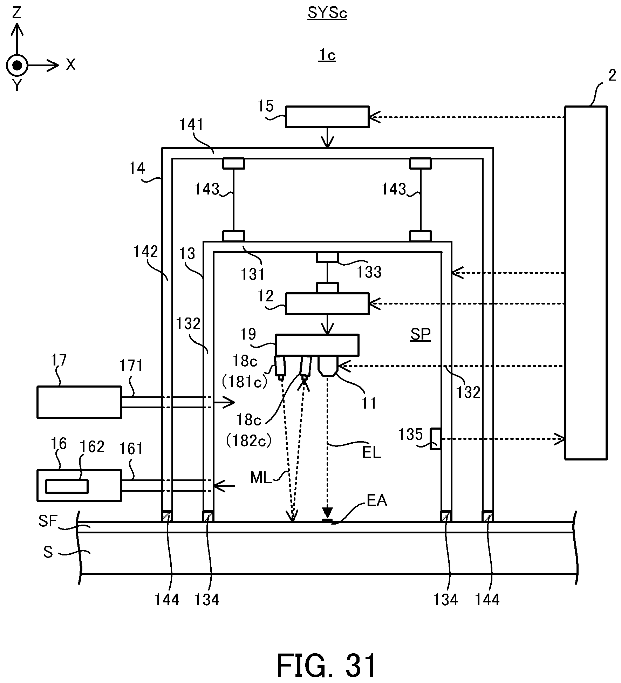

When the riblet structure is used as the encoder scale, the position measurement apparatus 18c is provided with a light irradiation part 181c and a light reception part 182c, as illustrated in FIG. 31 that illustrates a structure of the processing system SYSc including the position measurement apparatus 18c for performing the third measurement operation. The light irradiation part 181c is an apparatus for irradiating the riblet structure with measurement light ML. The light irradiation part 181c is an apparatus for emitting the measurement light EL to the riblet structure with measurement light ML. The light reception apparatus 182c is a light reception apparatus that optically receives the measurement light ML through the riblet structure (namely, a detection apparatus that detects the measurement light ML). The light reception apparatus 182c is a light reception apparatus that optically receives the measurement light ML from the riblet structure. Especially, since the riblet structure is the periodical structure, the riblet structure may substantially serve as a diffracting grating. In this case, the measurement light ML through the riblet structure (namely, the measurement light ML from the riblet structure) is diffracted light that is diffracted by the riblet structure. Therefore, the light reception part 182c optically receives the diffracted light that is diffracted by the riblet structure.

The control apparatus 2 is capable of determining the relative positional relationship between the coat SF of paint and the light irradiation apparatus 11 on the basis of a light received result by the light reception part 182c. As a result, the control apparatus 2 is capable of changing the relative position of the coat SF of paint and the light irradiation apparatus 11 on the basis of the light received result by the light reception part 182c so that a desired position on the coat SF of paint is irradiated with the processing lights EL.

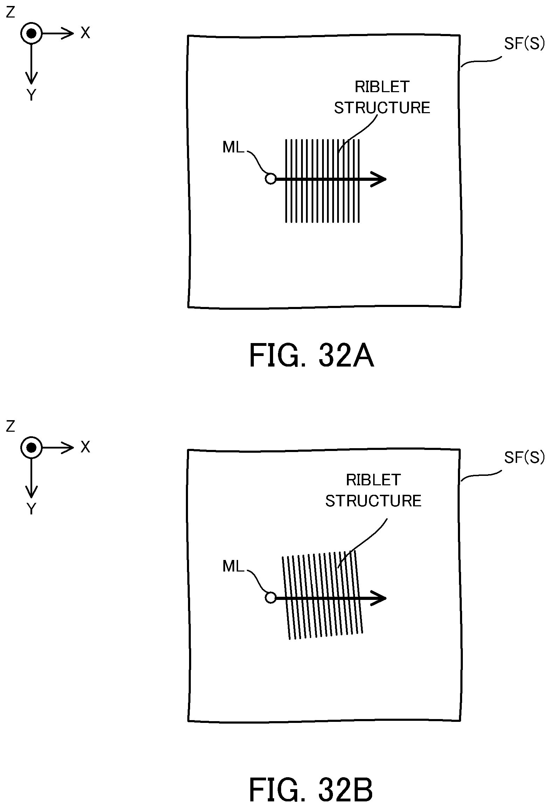

However, when a periodical signal in accordance with a cycle of the riblet structure is not included in the light received result by the light reception part 182c, it may possibly more difficult to determine the relative positional relationship of the coat SF of paint and the light irradiation apparatus 11 on the basis of the light received result by the light reception part 182c, compared to the case where the periodical signal in accordance with the cycle of the riblet structure is included in the light received result by the light reception part 182c. Thus, the control apparatus 2 may sweep the riblet structure with the measurement light ML along a direction that intersects with a direction in which the concave structure CP1 and the convex structure CP2, which constitute the riblet structure, extend, in order to determine the relative positional relationship between the coat SF of paint and the light irradiation apparatus 11. For example, the control apparatus 2 may change the relative position of the coat SF of paint and the position measurement apparatus 18c so that the riblet structure is swept with the measurement light ML along the direction that intersects with the direction in which the concave structure CP1 and the convex structure CP2 extend. For example, the control apparatus 2 may change a relative attitude of the position measurement apparatus 18c relative to the coat SF of paint so that the riblet structure is swept with the measurement light ML along the direction that intersects with the direction in which the concave structure CP1 and the convex structure CP2 extend. Note that FIG. 32A and FIG. 32B illustrate an example in which the riblet structure is swept with the measurement light ML along the direction that intersects with the direction in which the concave structure CP1 and the convex structure CP2 extend. For example, FIG. 32A illustrates the measurement light ML with which the riblet structure is irradiated along the direction that is perpendicular to the direction (the Y axis direction in an example illustrated in FIG. 32A) in which the concave structure CP1 and the convex structure CP2, which constitute the riblet structure, extend. For example, FIG. 32B illustrates the measurement light ML with which the riblet structure is irradiated along the direction that is not perpendicular to but intersects with the direction (the Y axis direction in an example illustrated in FIG. 32B) in which the concave structure CP1 and the convex structure CP2, which constitute the riblet structure, extend.

### (3-4) Technical Effect of Processing SYSc

The above described processing apparatus SYSc in the third embodiment achieves an effect that is same as an effect achievable by the processing system SYSa in the first embodiment or the processing system SYSb in the second embodiment described above. Moreover, in the third embodiment, the processing system SYSc controls the driving system 12 on the basis of the measured result by the position measurement apparatus 18c. Thus, the processing system SYSc is capable of increasing an accuracy of the alignment of the light irradiation apparatus 11. Namely, the processing system SYSc is capable of properly changing the relative position of the coat SF of paint and the light irradiation apparatus 11 so that a desired position on the coat SF of paint is irradiated with the processing lights EL. As a result, the processing system SYSc is capable of processing the coat SF of paint more properly.

For example, the processing system SYSc is capable of making a phase of the riblet structure formed in the processed area FA1 and a phase of the riblet structure newly formed (for example, the riblet structure newly formed in the un-processed area FA2) have a desired relation. Typically, the processing system SYSc is capable of making the phase of the riblet structure formed in the processed area FA1 and the phase of the riblet structure newly formed be coincident with each other. Moreover, the processing system SYSc is capable of making phases of the riblet structures formed in two processing shot areas SA (for example, the processing shot areas SA#1 and SA#2) have a desired relation (typically, have a relation in which the phases are coincident with each other). Incidentally, in this case, the cycle of the riblet structure formed in the processed area FA1 and the cycle of the riblet structure newly formed may be equal to each other. The cycle of the riblet structures formed in two processing shot areas SA (for example, the processing shot areas SA#1 and SA#2) may be equal to each other.

### (4) Other Modified Example

In the above described description, the processing system SYS deflects the processing lights EL by the Galvano mirror 1122 in order to sweep the surface of the coat SF of paint with the plurality of processing lights EL. However, the processing apparatus 1 may sweep the surface of the coat SF of paint with the plurality of processing lights EL by relatively moving the light irradiation apparatus 11 relative to the coat SF of paint in addition to or instead of deflecting the processing lights EL by the Galvano mirror 1122. Namely, the control apparatus 2 may control the driving system 12 to relatively move the light irradiation apparatus 11 relative to the coat SF of paint so that the surface of the coat SF of paint is swept with the processing lights EL.

One of a purpose of relatively moving the light irradiation apparatus 11 relative to the coat SF of paint by the driving system 12 is to sweep the surface of the coat SF of paint with the processing lights EL as described above. Thus, when the sweep of the coat SF of paint with the processing lights EL is realized without moving the light irradiation apparatus 11, the light irradiation apparatus 11 may not move. Namely, the processing apparatus 1 may not be provided with the driving system 12. As one example, when the processing target object S moves relative to the light irradiation apparatus 11, the sweep of the coat SF of paint with the processing lights EL is realized without moving the light irradiation apparatus 11. Thus, the processing system SYS may be provided with a driving system that moves the processing target object S. For example, the processing system SYS may be provided with a driving system that moves the stage that supports the processing target object S.

One of the purpose of relatively moving the light irradiation apparatus 11 relative to the coat SF of paint by the driving system 12 is to sweep the plurality of processing shot areas SA with the processing lights EL in sequence without moving the housing apparatus 13 and the support apparatus 14 when the plurality of processing shot areas SA are housed in the containing space SP of the housing apparatus 13. Thus, when the single processing shot area SA is housed in the containing space SP, the light irradiation apparatus 11 may not move. Namely, the processing apparatus 1 may not be provided with the driving system 12.

In the above described description, the processing apparatus 1 is provided with the housing apparatus 13, the support apparatus14, the driving system 15, the exhaust apparatus 16 and the gas supply apparatus 17. However, the processing apparatus 1 may not be provided with at least one of the housing apparatus 13, the support apparatus14, the driving system 15, the exhaust apparatus 16 and the gas supply apparatus 17, as long as it is configured to process the processing target object S. The processing apparatus 1 may not be provided with at least a part of the housing apparatus 13, the support apparatus14, the driving system 15, the exhaust apparatus 16 and the gas supply apparatus 17, as long as it is configured to process the processing target object S. When the processing apparatus 1 is not provided with the housing apparatus 13, the driving system 12 may be attached to the support apparatus 14. Moreover, the above described structure of each of the housing apparatus 13, the support apparatus14, the driving system 15, the exhaust apparatus 16 and the gas supply apparatus 17 is merely one example, and the processing apparatus 1 may be provided with at least one of the housing apparatus 13, the support apparatus14, the driving system 15, the exhaust apparatus 16 and the gas supply apparatus 17 having a structure that is different from the above described structure.

In the above described description, the processing system SYS is provided with the display 4. However, the processing system SYS may not be provided with the display 4.

In the above described description, the processing system SYS forms the riblet structure of the coat SF of paint on the surface of the processing target object S. However, the processing system SYS may form any structure of the coat SF of paint having any shape on the surface of the processing target object S. Even in this case, any structure having any shape is formable by means of the control apparatus 2 controlling the light irradiation apparatus 11 and so on so that the surface of the coat SF of paint is swept with the processing lights EL along the sweeping path based on the structure that should be formed. A fine texture structure (typically, a concave and convex structure) that is formed regularly or irregularly in a micro / nano-meter order is one example of any structure. This fine texture structure may include at least one of a shark skin structure or a dimple structure that has a function of reducing a resistance from a fluid (a liquid and / or a gas). The fine texture structure may include a lotus leaf surface structure that has at least one of a liquid repellent function and a self-cleaning function (for example, has a lotus effect). The fine texture structure may include at least one of a fine protrusion structure that has a liquid transporting function (US2017/0044002A1), a concave and convex structure that has a lyophile effect, a concave and convex structure that has an antifouling effect, a moth eye structure that has at least one of a reflectance reduction function and a liquid repellent function, a concave and convex structure that intensifies only light of a specific wavelength by interference to have a structural color, a pillar array structure that has an adhesion function using van der Waals force, a concave and convex structure that has an aerodynamic noise reduction function, a honeycomb structure that has a droplet collection function and so on.

In the above described description, the processing system SYS removes the coat SF of paint by evaporating the coat SF of paint by the irradiation of the processing lights EL. However, the processing system SYS may remove the coat SF of paint by changing the characteristic of the coat SF of paint by the irradiation of the processing lights EL, in addition to or instead of evaporating the coat SF of paint by the irradiation of the processing lights EL. For example, the processing system SYS may remove the coat SF of paint by melting the coat SF of paint by the irradiation of the processing lights EL and removing the melted coat SF of paint. For example, the processing system SYS may remove the coat SF of paint by making the coat SF of paint brittle by the irradiation of the processing lights EL and peeling the brittle coat SF of paint. In the above described description, the processing system SYS processes the coat SF of paint formed on the surface of the processing target object S by the ablation. However, the processing system SYS may remove a part of the coat SF of paint formed on the surface of the processing target object S by a heat processing.

In the above described description, the processing system SYS forms the concave part C (alternatively, the concave structure CP1 or any structure by the concave structure CP1 such as the riblet structure) by removing the coat SF of paint. Namely, the processing system SYS processes the coat SF of paint to partially reduce the thickness of the coat SF of paint. However, the processing system SYS may process the coat SF of paint to partially increase the thickness of the coat SF of paint in addition to or instead of partially reducing the thickness of the coat SF of paint. Namely, the processing system SYS may form a convex part (alternatively, the convex structure CP2 or any structure by the convex structure CP2) by adding the coat SF of paint in addition to or instead of forming the concave part C by removing the coat SF of paint. For example, the processing system SYS may irradiate a first part of the coat SF of paint with the processing light EL to remove the coat SF of paint at the first part and then may fix the removed coat SF of paint at a second part of the coat SF of paint to increase the thickness of the coat SF of paint at the second part (namely, to form the convex part at the second part).

In the above described description, the processing system SYS processes the coat SF of paint formed on the surface of the processing target object S. However, the processing system SYS may process any coat that is other than the coat SF of paint and that is formed on the surface of the processing target object S. Alternatively, the processing system SYS may process a structural object in which a plurality of layers are laminated. Specifically, the processing system SYS may process at least one layer (typically, at least one layer including a layer that is closest to the surface) of the plurality of layers that constitute the structural object. The processing system SYS may process at least one layer of the plurality of layers that constitute the structural object to form a structure of this layer. In this case, at least one layer that is processed corresponds to the above described coat SF of paint and the other layer other than the at least one layer corresponds to the processing target object S. Alternatively, the processing system SYS may process the processing target object S itself. Namely, the processing system SYS may process the processing target object S on the surface of which the coat SF of paint or any coat is not formed.

In the above described description, the processing system SYS forms the riblet structure for reducing the resistance of the surface of the processing target object S to the fluid. However, the processing system SYS may form, on the processing target object S, another structure that is different from the riblet structure for reducing the resistance of the surface to the fluid. For example, the processing system SYS may form, on the processing target object S, a riblet structure for reducing noise generated when the fluid and the surface of the processing target object S relatively move. For example, the processing system SYS may form, on the processing target object S, a structure that generates swirl relative to a flow of the fluid on the surface of the processing target object S. For example, the processing system SYS may form, on the processing target object S, a structure for adding hydrophobic property to the surface of the processing target object S.

The present invention is allowed to be changed, if desired, without departing from the scope of the present invention as defined in the appended claims.

### Description of Reference Codes

- 1, 1c: processing apparatus
- 11: light irradiation apparatus
- 111: light source system
- 112: optical system
- 1122: Galvano mirror
- 12: driving system
- 18c: position measurement apparatus
- 2: control apparatus
- 31: extraneous substance measurement apparatus
- 311: imaging apparatus
- 312: light reception apparatus
- 32: extraneous substance removal apparatus
- 33b: defect measurement apparatus
- 34b: defect repair apparatus
- 4: display
- C: concave part
- CP1: concave structure
- CP2: convex structure
- EA: target irradiation area
- EL: processing light
- S: processing target object
- SF: coat of paint
- SYS: processing system
- SA: processing shot area
- AMD, DMA: measurement target area

## Claims

1. An inspection system (SYSb) comprising:
a light reception apparatus (33b) configured optically to receive light from a surface of a movable body (S), at least a part of which is adapted to travel in a fluid, on the surface of which a structure that is a riblet structure for changing an aerodynamic characteristic is formed;
an evaluation apparatus (2) configured to evaluate a feature of the structure that is formed on the surface of the movable body by using design information relating to the feature of the structure and output information from the light reception apparatus (33b);
the inspection system being **characterised by**:
a first driving system (12) configured to move the light reception apparatus relative to the movable body; and
a second driving system (15) configured to move the light reception apparatus together with the first driving system (12) relative to the movable body (S).

2. The inspection system (SYSb) according to claim 1, wherein
the feature of the structure includes at least one of a shape, a size and an arrangement of the structure.

3. The inspection system (SYSb) according to claim 2, wherein
the design information includes at least one of a shape, a size and an arrangement of the structure.

4. The inspection system (SYSb) according to any one of claims 1 to 3, wherein
the evaluation apparatus (2) is configured to compare the design information with the output information.

5. The inspection system (SYSb) according to any one of claims 1 to 4, wherein
the light reception apparatus (33b) includes an imaging apparatus (311) configured to image the surface.

6. The inspection system (SYSb) according to claim 5, wherein
the evaluation apparatus (2) is configured to evaluate the feature of the structure by using information relating to a feature of the surface of the movable body (S) and an imaged result by the imaging apparatus (311).

7. The inspection system (SYSb) according to any one of claims 1 to 6, wherein
the light reception apparatus (33b) is configured optically to receive, as inspection light, at least one of scattered light that is scattered by the surface and diffracted light that is diffracted by the surface.

8. The inspection system (SYSb) according to any one of claims 1 to 7, wherein
the inspection system further comprises a display apparatus (4) configured to display information relating to an output from the evaluation apparatus (2).

9. The inspection system (SYSb) according to any one of claims 1 to 8, wherein
the structure on the surface of the movable body (S) includes a structure (CP2) that extends in a first direction along the surface of the movable body and that is periodical in a second direction that intersects with the first direction on the surface of the movable body.

10. The inspection system (SYSb) according to any one of claims 1 to 9, wherein
a relative position between the light reception apparatus (33b) and the movable body (S) is changeable by means of at least one of the first and second driving systems (12, 15) moving the light reception apparatus (33b).

11. The inspection system (SYSb) according to any one of claims 1 to 10, wherein
the inspection system comprises a support apparatus (14) that supports the light reception apparatus (33b),
the light reception apparatus is configured optically to receive the light from the surface of the movable body (S) in a state where at least a part of the support apparatus contacts with the movable body.

12. The inspection system (SYSb) according to any one of claims 1 to 10, wherein
the light reception apparatus (2) is configured optically to receive the light from the surface of the movable body (S) in a state where the light reception apparatus does not contact with the movable body.

13. A processing system (SYSb) that processes a movable body (S) by a processing light (EL), **characterised in that** the processing system comprises the inspection system according to any one of claims 1 to 12.

14. The processing system (SYSb) according to claim 13, wherein
the processing system (SYSb) comprises a light irradiation apparatus (11) configured to irradiate a partial area on the surface of the movable body (S) with the processing light (EL) to form the structure at the area on the surface,
the inspection system is configured to evaluate the feature of the structure formed by the processing system.

15. The processing system (SYSb) according to claim 14, wherein
when a range on the surface of the movable body (S) that is allowed to be irradiated with the processing light (EL) in a situation where a positional relationship between the light irradiation apparatus (11) and the movable body is fixed is referred to as a processing shot area (SA), a measurement range of the inspection system is larger than the processing shot area.

16. The processing system (SYSb) according to claim 14 or 15, wherein
the inspection apparatus is configured to inspect a defect of the structure,
the processing system is configured to repair the defect of the structure.

17. The processing system (SYSb) according to any one of claims 1 to 16, wherein
the structure is a solid structure,
the feature of the structure includes at least one of a height, a depth and a pitch.

18. An inspection method **characterised in that** the inspection method includes:
optically receiving light from a surface of a movable body (S) , at least a part of which is adapted to travel in a fluid, on the surface of which a structure that is a riblet structure for changing an aerodynamic characteristic is formed;
evaluating a feature of the structure that is formed on the surface of the movable body by using design information relating to the feature of the structure and output information from the light reception apparatus;
moving the light reception apparatus relative to the movable body by using a first movement apparatus (12); and
moving the light reception apparatus together with the first movement apparatus relative to the movable body by using a second movement apparatus (15).

19. A processing method of processing a movable body (S) by a processing light (EL), **characterised in that** the processing method includes inspecting at least a part of a processed part of the movable body by using the inspection method according to claim 18.

## Patentansprüche

1. Inspektionssystem (SYSb), aufweisend:
eine Lichtempfangsvorrichtung (33b), die dazu optisch ausgestaltet ist, Licht von einer Oberfläche eines bewegbaren Körpers (S) zu empfangen, von dem zumindest ein Teil angepasst ist, um sich in Fluid fortzubewegen, und auf dessen Oberfläche eine Struktur ausgebildet ist, die eine Riblet-Struktur zum Ändern einer aerodynamischen Eigenschaft ist;
eine Auswertevorrichtung (2), die dazu ausgestaltet ist, ein Merkmal der Struktur, die an der Oberfläche des bewegbaren Körpers ausgebildet ist, mittels Designinformation bezüglich des Merkmals der Struktur und Ausgabeinformation von der Lichtempfangsvorrichtung (33b) auszuwerten;
wobei das Inspektionssystem **gekennzeichnet ist durch**:
ein erstes Antriebssystem (12), das dazu ausgestaltet ist, die Lichtempfangsvorrichtung relativ zu dem bewegbaren Körper zu bewegen; und
ein zweites Antriebssystem (15), das dazu ausgestaltet ist, die Lichtempfangsvorrichtung zusammen mit dem ersten Antriebssystem (12) zu bewegen.

2. Inspektionssystem (SYSb) nach Anspruch 1, wobei
das Merkmal der Struktur zumindest eins einer Form, einer Größe und einer Anordnung der Struktur aufweist.

3. Inspektionssystem (SYSb) nach Anspruch 2, wobei
die Designinformation zumindest eins von einer Form, einer Größe und einer Anordnung der Struktur aufweist.

4. Inspektionssystem (SYSb) nach einem der Ansprüche 1 bis 3, wobei
die Auswertevorrichtung (2) dazu ausgestaltet ist, die Designinformation mit der Ausgabeinformation zu vergleichen.

5. Inspektionssystem (SYSb) nach einem der Ansprüche 1 bis 4, wobei
die Lichtempfangsvorrichtung (33b) eine Abbildungsvorrichtung (311) aufweist, die dazu ausgestaltet ist, die Oberfläche abzubilden.

6. Inspektionssystem (SYSb) nach Anspruch 5, wobei
die Auswertevorrichtung (2) dazu ausgestaltet ist, das Merkmal der Struktur mittels Information bezüglich eines Merkmals der Oberfläche des bewegbaren Körpers (S) und eines durch die Abbildungsvorrichtung (311) abgebildeten Ergebnisses auszuwerten.

7. Inspektionssystem (SYSb) nach einem der Ansprüche 1 bis 6, wobei
die Lichtempfangsvorrichtung (33b) dazu optisch ausgestaltet ist, als Inspektionslicht zumindest eins von gestreutem Licht, das durch die Oberfläche gestreut wird, und gebeugtem Licht, das durch die Oberfläche gebeugt wird, zu empfangen.

8. Inspektionssystem (SYSb) nach einem der Ansprüche 1 bis 7, wobei
das Inspektionssystem ferner eine Anzeigevorrichtung (4) aufweist, die dazu ausgestaltet ist, Information bezüglich einer Ausgabe von der Auswertevorrichtung (2) anzuzeigen.

9. Inspektionssystem (SYSb) nach einem der Ansprüche 1 bis 8, wobei
die Struktur an der Oberfläche des bewegbaren Körpers (S) eine Struktur (CP2) aufweist, die sich in einer ersten Richtung entlang der Oberfläche des bewegbaren Körpers erstreckt und die in einer zweiten Richtung periodisch ist, die die erste Richtung an der Oberfläche des bewegbaren Körpers schneidet.

10. Inspektionssystem (SYSb) nach einem der Ansprüche 1 bis 9, wobei
eine relative Position zwischen der Lichtempfangsvorrichtung (33b) und dem bewegbaren Körper (S) mittels zumindest einem des ersten und zweiten Antriebssystems (12, 15), die die Lichtempfangsvorrichtung (33b) bewegen, änderbar ist,

11. Inspektionssystem (SYSb) nach einem der Ansprüche 1 bis 10, wobei
das Inspektionssystem eine Tragevorrichtung (14) aufweist, die die Lichtempfangsvorrichtung (33b) trägt,
wobei die Lichtempfangsvorrichtung dazu optisch ausgestaltet ist, Licht von der Oberfläche des bewegbaren Körpers (S) in einem Zustand zu empfangen, in dem zumindest ein Teil der Tragevorrichtung den bewegbaren Körper berührt.

12. Inspektionssystem (SYSb) nach einem der Ansprüche 1 bis 10, wobei
die Lichtempfangsvorrichtung (2) dazu optisch ausgestaltet ist, Licht von der Oberfläche des bewegbaren Körpers (S) in einem Zustand zu empfangen, in dem die Lichtempfangsvorrichtung den bewegbaren Körper nicht berührt.

13. Verarbeitungssystem (SYSb), das einen bewegbaren Körper (S) mittels eines Verarbeitungslichts (EL) verarbeitet, **dadurch gekennzeichnet, dass**
das Verarbeitungssystem das Inspektionssystem nach einem der Ansprüche 1 bis 12 aufweist.

14. Verarbeitungssystem (SYSb) nach Anspruch 13, wobei
das Verarbeitungssystem (SYSb) eine Lichtbestrahlungsvorrichtung (11) aufweist, die dazu ausgestaltet ist, einen Teilbereich an der Oberfläche des bewegbaren Körpers (S) mit dem Verarbeitungslicht (EL) zu bestrahlen, um die Struktur an dem Bereich an der Oberfläche auszubilden,
wobei das Inspektionssystem dazu ausgestaltet ist, das Merkmal der Struktur, das durch das Verarbeitungssystem ausgebildet ist, auszuwerten.

15. Verarbeitungssystem (SYSb) nach Anspruch 14, wobei
wenn ein Bereich an der Oberfläche des bewegbaren Körpers (S), der mit dem Verarbeitungslicht (EL) bestrahlt werden kann, in einer Situation, in der eine Positionsbeziehung zwischen der Lichtbestrahlungsvorrichtung (11) und dem bewegbaren Körper feststeht, als ein Verarbeitungsschussbereich (SA) bezeichnet wird, ein Messbereich des Inspektionssystems größer ist als der Verarbeitungsschussbereich.

16. Verarbeitungssystem (SYSb) nach Anspruch 14 oder 15, wobei
die Inspektionsvorrichtung dazu ausgestaltet ist, einen Defekt der Struktur zu inspizieren,
das Verarbeitungssystem dazu ausgestaltet ist, den Defekt der Struktur zu reparieren.

17. Verarbeitungssystem (SYSb) nach einem der Ansprüche 1 bis 16, wobei
die Struktur eine feste Struktur ist,
das Merkmal zumindest eins von einer Höhe, einer Tiefe und eines Intervalls aufweist.

18. Inspektionsverfahren, **dadurch gekennzeichnet, dass** das Inspektionsverfahren umfasst:
optisches Empfangen von Licht von einer Oberfläche eines bewegbaren Körpers (S), von dem zumindest ein Teil dazu angepasst ist, sich in einem Fluid fortzubewegen und an dessen Oberfläche eine Struktur ausgebildet ist, die eine Riblet-Struktur zum Ändern einer aerodynamischen Eigenschaft ist;
Auswerten eines Merkmals der Struktur, die an der Oberfläche des bewegbaren Körpers ausgebildet ist, mittels Designinformation bezüglich des Merkmals der Struktur und Ausgabeinformation von der Lichtempfangsvorrichtung;
Bewegen der Lichtempfangsvorrichtung relativ zu dem bewegbaren Körper mittels einer ersten Bewegungsvorrichtung (12) und
Bewegen der Lichtempfangsvorrichtung zusammen mit der ersten Bewegungsvorrichtung relativ zu dem bewegbaren Körper mittels einer zweiten Bewegungsvorrichtung (15).

19. Verarbeitungsverfahren zum Verarbeiten eines bewegbaren Körpers (S) durch ein Verarbeitungslicht (EL), **dadurch gekennzeichnet, dass**
das Verarbeitungsverfahren das Inspizieren zumindest eines Teils eines verarbeiteten Teils des bewegbaren Körpers mittels des Inspektionsverfahrens nach Anspruch 18 umfasst.

## Revendications

1. Système d'inspection (SYSb) comprenant :
un appareil (33b) de réception de lumière configuré optiquement pour recevoir de la lumière provenant d'une surface d'un corps mobile (S), dont au moins une partie est adaptée pour se déplacer dans un fluide, sur la surface duquel est formée une structure qui est une structure légèrement nervurée destinée à modifier une caractéristique aérodynamique ;
un appareil d'évaluation (2) configuré pour évaluer une propriété de la structure qui est formée sur la surface du corps mobile en utilisant des informations de conception se rapportant à la propriété de la structure et des informations de sortie provenant de l'appareil (33b) de réception de lumière ;
le système d'inspection étant **caractérisé par** :
un premier système d'entraînement (12) configuré pour déplacer l'appareil de réception de lumière par rapport au corps mobile ; et
un second système d'entraînement (15) configuré pour déplacer l'appareil de réception de lumière avec le premier système d'entraînement (12) par rapport au corps mobile (S).

2. Système d'inspection (SYSb) selon la revendication 1, dans lequel
la propriété de la structure inclut au moins un élément parmi une forme, une taille et un agencement de la structure.

3. Système d'inspection (SYSb) selon la revendication 2, dans lequel
les informations de conception incluent au moins un élément parmi une forme, une taille et un agencement de la structure.

4. Système d'inspection (SYSb) selon l'une quelconque des revendications 1 à 3, dans lequel
l'appareil d'évaluation (2) est configuré pour comparer les informations de conception aux informations de sortie.

5. Système d'inspection (SYSb) selon l'une quelconque des revendications 1 à 4, dans lequel
l'appareil (33b) de réception de lumière inclut un appareil d'imagerie (311) configuré pour imager la surface.

6. Système d'inspection (SYSb) selon la revendication 5, dans lequel
l'appareil d'évaluation (2) est configuré pour évaluer la propriété de la structure en utilisant des informations se rapportant à une propriété de la surface du corps mobile (S) et un résultat imagé par l'appareil d'imagerie.

7. Système d'inspection (SYSb) selon l'une quelconque des revendications 1 à 6, dans lequel
l'appareil (33b) de réception de lumière est configuré optiquement pour recevoir, en tant que lumière d'inspection, au moins l'une d'une lumière dispersée qui est dispersée par la surface et d'une lumière diffractée qui est diffractée par la surface.

8. Système d'inspection (SYSb) selon l'une quelconque des revendications 1 à 7, dans lequel
le système d'inspection comprend en outre un appareil d'affichage (4) configuré pour afficher des informations se rapportant à une sortie provenant de l'appareil d'évaluation (2).

9. Système d'inspection (SYSb) selon l'une quelconque des revendications 1 à 8, dans lequel
la structure sur la surface du corps mobile (S) inclut une structure (CP2) qui s'étend dans une première direction le long de la surface du corps mobile et qui est périodique dans une seconde direction qui coupe la première direction sur la surface du corps mobile.

10. Système d'inspection (SYSb) selon l'une quelconque des revendications 1 à 9, dans lequel
une position relative entre l'appareil (33b) de réception de lumière et le corps mobile (S) peut être modifiée au moyen d'au moins un des premier et second systèmes d'entraînement (12, 15) déplaçant l'appareil (33b) de réception de lumière.

11. Système d'inspection (SYSb) selon l'une quelconque des revendications 1 à 10, dans lequel
le système d'inspection comprend un appareil de support (14) qui supporte l'appareil (33b) de réception de lumière,
l'appareil de réception de lumière est configuré optiquement pour recevoir la lumière provenant de la surface du corps mobile (S) dans un état où au moins une partie de l'appareil de support est en contact avec le corps mobile.

12. Système d'inspection (SYSb) selon l'une quelconque des revendications 1 à 10, dans lequel
l'appareil (2) de réception de lumière est configuré optiquement pour recevoir la lumière provenant de la surface du corps mobile (S) dans un état où l'appareil de réception de lumière n'est pas en contact avec le corps mobile.

13. Système de traitement (SYSb) qui traite un corps mobile (S) par une lumière de traitement (EL), **caractérisé en ce que**
le système de traitement comprend le système d'inspection selon l'une quelconque des revendications 1 à 12.

14. Système de traitement (SYS) selon la revendication 13, dans lequel
le système de traitement (SYSb) comprend un appareil (11) d'irradiation de lumière configuré pour irradier une zone partielle sur la surface du corps mobile (S) avec la lumière de traitement (EL) pour former la structure au niveau de la zone sur la surface,
le système d'inspection est configuré pour évaluer la propriété de la structure formée par le système de traitement.

15. Système de traitement (SYS) selon la revendication 14, dans lequel
lorsqu'une plage sur la surface du corps mobile (S) qui est autorisée à être irradiée avec la lumière de traitement (EL) dans une situation où une relation positionnelle entre l'appareil (11) d'irradiation de lumière et le corps mobile est fixe est appelée zone d'impact de traitement (SA), une plage de mesure du système d'inspection est plus grande que la zone d'impact de traitement.

16. Système de traitement (SYS) selon la revendication 14 ou la revendication 15, dans lequel
l'appareil d'inspection est configuré pour inspecter un défaut de la structure,
le système de traitement est configuré pour réparer le défaut de la structure.

17. Système de traitement (SYSb) selon l'une quelconque des revendications 1 à 16, dans lequel
la structure est une structure solide,
la propriété de la structure inclut au moins un élément parmi une hauteur, une profondeur et un pas.

18. Procédé d'inspection **caractérisé en ce que** le procédé d'inspection inclut :
une réception optique de lumière provenant d'une surface d'un corps mobile (S), dont au moins une partie est adaptée pour se déplacer dans un fluide, sur la surface duquel est formée une structure qui est une structure légèrement nervurée destinée à modifier une caractéristique aérodynamique ;
une évaluation d'une propriété de la structure qui est formée sur la surface du corps mobile en utilisant des informations de conception se rapportant à la propriété de la structure et des informations de sortie provenant de l'appareil de réception de lumière ;
un déplacement de l'appareil de réception de lumière par rapport au corps mobile en utilisant un premier appareil de déplacement (12) ; et
un déplacement de l'appareil de réception de lumière avec le premier appareil de déplacement par rapport au corps mobile en utilisant un second appareil de déplacement (15).

19. Procédé de traitement consistant à traiter un corps mobile (S) par une lumière de traitement (EL), **caractérisé en ce que**
le procédé de traitement inclut une inspection d'au moins une partie d'une partie traitée du corps mobile en utilisant le procédé d'inspection selon la revendication 18.
